# EUROPEAN PATENT SPECIFICATION

(11) **EP 3 913 859 B1**
(45) Date of publication and mention of the grant of the patent: **25.06.2025**
(21) Application number: 20765852.7
(22) Date of filing: 24.02.2020
(51) Int. Cl.: H04L 41/342, H04L 41/0895, H04L 41/0897, H04L 41/04, H04L 41/0803, H04L 41/40, H04L 41/084, H04L 43/0817

(54) **VNF LIFE CYCLE MANAGEMENT METHOD AND APPARATUS**
VERFAHREN UND VORRICHTUNG ZUR VERWALTUNG DES VNF-LEBENSZYKLUS
PROCÉDÉ ET APPAREIL DE GESTION DE CYCLE DE VIE DE FONCTION RÉSEAU VIRTUALISÉE (VNF)

(30) Priority: 01.03.2019 CN 201910157681
(43) Date of publication of application: 24.11.2021
(73) Proprietor: Huawei Technologies Co., Ltd., Shenzhen, Guangdong 518129 (CN)
(72) Inventor: GENG, Yansong, Shenzhen, Guangdong 518129 (CN); CHEN, Bo, Shenzhen, Guangdong 518129 (CN); XIA, Haitao, Shenzhen, Guangdong 518129 (CN)
(74) Representative: Pfenning, Meinig & Partner mbB
(86) International application number: PCT/CN2020/076415
(87) International publication number: WO 2020/177564

(56) References cited:
- EP-A1- 3 462 671
- WO-A1-2016/197346
- WO-A1-2017/008839
- WO-A1-2018/000197
- CN-A- 105 284 094
- CN-A- 105 847 237
- CN-A- 105 955 824
- CN-A- 106 375 101
- KR-A- 20180 037 688
- KR-A- 20180 058 458

## Description

### TECHNICAL FIELD

This application relates to the field of network technologies, and in particular, to a VNF lifecycle management method and an apparatus.

### BACKGROUND

Network functions virtualization (English full name: network function virtualization, NFV for short) is a technology that virtualizes all network elements in a telecom network into software by using a virtualization technology, and deploys all the software on general-purpose hardware. With the NFV technology, functions of the network elements no longer depend on dedicated hardware, thereby implementing decoupling between software and hardware, and reducing hardware costs. In addition, resources can be flexibly and fully shared, and quick service development and automatic deployment can be implemented.

An NFV system architecture usually includes a virtualized network function (English full name: virtualized network function, VNF for short), a virtualized network function manager (English full name: virtualized network function manager, VNFM for short), a network function virtualization infrastructure (English full name: network function virtualization infrastructure, NFVI for short) layer, and a virtualized infrastructure manager (English full name: virtual infrastructure manager, VIM for short). The VNF is a software implementation of a network function, and includes at least one virtualized network function component (English full name: virtualized network function component, VNFC for short). The VNFM is configured to manage a lifecycle of the VNF, and can control the VNF to enter all stages of the lifecycle, including but not limited to an instantiation stage, a scale-out stage, a scale-in stage, an update stage, a termination stage, and the like. The NFVI is used to establish a virtualization environment and provide virtualized resources for the VNF. The VIM is configured to control and manage interaction between the VNF and the NFVI.

In related technologies, the VNF is usually carried in a virtual machine cluster, and the VNFC is usually carried by a virtual machine. The VNFM may manage the lifecycle of the VNF by communicating with the VNF. For example, at the scale-out stage, when the VNFM needs to scale out the VNF, the VNFM sends a virtual machine creation instruction to the VIM; and when receiving the virtual machine creation instruction, the VIM creates a virtual machine instance of a virtual machine in the virtual machine cluster. After the virtual machine instance is created, a VNFC instance carried by the virtual machine instance is started accordingly. Therefore, a quantity of VNFC instances of the VNF increases, and the VNF is scaled out accordingly as the virtual machine cluster is scaled out. After the VNF is scaled out, the VNFM notifies the VNF that the VNF is scaled out, so that the VNF starts to execute a series of processing procedures at the scale-out stage.

The VNF can start to execute a processing procedure at a corresponding stage only when the VNF has entered the corresponding stage of the lifecycle. As a result, processing efficiency is relatively low.

KR 2018 0037688 A discloses that an apparatus for managing a network function virtualization comprises: a virtual network function management (VNFM) unit for requesting an operation (scale-out) of adding a new virtual network function component (VNFC) module to a virtual network function (VNF) module including a VNFC module or an operation (scale-in) of deleting part of the VNFC module if there are a plurality of VNFC modules.

WO 2017/008839 A1 discloses that a method comprises requesting permission from the identified VNFM to perform the planned resource allocation adjustment (106), and implementing the planned resource allocation adjustment if the requested permission is received.

WO 2018/000197 A1 discloses that method comprises: a virtual network function management (VNFM) device sending a preprocessing request message to an element management (EM) device, wherein the preprocessing request message is used to request the EM device to perform resource scaling preprocessing on a virtual network function (VNF) instance, and the resource scaling preprocessing comprises performing migration processing on a service carried by a virtualized container that needs to undergo resource scaling preprocessing.

### SUMMARY

The present invention is set out in the appended set of claims. Embodiments of this application provide a VNF lifecycle management method and an apparatus, to resolve a technical problem that processing efficiency is relatively low because processing can be started only when the VNF has entered a new stage of a lifecycle in related technologies. The technical solutions are as follows:

According to a first aspect, a VNF lifecycle management method is provided. The method includes:
generating a pre-notification, where the pre-notification is used to notify that a VNF is going to enter a target stage of a lifecycle; sending the pre-notification to the VNF; receiving a pre-notification response from the VNF, where the pre-notification response is a response message corresponding to the pre-notification; and controlling the VNF to enter the target stage of the lifecycle.

According to the method provided in this embodiment, the procedure of interaction between the pre-notification and the pre-notification response is introduced to the lifecycle management procedure of the VNF. The pre-notification is sent to the VNF, and the VNF is controlled to enter the target stage of the lifecycle after the pre-notification response from the VNF is received. The VNF may be reminded in advance that the VNF is going to enter the target stage of the lifecycle, so that the VNF can execute a pre-processing procedure in advance based on the pre-notification, thereby improving service processing efficiency. In addition, this avoids a call loss caused by temporarily performing smooth service migration after the VNF enters the target stage of the lifecycle, thereby implementing that services are not affected.

The generating a pre-notification includes at least one of the following: generating a scale-out pre-notification, where the scale-out pre-notification is used to notify that the VNF is going to enter a scale-out stage; generating a scale-in pre-notification, where the scale-in pre-notification is used to notify that the VNF is going to enter a scale-in stage; generating a virtualized network function component VNFC onboarding pre-notification, where the VNFC onboarding pre-notification is used to notify that the VNF is going to enter a VNFC onboarding out pre-notification, where the scale-out pre-notification is used to notify that the VNF is going to enter a scale-out stage; generating a scale-in pre-notification, where the scale-in pre-notification is used to notify that the VNF is going to enter a scale-in stage; generating a virtualized network function component VNFC onboarding pre-notification, where the VNFC onboarding pre-notification is used to notify that the VNF is going to enter a VNFC onboarding stage; and generating a VNFC termination pre-notification, where the VNFC termination pre-notification is used to notify that the VNF is going to enter a VNFC termination stage.

Before the VNF is scaled out, the VNFM may remind, based on the scale-out pre-notification, the VNF in advance that the VNF is to be scaled out, so that the VNF can predict, based on the scale-out pre-notification after receiving the scale-out pre-notification, that the VNF is to be scaled out, and execute a scale-out pre-processing procedure in advance, to make preparations for scale-out. Therefore, after the VNF is scaled out, a service loss and service flapping can be avoided because preparations are made in advance, thereby implementing smooth service migration. In addition, service processing efficiency can be improved because the pre-processing procedure is executed in advance.

Before the VNF is scaled in, the VNFM may remind, based on the scale-in pre-notification, the VNF in advance that the VNF is to be scaled in, so that the VNF can predict, based on the scale-in pre-notification after receiving the scale-in pre-notification, that the VNF is to be scaled in, and execute a pre-processing procedure at the scale-in stage in advance, to make preparations for scale-in. Therefore, after the VNF is scaled in, a service loss and service flapping can be avoided because preparations are made in advance, thereby implementing smooth service migration. In addition, service processing efficiency can be improved because the pre-processing procedure is executed in advance.

Before a VNFC is onboarded, the VNFM may remind, based on the VNFC onboarding pre-notification, the VNF in advance that the VNFC is to be onboarded, so that the VNF can predict, based on the VNFC onboarding pre-notification after receiving the VNFC onboarding pre-notification, that the VNFC is to be onboarded, and execute a VNFC onboarding pre-processing procedure in advance, to make preparations to bring the VNFC onboarded. Therefore, after the VNFC is onboarded, a service loss and service flapping can be avoided because preparations are made in advance, thereby implementing smooth service migration. In addition, service processing efficiency can be improved because the pre-processing procedure is executed in advance.

Before a VNFC is terminated, the VNFM may remind, based on the VNFC termination pre-notification, the VNF in advance that the VNFC is to be terminated, so that the VNF can predict, based on the VNFC termination pre-notification after receiving the VNFC termination pre-notification, that the VNFC is to be terminated, and execute a VNFC termination pre-processing procedure in advance, to make preparations to bring the VNFC terminated. VNFC, where the pre-notification is used to notify the VNF that the first VNFC is going to enter the target stage of the lifecycle, and the first VNFC is one or more VNFCs included in the VNF.

In this implementation, before the first VNFC enters the target stage of the lifecycle, the VNFM may remind, based on the pre-notification, the VNF in advance that one or more specific VNFCs (namely, the first VNFC) are going to enter the target stage of the lifecycle, so that the VNF can predict, based on the pre-notification after receiving the pre-notification, that the one or more specific VNFCs (namely, the first VNFC) are going to enter the target stage of the lifecycle, and execute the pre-processing procedure for the one or more specific VNFCs (namely, the first VNFC), thereby making preparations in advance and implementing smooth service migration.

The generating a pre-notification includes: generating the pre-notification based on a first application instance, where the scale-in pre-notification is used to notify the VNF that the first application instance is to be deleted.

In this implementation, before the first application instance enters the target stage of the lifecycle, the VNFM may remind, based on the pre-notification, the VNF in advance that one or more specific application instances (namely, the first application instance) of one or more specific VNFCs are going to enter the target stage of the lifecycle, so that the VNF can predict, based on the pre-notification after receiving the pre-notification, that the one or more specific application instances (namely, the first application instance) of the one or more specific VNFCs are to be deleted, and execute the pre-processing procedure for the one or more specific application instances (namely, the first application instance) of the one or more specific VNFCs, thereby making preparations in advance and implementing smooth service migration.

The generating a pre-notification includes: generating the pre-notification based on a first quantity, where the first quantity is a positive integer, and the pre-notification is used to notify the VNF that application instances of the first quantity are to be started.

In this implementation, before the VNF enters the target stage of the lifecycle, the VNFM reminds, based on the pre-notification, the VNF in advance that application instances of a specific quantity are to be started, so that the VNF can predict, based on the pre-notification after receiving the pre-notification, that the application instances of the specific quantity are to be started, and execute a pre-processing procedure for the specific quantity (namely, the first quantity) of the to-be-started application instances, thereby making preparations in advance and implementing smooth service migration.

The generating a pre-notification includes: generating the pre-notification based on a second quantity, where the second quantity is a positive integer, and the pre-notification is used to notify the VNF that application instances of the second quantity are to be deleted.

In this implementation, before the VNF enters the target stage of the lifecycle, the VNFM may remind, based on the pre-notification, the VNF in advance that application instances of a specific quantity are to be deleted, so that the VNF can predict, based on the pre-notification after receiving the pre-notification, that the application instances of the specific quantity are to be deleted, and execute a pre-processing procedure for the specific quantity (namely, the second quantity) of the to-be-deleted application instances, thereby making preparations in advance and implementing smooth service migration.

The generating a pre-notification includes: generating the pre-notification based on a first time point, where the first time point is a time point at which the VNF is to be controlled to enter the target stage of the lifecycle, and the pre-notification is used to notify that the VNF is going to enter the target stage of the lifecycle at the first time point.

In this implementation, before the VNF enters the target stage of the lifecycle, the VNFM may remind, based on the pre-notification, the VNF in advance of a specific time point at which the VNF is to be controlled to enter the target stage of the lifecycle, so that the VNF can predict, based on the pre-notification after receiving the pre-notification, that the VNF is going to enter the target stage of the lifecycle at the specific time point, and execute a pre-processing procedure for the specific time point (namely, the first time point) at which the VNF is going to enter the target stage of the lifecycle, thereby making preparations in advance and implementing smooth service migration.

The pre-notification response indicates that the VNF allows the first VNFC to enter the target stage of the lifecycle.

In this implementation, the VNF may feed back, to the VNFM based on the pre-notification response, that the first VNFC is allowed to enter the target stage of the lifecycle, so that the VNFM learns that the first VNFC can be controlled to enter the target stage of the lifecycle.

Optionally, the pre-notification response indicates that the VNF allows to delete a first application instance.

In this implementation, the VNF may feed back, to the VNFM based on the pre-notification response, that the first application instance is allowed to be deleted, so that the VNFM learns that the first application instance can be deleted.

Optionally, the pre-notification response indicates that the VNF allows to start the application instances of the first quantity.

In this implementation, the VNF may feed back, to the VNFM based on the pre-notification response, that the application instances of the first quantity are allowed to be started, so that the VNFM learns that the application instances of the first quantity can be started. of the first quantity.

In this implementation, the VNF may feed back, to the VNFM based on the pre-notification response, that the application instances of the first quantity are allowed to be started, so that the VNFM learns that the application instances of the first quantity can be started.

Optionally, the pre-notification response indicates that the VNF allows to delete the application instances of the second quantity.

In this implementation, the VNF may feed back, to the VNFM based on the pre-notification response, that the application instances of the second quantity are allowed to be deleted, so that the VNFM learns that the application instances of the second quantity can be deleted.

Optionally, the pre-notification response indicates that the VNF is allowed to enter the target stage of the lifecycle at the first time point.

In this implementation, the VNF may feed back, to the VNFM based on the pre-notification response, that the VNF is allowed to enter the target stage of the lifecycle at the first time point, so that the VNFM learns that the VNF can be controlled, at the first time point, to enter the target stage of the lifecycle.

Optionally, the pre-notification response is used to indicate to control a third VNFC to enter the target stage of the lifecycle, and the third VNFC is one or more VNFCs included in the VNF.

In this implementation, the VNF itself may specify, based on the pre-notification response, one or more specific VNFCs (namely, the third VNFC) that are going to enter the target stage of the lifecycle. This improves flexibility, avoids a call loss caused by controlling, by the VNFM, an inappropriate VNFC to enter the target stage of the lifecycle, and ensures smooth service migration.

Optionally, the pre-notification response is used to indicate to delete a second application instance, the second application instance is one or more application instances included in a fourth VNFC, and the fourth VNFC is one or more VNFCs included in the VNF.

In this implementation, the VNF itself may specify, based on the pre-notification response, one or more specific to-be-deleted application instances (namely, the second application instance). This improves flexibility, and avoids a call loss and performance compromise caused by deleting an inappropriate application instance by the VNFM.

Optionally, the pre-notification response is used to indicate to start application instances of a third quantity, and the third quantity is a positive integer.

In this implementation, the VNF itself may determine a quantity of to-be-started application instances. This improves flexibility of lifecycle management for the VNF, and avoids a waste of resources caused when application instances of an excessively large quantity are started. In addition, this can also avoid the following case: Because application instances of an excessively small quantity are started, a lifecycle management procedure needs to be re-initiated to start application instances, resulting in low efficiency in starting application instances.

Optionally, the pre-notification response is used to indicate to delete application instances of a fourth quantity, and the fourth quantity is a positive integer.

In this implementation, the VNF itself may determine a quantity of to-be-deleted application instances based on the pre-notification response. This improves flexibility, and avoids a call loss and performance exception caused by deleting application instances of an excessively large quantity. In addition, this can also avoid the following case: Because application instances of an excessively small quantity are deleted, a lifecycle management procedure needs to be re-initiated to delete application instances, resulting in low efficiency in deleting application instances.

Optionally, the pre-notification response is used to indicate to control, at a second time point, the VNF to enter the target stage of the lifecycle.

In this implementation, the VNF itself may specify, based on the pre-notification response, a specific time point at which the VNF enters the target stage of the lifecycle, thereby improving flexibility.

Optionally, the pre-notification response indicates that the VNF rejects the first VNFC to enter the target stage of the lifecycle.

In this implementation, the VNF may feed back, to the VNFM based on the pre-notification response, that the first VNFC is rejected to enter the target stage of the lifecycle, so that the VNFM learns that the first VNFC cannot be controlled to enter the target stage of the lifecycle, thereby avoiding a service call loss caused by controlling, by the VNFM, the first VNFC to enter the target stage of the lifecycle.

Optionally, the pre-notification response indicates a reason why the VNF rejects the first VNFC to enter the target stage of the lifecycle.

In this implementation, the VNF may feed back, to the VNFM based on the pre-notification response, the reason why the first VNFC is rejected to enter the target stage of the lifecycle, so that the VNFM learns of the reason why the VNF rejects to control the first VNFC to enter the target stage of the lifecycle, and the VNFM may re-determine, based on the reason, a VNFC that is going to enter the target stage of the lifecycle, and re-initiate a lifecycle management procedure for the VNFC.

Optionally, the pre-notification response indicates that the VNF rejects to delete the first application instance.

In this implementation, the VNF may feed back, to the VNFM based on the pre-notification response, that the first VNFC is rejected to enter the target stage of the lifecycle, so that the VNFM learns that the first VNFC cannot be controlled to enter the target stage of the lifecycle, thereby avoiding a service call loss caused by controlling the first VNFC to enter the target stage of the lifecycle.

Optionally, the pre-notification response indicates a reason why the VNF rejects to delete the first application instance.

In this implementation, the VNF may feed back, to the VNFM based on the pre-notification response, the reason why the first application instance is rejected to be deleted, so that the VNFM learns of the reason why the VNF rejects to delete the first application instance, and the VNFM may re-determine, based on the reason, a to-be-deleted application instance, and re-initiate a lifecycle management procedure based on the to-be-deleted application instance.

Optionally, the pre-notification response indicates that the VNF rejects to start the application instances of the first quantity.

In this implementation, the VNF may feed back, to the VNFM based on the pre-notification response, that the application instances of the first quantity are rejected to be started, so that the VNFM learns that the application instances of the first quantity cannot be started, thereby avoiding adverse impact on performance of the VNF caused by starting the application instances of the first quantity.

Optionally, the pre-notification response indicates a reason why the VNF rejects to start the application instances of the first quantity.

In this implementation, the VNF may feed back, to the VNFM based on the pre-notification response, the reason why the application instances of the first quantity are rejected to be started, so that the VNFM learns of the reason why the VNF rejects to start the application instances of the first quantity, and the VNFM may re-determine, based on the reason, a quantity of to-be-started application instances, and re-initiate a lifecycle management procedure based on the quantity of to-be-started application instances.

Optionally, the pre-notification response indicates that the VNF rejects to delete the application instances of the second quantity.

In this implementation, the VNF may feed back, to the VNFM based on the pre-notification response, that the application instances of the second quantity are rejected to be deleted, so that the VNFM learns that the application instances of the second quantity cannot be deleted, thereby avoiding adverse impact on performance of the VNF caused by deleting the application instances of the second quantity.

Optionally, the pre-notification response indicates a reason why the VNF rejects to delete the application instances of the second quantity.

In this implementation, the VNF may feed back, to the VNFM based on the pre-notification response, the reason why the VNF rejects to delete the application instances of the second quantity, so that the VNFM learns of the reason why the VNF rejects to delete the application instances of the second quantity, and the VNFM may re-determine, based on the reason, a quantity of to-be-deleted application instances, and re-initiate a lifecycle management procedure based on the quantity of to-be-deleted application instances.

Optionally, the pre-notification response indicates that the VNF is rejected to enter the target stage of the lifecycle at the first time point.

In this implementation, the VNF may feed back, to the VNFM based on the pre-notification response, that the VNF is rejected to enter the target stage of the lifecycle at the first time point, so that the VNFM learns that the VNF cannot be controlled, at the first time point, to enter the target stage of the lifecycle, thereby avoiding adverse impact on performance of the VNF caused by controlling, at the first time point, the VNF to enter the target stage of the lifecycle.

Optionally, the pre-notification response indicates a reason why the VNF is rejected to enter the target stage of the lifecycle at the first time point.

In this implementation, the VNF may feed back, to the VNFM, the reason why the VNF is rejected to enter the target stage of the lifecycle at the first time point, so that the VNFM learns of the reason why the VNF is rejected to enter the target stage of the lifecycle at the first time point, and the VNFM may re-determine, based on the reason, a time point at which the VNF enters the target stage of the lifecycle, and re-initiate a lifecycle management procedure based on the time point.

Optionally, the controlling the VNF to enter a target stage of the lifecycle includes: generating a management instruction, where the management instruction is used to instruct a container as a service CaaS manager to manage a container cluster, where the container cluster is used to carry the VNF; and sending the management instruction to the CaaS manager.

In this implementation, the lifecycle management procedure in a VNF containerization scenario can be supported, and a service lossless solution in the VNF containerization scenario is provided. The CaaS manager manages the container cluster in which the VNF runs, and the VNFM exchanges information with the CaaS manager to indicate the CaaS manager to manage the container cluster, thereby implementing the function of managing the lifecycle of the VNF. In the VNF management procedure, the VNFM may function as a communication medium between the VNF and the CaaS manager, and the VNFM may shield implementation differences between different CaaS managers, and provide a uniform lifecycle management interface for the VNF.

Optionally, the generating a management instruction includes: generating a creation instruction based on a to-be-scaled-out VNFC, where the creation instruction is used to instruct the CaaS manager to create a container instance of a container in the container cluster, and the container instance is used to carry a to-be-added application instance of the to-be-scaled-out VNFC.

In this implementation, the scale-out procedure in the VNF containerization scenario can be supported, and a service lossless solution in the VNF containerization scenario is provided. The CaaS manager manages the container cluster, and the VNFM exchanges information with the CaaS manager and the VNF. When the VNF needs to be scaled out, the VNFM may interact with the CaaS manager, to indicate the CaaS manager to create a container instance of a container in the container cluster. Because the VNF is carried by the container cluster, a quantity of application instances of a VNFC in the VNF increases accordingly as a quantity of container instances in the container cluster increases, thereby implementing the function of scaling out the VNF. In the VNF management procedure, the VNFM may function as a communication medium between the VNF and the CaaS manager, and the VNFM may shield implementation differences between different CaaS managers, and provide a uniform scale-out interface for the VNF.

Optionally, the generating a management instruction includes: generating a deletion instruction based on a to-be-scaled-in VNFC, where the deletion instruction is used to instruct the CaaS manager to delete a container instance of a container from the container cluster, and the container instance is used to carry a to-be-deleted application instance of the to-be-scaled-in VNFC.

In this implementation, the scale-in process in the VNF containerization scenario can be supported, and a service lossless solution in the VNF containerization scenario is provided. The CaaS manager manages the container cluster, and the VNFM exchanges information with the CaaS manager and the VNF. When the VNF needs to be scaled in, the VNFM may interact with the CaaS manager, to indicate the CaaS manager to delete a container instance of a container from the container cluster. Because the VNF is carried by the container cluster, a quantity of application instances of a VNFC in the VNF decreases accordingly as a quantity of container instances in the container cluster decreases, thereby implementing the function of scaling in the VNF. In the VNF management procedure, the VNFM may function as a communication medium between the VNF and the CaaS manager, and the VNFM may shield implementation differences between different CaaS managers, and provide a uniform scale-in interface for the VNF.

Optionally, the generating a management instruction includes: generating a creation instruction based on a to-be-onboarded VNFC, where the creation instruction is used to instruct the CaaS manager to create a container in the container cluster, and the container is used to carry the to-be-onboarded VNFC.

In this implementation, the VNFC onboarding procedure in the VNF containerization scenario can be supported, and a service lossless solution in the VNF containerization scenario is provided. The CaaS manager manages the container cluster, and the VNFM exchanges information with the CaaS manager and the VNF. When a VNFC needs to be brought onboarded, the VNFM may control the CaaS manager to create a container in the container cluster. Because the created container carries the VNFC, the VNFC corresponding to the container may be started after the container is created, thereby implementing the function of bringing the VNFC onboarded. In the VNF management procedure, the VNFM may function as a communication medium between the VNF and the CaaS manager, and the VNFM may shield implementation differences between different CaaS managers, and provide a uniform VNFC onboarding interface for the VNF.

Optionally, the generating a management instruction includes: generating a deletion instruction based on a to-be-terminated VNFC, where the deletion instruction is used to instruct the CaaS manager to delete a container from the container cluster, and the container is used to carry the to-be-terminated VNFC.

In this implementation, the VNFC termination procedure in the VNF containerization scenario can be supported, and a service lossless solution in the VNF containerization scenario is provided. The CaaS manager manages the container cluster, and the VNFM exchanges information with the CaaS manager and the VNF. When a VNFC needs to be terminated, the VNFM may control the CaaS manager to delete a container from the container cluster. Because the container carries the VNFC, the VNFC corresponding to the container is to be deleted accordingly after the container is deleted, thereby implementing the function of bringing the VNFC terminated. In the VNF management procedure, the VNFM may function as a communication medium between the VNF and the CaaS manager, and the VNFM may shield implementation differences between different CaaS managers, and provide a uniform VNFC termination interface for the VNF.

Optionally, before the generating a management instruction, the method further includes: obtaining a first VNFC template based on the to-be-scaled-out VNFC; querying a correspondence between a VNFC template and a container deployment template based on the first VNFC template to obtain a first container deployment template corresponding to the first VNFC template; and sending the first container deployment template to the CaaS manager, where the first VNFC template is used to describe the to-be-scaled-out VNFC, and the first container deployment template is used to describe a container carrying the to-be-scaled-out VNFC. Optionally, before the generating a management instruction, the method further includes: obtaining a second VNFC template based on the to-be-onboarded VNFC; querying a correspondence between a VNFC template and a container deployment template based on the second VNFC template, to obtain a second container deployment template corresponding to the second VNFC template; and sending the second container deployment template to the CaaS manager, where the second VNFC template is used to describe the to-be-onboarded VNFC, and the second container deployment template is used to describe a container carrying the to-be-onboarded VNFC.

Optionally, the controlling the VNF to enter the target stage of the lifecycle includes at least one of the following: controlling, based on the pre-notification response, the first VNFC in the VNF to enter the target stage of VNFC in the VNF to enter the target stage of the lifecycle; deleting the second application instance based on the pre-notification response; starting the application instances of the third quantity of based on the pre-notification response; deleting the application instances of the fourth quantity based on the pre-notification response; controlling, at the second time point based on the pre-notification response, the VNF to enter the target stage of the lifecycle; controlling, based on the pre-notification response, a fifth VNFC to enter the target stage of the lifecycle, where the fifth VNFC is one or more VNFCs other than the first VNFC in the VNF; deleting a third application instance based on the pre-notification response, where the third application instance is one or more application instances other than the first application instance of a second VNFC; starting application instances of a fifth quantity based on the pre-notification response, where the fifth quantity is a positive integer less than the first quantity; deleting application instances of a sixth quantity based on the pre-notification response, where the sixth quantity is a positive integer less than the second quantity; controlling, based on the pre-notification response, the VNF to enter the target stage of the lifecycle at a third time point, where the third time point is later than the first time point.

The controlling the VNF to enter the target stage of the lifecycle includes at least one of the following: generating the management instruction based on an identifier of a first container, and sending the management instruction to the CaaS manager, where the first container is one or more containers in the container cluster that carry the first VNFC, and the management instruction is used to instruct the CaaS manager to manage the first container in the container cluster; generating the management instruction based on an identifier of a first container instance, and sending the management instruction to the CaaS manager, where the first container instance is one or more instances of a second container that carry the first application instance, the second container is one or more containers that carry the second VNFC in the container cluster, and the management instruction is used to instruct the CaaS manager to delete the first container instance from the container cluster; generating the management instruction based on a seventh quantity, and sending the management instruction to the CaaS manager, where the management instruction is used to instruct the CaaS manager to create container instances of the seventh quantity in the container cluster, the seventh quantity is a positive integer, and the container instances of the seventh quantity are used to carry the application instances of the first quantity; generating the management instruction based on an eighth quantity, and sending the management instruction to the CaaS manager, where the management instruction is used to instruct the CaaS manager to delete container instances of the eighth quantity from the container cluster, the eighth quantity is a positive integer, and the container instances of the eighth quantity are used to carry the application instances of the second quantity; generating the management instruction based on the first time point, and sending the management instruction to the CaaS manager, where the management instruction is used to instruct the CaaS manager to manage the container cluster at the first time point; generating the management instruction based on an identifier of a third positive integer, and the container instances of the eighth quantity are used to carry the application instances of the second quantity; generating the management instruction based on the first time point, and sending the management instruction to the CaaS manager, where the management instruction is used to instruct the CaaS manager to manage the container cluster at the first time point; generating the management instruction based on an identifier of a third container, and sending the management instruction to the CaaS manager, where the third container is one or more containers in the container cluster that carry the third VNFC, and the management instruction is used to instruct the CaaS manager to manage the third container in the container cluster; generating the management instruction based on an identifier of a second container instance, and sending the management instruction to the CaaS manager, where the second container instance is one or more instances of a fourth container that carry the second application instance, the fourth container is one or more containers that carry a fourth VNFC in the container cluster, and the management instruction is used to instruct the CaaS manager to delete the second container instance from the container cluster; generating the management instruction based on a ninth quantity, and sending the management instruction to the CaaS manager, where the management instruction is used to instruct the CaaS manager to create container instances of the ninth quantity in the container cluster, the ninth quantity is a positive integer, and the container instances of the ninth quantity are used to carry the application instances of the third quantity; generating the management instruction based on a tenth quantity, and sending the management instruction to the CaaS manager, where the management instruction is used to instruct the CaaS manager to delete container instances of the tenth quantity from the container cluster, the tenth quantity is a positive integer, and the container instances of the tenth quantity are used to carry the application instances of the fourth quantity; generating the management instruction based on the second time point, and sending the management instruction to the CaaS manager, where the management instruction is used to instruct the CaaS manager to manage the container cluster at the second time point; generating the management instruction based on an identifier of a fifth container, and sending the management instruction to the CaaS manager, where the fifth container is one or more containers in the container cluster that carry the fifth VNFC, and the management instruction is used to instruct the CaaS manager to manage the fifth container in the container cluster; generating the management instruction based on an identifier of a third container instance, and sending the management instruction to the CaaS manager, where the third container instance is one or more instances of the second container that carry the third application instance, and the management instruction is used to instruct the CaaS manager to delete the third container instance from the container cluster; generating the management instruction based on an eleventh quantity, and sending the management instruction to the CaaS manager, where the eleventh quantity is a positive integer, the management instruction is used to instruct the CaaS manager to create container instances of the eleventh quantity in the container cluster, and the container instances of the eleventh quantity are used to carry the application instances of the fifth quantity; generating the management instruction based on a twelfth quantity, and sending the management instruction to the CaaS manager, where the twelfth quantity is a positive integer, the management instruction is used to instruct the CaaS manager to delete container instances of the twelfth quantity from the container cluster, and the container instances of the twelfth quantity are used to carry the application instances of the sixth quantity; and generating the management instruction based on the third time point, and sending the management instruction to the CaaS manager, where the management instruction is used to instruct the CaaS manager to manage the container cluster at the third time point.

Optionally, the method further includes: querying a correspondence between an identifier of a VNFC and an identifier of a container based on an identifier of the first VNFC, to obtain the identifier of the first container corresponding to the identifier of the first VNFC.

In this implementation, the VNFM serves as an intermediate medium between the VNF and the CaaS manager, and converts an identifier of a VNFC into an identifier of a container, thereby implementing conversion between a primitive of the VNF and a primitive of the container. This breaks down a communication barrier between the VNF and the CaaS manager, breaks through a technical barrier that containerization is difficult to implement because the VNF cannot understand container-level primitives, streamlines the lifecycle management procedure in the VNF containerization scenario, and supports evolution of VNF products to containerization.

Optionally, the method further includes: querying a correspondence between an identifier of an application instance and an identifier of a container instance based on an identifier of the first application instance, to obtain an identifier of the first container instance corresponding to the identifier of the first application instance.

In this implementation, the VNFM serves as an intermediate medium between the VNF and the CaaS manager, and converts an identifier of an application instance into an identifier of a container instance, thereby implementing conversion between a primitive of the VNF and a primitive of the container instance. This breaks down a communication barrier between the VNF and the CaaS manager, breaks through a technical barrier that containerization is difficult to implement because the VNF cannot understand container-level primitives, streamlines the lifecycle management procedure in a VNF container instantiation scenario, and supports evolution of VNF products to container instantiation.

Optionally, the method further includes: querying the correspondence between an identifier of a VNFC and an identifier of a container based on an identifier of the third VNFC, to obtain the identifier of the third container corresponding to the identifier of the third VNFC.

Optionally, the method further includes: querying the correspondence between an identifier of an application instance and an identifier of a container instance based on an identifier of the second application instance, to obtain the identifier of the second container instance corresponding to the identifier of the second application instance.

Optionally, the method further includes: querying the correspondence between an identifier of a VNFC and an identifier of a container based an identifier of the fifth VNFC, to obtain the identifier of the fifth container corresponding to the identifier of the fifth VNFC.

Optionally, the method further includes: querying the correspondence between an identifier of an application instance and an identifier of a container instance based on an identifier of the third application instance, to obtain an identifier of the third container instance corresponding to the identifier of the third application instance.

Optionally, at least one of the identifier of the first container, the identifier of the first container instance, the identifier of the third container, the identifier of the second container instance, the identifier of the fifth container, and the identifier of the third container instance is obtained from the pre-notification response.

Optionally, an identifier of a VNFC may be the same as an identifier of a container corresponding to the VNFC.

In this manner, when the VNFM specifies that a lifecycle management operation is to be performed on a specific VNFC, the VNFM may use an identifier of the VNFC as an identifier of a container corresponding to the VNFC, to quickly and easily implement conversion from the identifier of the VNFC to the identifier of the container.

Optionally, before the generating a pre-notification, the method further includes: generating a query request, sending the query request to the VNF, and receiving a query response from the VNF, where the query request is used to query the correspondence between an identifier of a VNFC and an identifier of a container, and the query response includes the correspondence between an identifier of a VNFC and an identifier of a container; and/or generating a query request, sending the query request to the VNF, and receiving a query response from the VNF, where the query request is used to query the correspondence between an identifier of an application instance and an identifier of a container instance, and the query response includes the correspondence between an identifier of an application instance and an identifier of a container instance.

Optionally, after the controlling the VNF to enter the target stage of the lifecycle, the method further includes: generating a post-notification, where the post-notification is used to notify that the VNF is already at the target stage of the lifecycle; and sending the post-notification to the VNF.

In this implementation, the VNFM sends the post-notification to the VNF. After receiving the post-notification, the VNF may learn that a lifecycle management action of the VNFM has terminated, to help the VNF learn of a termination occasion of the lifecycle management action. The VNFM and the VNF can effectively cooperate and collaborate, so that the VNF can learn, in a timely manner after receiving the post-notification, that the VNF has entered the target stage of the lifecycle; and the VNF is triggered to execute a service migration procedure, a service clearance procedure, a service waiting procedure, and other transaction procedures that are after the target stage of the lifecycle.

Optionally, before the controlling the VNF to enter the target stage of the lifecycle, the method further includes:
receiving pre-processing progress information of the VNF; and
determining, based on the pre-processing progress information, that the VNF has completed a pre-processing procedure.

According to a second aspect, a VNF lifecycle management method is provided. The method includes:
receiving a pre-notification from a virtualized network function manager VNFM, where the pre-notification is used to notify that the VNF is going to enter a target stage of a lifecycle; generating a pre-notification response; sending the pre-notification response to the VNFM; and executing a pre-processing procedure at the target stage of the lifecycle.

According to the method provided in this embodiment, the procedure of interaction between the pre-notification and the pre-notification response is introduced to the lifecycle management procedure of the VNF. The pre-notification is sent to the VNF, and the VNF is controlled to enter the target stage of the lifecycle after the pre-notification response from the VNF is received. The VNF may be reminded in advance that the VNF is going to enter the target stage of the lifecycle, so that the VNF can execute the pre-processing procedure in advance based on the pre-notification, thereby improving service processing efficiency. In addition, this avoids a call loss caused by temporarily performing smooth service migration after the VNF enters the target stage of the lifecycle, thereby implementing that services are not affected.

Optionally, the receiving a pre-notification from a virtualized network function manager VNFM includes at least one of the following: receiving a scale-out pre-notification from the VNFM, where the scale-out pre-notification is used to notify that the VNF is going to enter a scale-out stage; receiving a scale-in pre-notification from the VNFM, where the scale-in pre-notification is used to notify that the VNF is going to enter a scale-in stage; receiving a virtualized network function component VNFC onboarding pre-notification from the VNFM, where the VNFC onboarding pre-notification is used to notify that the VNF is going to enter a VNFC onboarding stage; and receiving a VNFC termination pre-notification from the VNFM, where the VNFC termination pre-notification is used to notify that the VNF is going to enter a VNFC termination stage.

Optionally, the executing a pre-processing procedure at the target stage of the lifecycle includes: determining a first VNFC based on the pre-notification, and executing the pre-processing procedure at the target stage of the lifecycle for the first VNFC, where the first VNFC is one or more VNFCs included in the VNF, and the pre-notification is used to notify the VNF that the first VNFC is going to enter the target stage of the lifecycle.

Optionally, the executing a pre-processing procedure at the target stage of the lifecycle includes: determining a first application instance based on the pre-notification, and executing the pre-processing procedure at the target stage of the lifecycle for the first application instance, where the first application instance is one or more application instances included in a second VNFC, the second VNFC is one or more VNFCs included in the VNF, and the scale-in pre-notification is used to notify the VNF that the first application instance is to be deleted.

Optionally, the executing a pre-processing procedure at the target stage of the lifecycle includes: obtaining a first quantity based on the pre-notification, and executing the pre-processing procedure at the target stage of the lifecycle based on the first quantity, where the pre-notification is used to notify the VNF that application instances of the first quantity are to be started, and the first quantity is a positive integer.

Optionally, the executing a pre-processing procedure at the target stage of the lifecycle includes: obtaining a second quantity based on the pre-notification, and executing the pre-processing procedure at the target stage of the lifecycle based on the second quantity, where the pre-notification is used to notify the VNF that application instances of the second quantity are to be deleted, and the second quantity is a positive integer.

Optionally, the executing a pre-processing procedure at the target stage of the lifecycle includes: obtaining a first time point based on the pre-notification, and executing the pre-processing procedure at the target stage of the lifecycle based on the first time point, where the pre-notification is used to notify that the VNF is going to enter the target stage of the lifecycle at the first time point, and the first time point is a time point at which the VNFM is going to control the VNF to enter the target stage of the lifecycle.

Optionally, the generating a pre-notification response includes: generating the pre-notification response based on the first VNFC, where the pre-notification response indicates that the VNF allows the first VNFC to enter the target stage of the lifecycle.

In this implementation, the VNF may feed back, to the VNFM based on the pre-notification response, that the first VNFC is allowed to enter the target stage of the lifecycle, so that the VNFM learns that the first VNFC can be controlled to enter the target stage of the lifecycle.

Optionally, the generating a pre-notification response includes: generating the pre-notification response based on the first application instance, where the pre-notification response indicates that the VNF allows to delete the first application instance.

In this implementation, the VNF may feed back, to the VNFM based on the pre-notification response, that the first application instance is allowed to be deleted, so that the VNFM learns that the first application instance can be deleted.

Optionally, the generating a pre-notification response includes: generating the pre-notification response based on the first quantity, where the pre-notification response indicates that the VNF allows to start the application instances of the first quantity.

In this implementation, the VNF may feed back, to the VNFM based on the pre-notification response, that the application instances of the first quantity are allowed to be started, so that the VNFM learns that the application instances of the first quantity can be started.

Optionally, the generating a pre-notification response includes: generating the pre-notification response based on the second quantity, where the pre-notification response indicates that the VNF allows to delete the application instances of the second quantity.

In this implementation, the VNF may feed back, to the VNFM based on the pre-notification response, that the application instances of the second quantity are allowed to be deleted, so that the VNFM learns that the application instances of the second quantity can be deleted.

Optionally, the generating a pre-notification response includes: generating the pre-notification response based on the first time point, where the pre-notification response indicates that the VNF is allowed to enter the target stage of the lifecycle at the first time point.

In this implementation, the VNF may feed back, to the VNFM based on the pre-notification response, that the VNF is allowed to enter the target stage of the lifecycle at the first time point, so that the VNFM learns that the VNF can be controlled, at the first time point, to enter the target stage of the lifecycle.

Optionally, the generating a pre-notification response includes: generating the pre-notification response based on a third VNFC, where the pre-notification response is used to indicate to control the third VNFC to enter the target stage of the lifecycle, and the third VNFC is one or more VNFCs included in the VNF.

In this implementation, the VNF itself may specify, based on the pre-notification response, one or more specific VNFCs (namely, the third VNFC) that are going to enter the target stage of the lifecycle. This improves flexibility, avoids a call loss caused by controlling, by the VNFM, an inappropriate VNFC to enter the target stage of the lifecycle, and ensures smooth service migration.

Optionally, the generating a pre-notification response includes: generating the pre-notification response based on a second application instance, where the pre-notification response is used to indicate to delete the second application instance, the second application instance is one or more application instances included in a fourth VNFC, and the fourth VNFC is one or more VNFCs included in the VNF.

In this implementation, the VNF itself may specify, based on the pre-notification response, one or more specific to-be-deleted application instances (namely, the second application instance). This improves flexibility, and avoids a call loss and performance compromise caused by deleting an inappropriate application instance by the VNFM.

Optionally, the generating a pre-notification response includes: generating the pre-notification response based on a third quantity, where the pre-notification response is used to indicate to start application instances of the third quantity, and the third quantity is a positive integer.

In this implementation, the VNF itself may determine, based on the pre-notification response, a quantity of to-be-started application instances. This improves flexibility of lifecycle management for the VNF, and avoids a waste of resources caused when application instances of an excessively large quantity are started. In addition, this can also avoid the following case: Because application instances of an excessively small quantity are started, a lifecycle management procedure needs to be re-initiated to start application instances, resulting in low efficiency in starting application instances.

Optionally, the generating a pre-notification response includes: generating the pre-notification response based on a fourth quantity, where the pre-notification response is used to indicate to delete the application instances of the fourth quantity, and the fourth quantity is a positive integer.

In this implementation, the VNF itself may determine a quantity of to-be-deleted application instances based on the pre-notification response. This improves flexibility, and avoids a call loss and performance exception caused by deleting application instances of an excessively large quantity. In addition, this can also avoid the following case: Because application instances of an excessively small quantity are deleted, a lifecycle management procedure needs to be re-initiated to delete application instances, resulting in low efficiency in deleting application instances.

Optionally, the generating a pre-notification response includes: generating the pre-notification response based on a second time point, where the second time point is a time point at which the VNF is allowed to enter the target stage of the lifecycle, and the pre-notification response is used to indicate the VNFM to control, at the second time point, the VNF to enter the target stage of the lifecycle.

In this implementation, the VNF itself may specify, based on the pre-notification response, a specific time point at which the VNF enters the target stage of the lifecycle, thereby improving flexibility.

Optionally, the generating a pre-notification response includes: generating the pre-notification response based on the first VNFC, where the pre-notification response indicates that the VNF rejects the first VNFC to enter the target stage of the lifecycle.

In this implementation, the VNF may feed back, to the VNFM based on the pre-notification response, that the first VNFC is rejected to enter the target stage of the lifecycle, so that the VNFM learns that the first VNFC cannot be controlled to enter the target stage of the lifecycle, thereby avoiding a service call loss caused by controlling, by the VNFM, the first VNFC to enter the target stage of the lifecycle.

Optionally, the generating a pre-notification response includes: generating the pre-notification response based on the first VNFC, where the pre-notification response indicates a reason why the VNF rejects the first VNFC to enter the target stage of the lifecycle.

In this implementation, the VNF may feed back, to the VNFM based on the pre-notification response, the reason why the first VNFC is rejected to enter the target stage of the lifecycle, so that the VNFM learns of the reason why the VNF rejects to control the first VNFC to enter the target stage of the lifecycle, and the VNFM may re-determine, based on the reason, a VNFC that is going to enter the target stage of the lifecycle, and re-initiate a lifecycle management procedure for the VNFC.

Optionally, the generating a pre-notification response includes: generating the pre-notification response based on the first application instance, where the pre-notification response indicates that the VNF rejects to delete the first application instance.

In this implementation, the VNF may feed back, to the VNFM based on the pre-notification response, that the first VNFC is rejected to enter the target stage of the lifecycle, so that the VNFM learns that the first VNFC cannot be controlled to enter the target stage of the lifecycle, thereby avoiding a service call loss caused by controlling the first VNFC to enter the target stage of the lifecycle.

Optionally, the generating a pre-notification response includes: generating the pre-notification response based on the first application instance, where the pre-notification response indicates the reason why the VNF rejects to delete the first application instance.

In this implementation, the VNF may feed back, to the VNFM based on the pre-notification response, the reason why the first application instance is rejected to be deleted, so that the VNFM learns of the reason why the VNF rejects to delete the first application instance, and the VNFM may re-determine, based on the reason, a to-be-deleted application instance, and re-initiate a lifecycle management procedure based on the to-be-deleted application instance.

Optionally, the generating a pre-notification response includes: generating the pre-notification response based on the first quantity, where the pre-notification response indicates that the VNF rejects to start the application instances of the first quantity.

In this implementation, the VNF may feed back, to the VNFM based on the pre-notification response, that the application instances of the first quantity are rejected to be started, so that the VNFM learns that the application instances of the first quantity cannot be started, thereby avoiding adverse impact on performance of the VNF caused by starting the application instances of the first quantity.

Optionally, the generating a pre-notification response includes: generating the pre-notification response based on the first quantity, where the pre-notification response indicates a reason why the VNF rejects to start the application instances of the first quantity.

In this implementation, the VNF may feed back, to the VNFM based on the pre-notification response, the reason why the application instances of the first quantity are rejected to be started, so that the VNFM learns of the reason why the VNF rejects to start the application instances of the first quantity, and the VNFM may re-determine, based on the reason, a quantity of to-be-started application instances, and re-initiate a lifecycle management procedure based on the quantity of to-be-started application instances.

Optionally, the generating a pre-notification response includes: generating the pre-notification response based on the second quantity, where the pre-notification response indicates that the VNF rejects to delete the application instances of the second quantity.

In this implementation, the VNF may feed back, to the VNFM based on the pre-notification response, that the application instances of the second quantity are rejected to be deleted, so that the VNFM learns that the application instances of the second quantity cannot be deleted, thereby avoiding adverse impact on performance of the VNF caused by deleting the application instances of the second quantity.

Optionally, the generating a pre-notification response includes: generating the pre-notification response based on the second quantity, where the pre-notification response indicates a reason why the VNF rejects to delete the application instances of the second quantity.

In this implementation, the VNF may feed back, to the VNFM based on the pre-notification response, the reason why the VNF rejects to delete the application instances of the second quantity, so that the VNFM learns of the reason why the VNF rejects to delete the application instances of the second quantity, and the VNFM may re-determine, based on the reason, a quantity of to-be-deleted application instances, and re-initiate a lifecycle management procedure based on the quantity of to-be-deleted application instances.

Optionally, the generating a pre-notification response includes: generating the pre-notification response based on the first time point, where the pre-notification response indicates that the VNF is rejected to enter the target stage of the lifecycle at the first time point.

In this implementation, the VNF may feed back, to the VNFM based on the pre-notification response, that the VNF is rejected to enter the target stage of the lifecycle at the first time point, so that the VNFM learns that the VNF cannot be controlled, at the first time point, to enter the target stage of the lifecycle, thereby avoiding adverse impact on performance of the VNF caused by controlling, at the first time point, the VNF to enter the target stage of the lifecycle.

Optionally, the generating a pre-notification response includes: generating the pre-notification response based on the first time point, where the pre-notification response indicates a reason why the VNF is rejected to enter the target stage of the lifecycle at the first time point.

In this implementation, the VNF may feed back, to the VNFM based on the pre-notification response, the reason why the VNF is rejected to enter the target stage of the lifecycle at the first time point, so that the VNFM learns of the reason why the VNF is rejected to enter the target stage of the lifecycle at the first time point, and the VNFM may re-determine, based on the reason, a time point at which the VNF enters the target stage of the lifecycle, and re-initiate a lifecycle management procedure based on the time point.

Optionally, the generating a pre-notification response includes: generating the pre-notification response based on an identifier of the first VNFC, where the pre-notification response includes the identifier of the first VNFC.

Optionally, the generating a pre-notification response includes: obtaining an identifier of a first container based on the identifier of the first VNFC, and generating the pre-notification response based on the identifier of the first container, where the first container is one or more containers in a container cluster that carry the first VNFC, and the pre-notification response includes the identifier of the first container.

Optionally, the generating a pre-notification response includes: generating the pre-notification response based on an identifier of the first application instance, where the pre-notification response includes the identifier of the first application instance.

Optionally, the generating a pre-notification response includes: obtaining an identifier of a first container instance based on the identifier of the first application instance, and generating the pre-notification response based on the identifier of the first container instance, where the first container instance is one or more instances of a second container that carry the first application instance, the second container is one or more containers that carry the second VNFC in the container cluster, and the pre-notification response includes the identifier of the first container instance.

Optionally, the generating a pre-notification response includes: generating the pre-notification response based on an identifier of the third VNFC, where the pre-notification response includes the identifier of the third VNFC.

Optionally, the generating a pre-notification response includes: obtaining an identifier of a third container based on the identifier of the third VNFC, and generating the pre-notification response based on the identifier of the third container, where the third container is one or more containers in the container cluster that carry the third VNFC, and the pre-notification response includes the identifier of the third container.

Optionally, the generating a pre-notification response includes: generating the pre-notification response based on an identifier of the second application instance, where the pre-notification response includes the identifier of the second application instance.

Optionally, the generating a pre-notification response includes: obtaining an identifier of a second container instance based on the identifier of the second application instance, and generating the pre-notification response based on the identifier of the second container instance, where the second container instance is one or more instances of a fourth container that carry the second application instance, the fourth container is one or more containers that carry the fourth VNFC in the container cluster, and the pre-notification response includes the identifier of the second container instance.

Optionally, before the generating a pre-notification response, the method further includes: receiving a query request of the VNFM, generating a query response, and sending the query response to the VNFM, where the query request is used to query a correspondence between an identifier of a VNFC and an identifier of a container or a correspondence between an identifier of an application instance and an identifier of a container instance, and the query response includes the correspondence between an identifier of a VNFC and an identifier of a container or the correspondence between an identifier of an application instance and an identifier of a container instance.

Optionally, the method further includes: querying the correspondence between an identifier of a VNFC and an identifier of a container based on the identifier of the first VNFC, to obtain the identifier of the first container corresponding to the identifier of the first VNFC.

Optionally, before the generating a pre-notification response, the method further includes at least one of the following: receiving the identifier of the first container from the first VNFC; receiving the identifier of the third container from the third VNFC, receiving the identifier of the first container instance from the first application instance, receiving the identifier of the second container instance from the second application instance, and receiving the identifier of the third container from the third VNFC.

Optionally, the method further includes: querying the correspondence between an identifier of an application instance and an identifier of a container instance based on the identifier of the first application instance, to obtain the identifier of the first container instance corresponding to the first application instance.

Optionally, the method further includes: sending a query request to the first application instance based on the identifier of the first application instance, and receiving the identifier of the first container instance from the first application instance, where the query request is used to query an identifier of a container instance carrying the application instance.

Optionally, the method further includes: querying the correspondence between an identifier of a VNFC and an identifier of a container based on the identifier of the third VNFC, to obtain the identifier of the third container corresponding to the identifier of the third VNFC.

Optionally, the method further includes: querying the correspondence between an identifier of an application instance and an identifier of a container instance based on the identifier of the second application instance, to obtain the identifier of the second container instance corresponding to the second application instance.

Optionally, before the receiving a pre-notification from a VNFM, the method further includes: when any VNFC in the VNF is started, obtaining an identifier of a container carrying the VNFC, and storing an identifier of the VNFC and the identifier of the container in the correspondence between an identifier of a VNFC and an identifier of a container.

In this implementation, the VNF may dynamically maintain and update the correspondence between an identifier of a VNFC and an identifier of a container as the VNFC is started. In this way, the VNF itself may store the correspondence between an identifier of a VNFC and an identifier of a container, to implement conversion between a primitive of the VNF and a primitive of a container, and streamline the lifecycle management procedure in a VNF containerization scenario.

Optionally, before the receiving a pre-notification from a VNFM, the method further includes: when any application instance of any VNFC in the VNF is started, obtaining an identifier of a container instance carrying the application instance, and storing an identifier of the application instance and the identifier of the container instance in the correspondence between an identifier of an application instance and an identifier of a container instance.

In this implementation, the VNF may dynamically maintain and update the correspondence between an identifier of an application instance and an identifier of a container instance as the application instance of the VNFC is started. In this way, the VNF itself may store the correspondence between an identifier of an application instance and an identifier of a container instance, to implement conversion between a primitive of the VNF and a primitive of a container, and streamline the lifecycle management procedure in the VNF containerization scenario.

Optionally, the executing a pre-processing procedure at the target stage of the lifecycle includes: obtaining a service migration plan based on the scale-out pre-notification, where the service migration plan is used to migrate a service to a to-be-started application instance of a VNFC.

In this implementation, the VNF may plan, by preparing the service migration plan, a pace of migrating service traffic to remaining compute nodes in advance before scale-out, to avoid the following case: Service migration is executed excessively fast and service migration is not completed during service migration that is temporarily performed after scale-out, that is, avoid a call loss caused when service migration is executed excessively fast or service migration is not completed, thereby ensuring service processing quality.

Optionally, the executing a pre-processing procedure at the target stage of the lifecycle includes: obtaining first control information based on the scale-out pre-notification, where the first control information is used to control the to-be-started application instance of the VNFC to process the service.

Optionally, the executing a pre-processing procedure at the target stage of the lifecycle includes: migrating a service of a to-be-deleted application instance of a VNFC based on the scale-in pre-notification.

In this implementation, the service of the to-be-deleted application instance is migrated in advance, to avoid the following case: Service migration is executed excessively fast and service migration is not completed during service migration that is temporarily performed after scale-in, that is, avoid a call loss caused when service migration is executed excessively fast or service migration is not completed, thereby ensuring smooth service migration, and avoiding service loss and flapping.

Optionally, the executing a pre-processing procedure at the target stage of the lifecycle includes: backing up data of the to-be-deleted application instance based on the scale-in pre-notification.

In this implementation, the data of the to-be-deleted application instance is backed up in advance, so that data security of the application instance can be improved, and the data of the application instance can be prevented from being lost when the application instance is deleted, thereby making preparations in advance for scale-in.

Optionally, the executing a pre-processing procedure at the target stage of the lifecycle includes: obtaining an interaction plan based on the VNFC onboarding pre-notification, where the interaction plan is used to control a to-be-onboarded VNFC to interact with an onboarded VNFC.

In this implementation, the VNF may plan, by preparing the interaction plan, a pace of interaction between the to-be-onboarded VNFC and the onboarded VNFC before the VNFC is onboarded, so that the VNF controls the newly onboarded VNFC to successively interact with other VNFCs according to the interaction plan after the VNFC is onboarded, thereby preventing procedure congestion caused when the newly onboarded VNFC interacts with a plurality of other VNFCs simultaneously after the VNFC is onboarded, and improving robustness.

Optionally, the executing a pre-processing procedure at the target stage of the lifecycle includes: obtaining second control information based on the VNFC onboarding pre-notification, where the second control information is used to control the to-be-onboarded VNFC to process a service; releasing a resource of a to-be-terminated VNFC based on the VNFC termination pre-notification; and backing up data of the to-be-terminated VNFC based on the VNFC termination pre-notification.

In this implementation, the VNF backs up the data of the to-be-terminated VNFC in advance, to improve security of the data of the VNFC, and prevent the data of the VNFC from being lost when the VNFC is terminated, thereby making preparations in advance for bringing the VNFC terminated.

Optionally, after the sending the pre-notification response to the VNFM, the method further includes: receiving a post-notification from the VNFM, where the post-notification is used to notify that the VNF is already at the target stage of the lifecycle; and executing a processing procedure after the pre-processing procedure.

Optionally, the executing a processing procedure after the pre-processing procedure includes at least one of the following: migrating the service to the newly-added application instance of the VNFC according to the service migration plan; controlling, based on the first control information, the newly-added application instance of the VNFC to process the service; releasing a resource of the deleted application instance of the VNFC; deleting control information of the deleted application instance of the VNFC; controlling, according to the interaction plan, a newly onboarded VNFC to interact with a VNFC other than the newly onboarded VNFC; controlling, based on the second control information, the newly onboarded VNFC to process the service; releasing the resource of the terminated VNFC; and deleting control information of the terminated VNFC.

Optionally, the method further includes: generating pre-processing progress information based on progress of the pre-processing procedure; and sending the pre-processing progress information to the VNFM.

According to a third aspect, a VNFM is provided. The VNFM has functions of implementing the method in the first aspect. The functions may be implemented by hardware, or may be implemented by hardware executing corresponding software. The hardware or the software includes one or more modules corresponding to the functions.

According to a fourth aspect, a VNF is provided. The VNF has functions of implementing the method in the second aspect. The functions may be implemented by hardware, or may be implemented by hardware executing corresponding software. The hardware or the software includes one or more modules corresponding to the functions.

According to a fifth aspect, a computer device is provided. The computer device includes one or more processors and one or more volatile or non-volatile memories. The one or more volatile or non-volatile memories store at least one instruction, and the instruction is loaded and executed by the one or more processors, to implement the VNF lifecycle management method in any one of the first aspect or the optional implementations of the first aspect.

According to a sixth aspect, a computer device is provided. The computer device includes one or more processors and one or more volatile or non-volatile memories. The one or more volatile or non-volatile memories store at least one instruction, and the instruction is loaded and executed by the one or more processors, to implement the VNF lifecycle management method in any one of the second aspect or the optional implementations of the second aspect.

According to a seventh aspect, a computer-readable storage medium is provided. The storage medium stores at least one instruction, and the instruction is loaded and executed by a processor, to implement the VNF lifecycle management method in any one of the first aspect or the optional implementations of the first aspect.

According to an eighth aspect, a computer-readable storage medium is provided. The storage medium stores at least one instruction, and the instruction is loaded and executed by a processor, to implement the VNF lifecycle management method in any one of the second aspect or the optional implementations of the second aspect.

According to a ninth aspect, a computer program product including an instruction is provided. When the instruction is run on a computer device, the computer device is enabled to implement the VNF lifecycle management method.

According to a tenth aspect, a VNF lifecycle management system is provided. In a possible implementation, the system includes the VNFM in the third aspect and the VNF in the fourth aspect. In another possible implementation, the system includes the computer device in the fifth aspect and the computer device in the sixth aspect.

According to an eleventh aspect, a chip is provided. The chip includes a processor and/or a program instruction, and when the chip runs, the foregoing lifecycle management method of the VNF is implemented.

### BRIEF DESCRIPTION OF DRAWINGS

FIG. 1 is an architectural diagram of an NFV system according to an embodiment of this application;
FIG. 2 is a schematic diagram of an implementation environment according to an embodiment of this application;
FIG. 3 is a schematic structural diagram of a computer device according to an embodiment of this application;
FIG. 4 is a flowchart of a VNF lifecycle management method according to an embodiment of this application;
FIG. 5 is a flowchart of a VNF lifecycle management method according to an embodiment of this application;
FIG. 6 is a flowchart of obtaining a correspondence between an identifier of a VNFC and an identifier of a container according to an embodiment of this application;
FIG. 7 is a flowchart of a VNF scale-out method according to an embodiment of this application;
FIG. 8A and FIG. 8B are a flowchart of a VNF scale-out method according to an embodiment of this application;
FIG. 9 is a flowchart of a VNF scale-in method according to an embodiment of this application;
FIG. 10A and FIG. 10B are a flowchart of a VNF scale-in method according to an embodiment of this application;
FIG. 11 is a flowchart of a VNFC onboarding method according to an embodiment of this application;
FIG. 12A and FIG. 12B are a flowchart of a VNFC onboarding method according to an embodiment of this application;
FIG. 13 is a flowchart of a VNFC termination method according to an embodiment of this application;
FIG. 14 is a flowchart of a VNFC termination method according to an embodiment of this application;
FIG. 15 is a schematic structural diagram of a VNFM according to an embodiment of this application; and
FIG. 16 is a schematic structural diagram of a VNF according to an embodiment of this application.

### DESCRIPTION OF EMBODIMENTS

To make objectives, technical solutions, and advantages of this application clearer, the following further describes implementations of this application in detail with reference to the accompanying drawings.

Terms in this application are described as follows.

Cloud computing (English full name: cloud computing) is an Internet-based computing method that provides on-demand computing for individuals and enterprise users by using heterogeneous and autonomous services on the Internet. Because resources are on the Internet, and the Internet is often denoted as a cloud in a flowchart, this Internet-based computing technology may be analogized to a cloud. Cloud computing resources are dynamic, scalable, and virtualized, and the resources are provided through the Internet. Terminals do not need to know details of infrastructure in the "cloud" or directly control the infrastructure. Instead, the terminals only need to focus on specific resources the terminals really need and how to obtain services via the network. The cloud computing includes three layers of services: infrastructure as a service, platform as a service (English full name: platform as a service, PaaS for short), and software as a service (English full name: software as a service, SaaS for short).

The platform as a service is a service that provides a software research and development platform to users as a service in a SaaS mode.

A container as a service (English full name: container as a service, CaaS for short) is a container-based PaaS service.

A container is a virtualization technology that isolates different processes by using an operating system isolation technology. A container can be run in a virtualization environment. For example, a container may be run on a virtual machine, and the container that is run on a virtual machine may be referred to as a "virtual machine-based container". A container may alternatively be run in a non-virtualization environment. For example, a container may be run on a physical machine, for example, may be run on a bare metal server. The container that is run on the bare metal server may be referred to as a "bare-metal container".

NFV, proposed by telecom network operators, is a technical standard in which industry-standard large-capacity servers, storage devices, and switches are used to carry various network elements based on virtualization technologies. NFV implements flexible software loading and can be flexibly deployed in data centers, network nodes, and clients. This accelerates network deployment and adjustment, simplifies service deployment, improves network device unification, generalization, and adaptability, reduces costs, improves efficiency, enhances agility, and implements rapid development and deployment of new services. In addition, functions such as automatic deployment, autoscaling, fault isolation, and self-healing can be implemented depending on actual service requirements.

A virtual machine (English full name: virtual machine, VM for short) is a software entity that provides an isolated virtualization environment. The virtual machine is a virtual device that is simulated on a physical device by using virtual machine software. For application programs that are run on the virtual machine, the virtual machine operates as a real physical device. An operating system and application programs can be installed on the virtual machine, and the virtual machine can access network resources. The virtual machine uses resources of a physical machine carrying the virtual machine, for running. The resources include but are not limited to a processor, a memory, a hard disk storage, an interface, a port, and the like. The virtual machine may be created by using a hypervisor (English: hypervisor).

An image (English: image) is a file system that provides files such as programs, libraries, resources, and configurations that are required for running of containers, and some configuration parameters that are prepared for running.

A container cluster includes one or more containers. The one or more containers in the container cluster may be distributed on a same device or different devices, and the different devices may include different virtual devices on a same physical device, virtual devices on different physical devices, different physical devices, or the like. The container cluster may be managed by a CaaS manager.

A container deployment unit is a basic unit for deploying containers in the container cluster. The container deployment unit may be considered as a carrier of a container, and one container deployment unit may include one or more containers. All containers in a same container deployment unit are usually deployed on a same host. Therefore, all containers in the same container deployment unit can communicate through the host, and can share storage resources and network resources of the host. Optionally, the container deployment unit may be a pod. The pod is a concept proposed by Kubernetes (Kubernetes is an open-source container orchestration engine of Google Inc. (Google), K8s for short) for deploying, managing, and orchestrating containerized applications.

It should be noted that the pod is merely an example of the container deployment unit. The container deployment unit may not be a pod, but a basic unit for deploying a container in another container cluster management system, another container engine, or another container management tool. For ease of description, the following describes the embodiments by using an example in which the container deployment unit is a pod. Certainly, a specific name, a vendor, a version, and the like of the container deployment unit does not constitute any limitation on this application.

A container (English: container) is an entity configured to provide an isolated virtualization environment. The container may be created by using a corresponding image. A container is run by using a kernel of a physical machine, and a plurality of containers may share an operating system of the physical machine.

A container instance is a specific instance of a container. A container may have one or more container instances. Different container instances of a same container are created using a same image, different container instances of the same container have a same function, and different container instances of the same container may be run on different devices. For example, if a container is nginx-container (Nginx is a hypertext transfer protocol (hypertext transfer protocol, HTTP) and reverse proxy service), three container instances may be created for the container nginx-container by using an image of the container nginx-container: a nginx-container 1, a nginx-container 2, and a nginx-container 3, where the three container instances have a same function.

A VNF is configured to perform virtualization of at least one network function by using one physical network device. The VNF is also referred to as a virtualized network element. For example, in an implementation solution, the VNF may be configured to provide functions of different network elements in an Internet protocol address (English full name: internet protocol address, IP for short) multimedia subsystem (English full name: ip multi media subsystem, IMS for short) network, such as a proxy call session control function (English full name: proxy call session control function, P-SCSCF for short), a service call session control function (English full name: service proxy call session control function, S-CSCF for short), and a home subscriber server (English full name: home subscriber server, HSS for short) function.

A virtualized network function component (English full name: virtualized network function component, VNFC for short) is a component inside a VNF. The VNFC is a subset of a VNF function provided by an NFV service provider. One VNF may include one or more VNFCs, and different VNFCs in a same VNF may have different functions.

An application instance of a VNFC is an entity configured to carry a function of the VNFC, namely, a specific instance of the VNFC. Each VNFC may include one or more application instances, and different application instances of a same VNFC may have a same function. For example, it is assumed that a VNFC is an instant messaging application, and the instant messaging application may include three application instances: an instant messaging application installed on a mobile phone of a user A, an instant messaging application installed on a mobile phone of a user B, and an instant messaging application installed on a mobile phone of a user C. An application instance is a compute node, a control node, or another type of application instance. This is not limited. The control node, also referred to as a main control node, is configured to implement a control plane function of a VNFC. The compute node is also referred to as a non-main control node, and the compute node is configured to implement a function of a computing plane of the VNFC. For example, the compute node can implement forwarding traffic and data analysis functions. Each VNFC may include one or more control nodes and one or more compute nodes. Optionally, the VNFC may use a "1+N" mode, that is, the VNFC may include one control node and N compute nodes, where N is a positive integer.

A CaaS manager is a logical entity for managing the container cluster. The CaaS manager may create a container in the container cluster and delete a container from the container cluster. The creating a container may include creating one or more container instances of the container. Creating a container may be creating a replica of a container instance of an existing container, to increase a quantity of container instances of the existing container in the container cluster. In addition, creating a container may alternatively be creating a container instance of a newly added container, to add the container instance of the container to the container cluster. Deleting a container may be deleting one or more container instances of a container. Deleting a container may alternatively be deleting some container instances of the container, to decrease container instances of the existing container in the container cluster. In addition, deleting a container may be deleting all container instances of the container, so that the container does not exist in the container cluster. The CaaS manager may run based on a container engine. Another device outside the container cluster may send a control instruction for a container to the CaaS manager, and the CaaS manager executes the control instruction to manage each container.

A node (English: node) refers to a single device in the cluster. The node may be abstracted as a group of available central processing units (English full name: central processing units, CPU for short) and memory resources. The node may be a physical device or a virtual device. The node may be located locally, for example, the node may be located in a data center. The node may alternatively be located in a cloud, for example, the node may be hosted on a cloud platform. Optionally, an agent may be run on the node, and the agent is configured to manage a container instance running on the node.

Managing means to add a node to a management scope of a management node in the cluster. Generally, after a node is managed by the management node, the node periodically reports a resource usage status to the management node, and the management node can implement an efficient and balanced resource scheduling policy based on the resource usage status reported by each node.

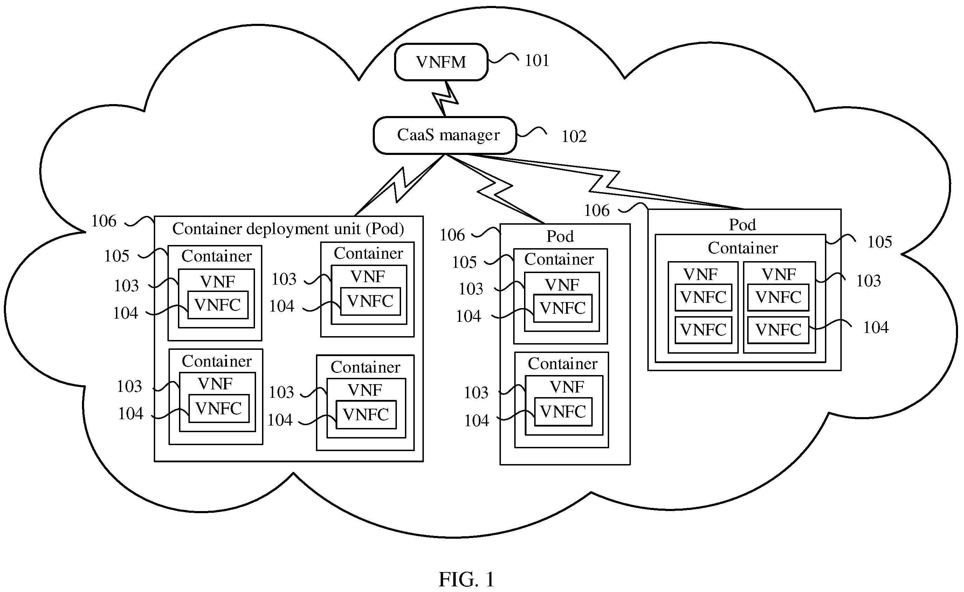

FIG. 1 is a diagram of an NFV system architecture according to an embodiment of this application. The system architecture includes a VNFM 101, a CaaS manager 102, at least one pod 106, at least one VNF 103, and at least one VNFC 104. The VNFM 101 may be connected to the CaaS manager 102 via a network, the CaaS manager 102 may be connected to the pod 106 via the network, the pod 106 may include containers 105, the containers 105 may carry VNFs 103, and the VNFs 103 may include VNFCs 104. The CaaS manager 102 may communicate with the containers 105 through the pod 106, and the CaaS manager 102 may manage the containers 105 by managing the pod 106. Certainly, FIG. 1 is only an optional implementation. In a possible embodiment, the system architecture of the NFV may not include the pod 106. For example, the CaaS manager 102 may be connected to the containers 105 via the network, and the CaaS manager 102 may directly manage the containers 105.

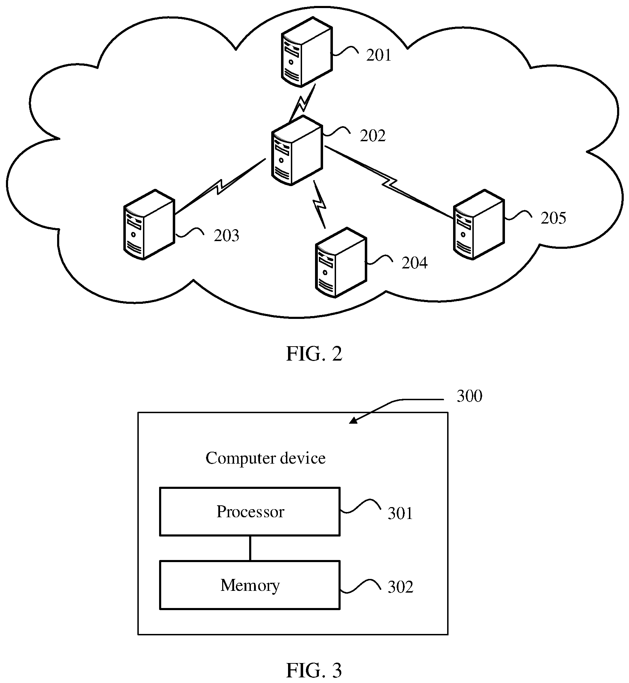

Each VNFC 104 may include one or more application instances, and each application instance of the VNFC 104 may be carried by using a container instance corresponding to the container 105. The VNFM 101 may be carried by using one or more physical devices, or carried by using one or more virtual devices. The CaaS manager 102 may be carried by one or more physical devices, or carried by one or more virtual devices. The VNF 103 may be carried by using one or more physical devices, or carried by using one or more virtual devices. For a structure of the physical device, refer to the following embodiment shown in FIG. 3. The virtual device includes but is not limited to a virtual machine, a container, or a virtualization container in another form. For example, the physical device is a server. FIG. 2 is a schematic diagram of an implementation environment according to an embodiment of this application. The implementation environment includes a plurality of servers. A server 201 is configured to carry the VNFM 101, a server 202 is configured to carry the CaaS manager 102, a server 203 is configured to carry the VNF 103, a server 204 is configured to carry the containers 105, and a server 205 is configured to carry the pod 106.

FIG. 3 is a schematic structural diagram of a computer device according to an embodiment of this application. In a possible embodiment, the computer device may be configured to carry a VNF, and perform steps performed by the VNF in the following method embodiments. In a possible embodiment, the computer device may be configured to carry a VNFM, and perform steps performed by the VNFM in the following method embodiments. In a possible embodiment, the computer device may alternatively be configured to carry a CaaS manager, and perform steps performed by the CaaS manager in the following method embodiments. In a possible embodiment, the computer device may alternatively be configured to carry a pod, and perform steps performed by the pod in the following method embodiments.

The computer device 300 may vary greatly depending on different configurations or performance, and may include one or more processors 301 and one or more volatile or non-volatile memories 302. The one or more volatile or non-volatile memories 302 store at least one instruction, and the at least one instruction is loaded and executed by the one or more processors 301 to implement the methods provided in the following method embodiments. Certainly, the computer device 300 may further have components such as a wired or wireless network interface, a keyboard, and an input/output interface, to perform input/output. The computer device 300 may further include another component configured to implement a device function. Details are not described herein. An operating system running on the computer device 300 may be a Linux operating system, a Windows operating system, or the like. The operating system of the computer device is not limited in the embodiments. The computer device 300 may be a computer device in a cloud environment, a computer device in an edge environment, or a computer device in a terminal environment. A running environment of the computer device 300 is not limited in the embodiments.

In an example embodiment, a computer-readable storage medium is further provided, for example, a memory including an instruction. The instruction may be executed by the processor to complete a VNF lifecycle management method in the following embodiments. For example, the computer-readable storage medium may be a read-only memory (English full name: read-only memory, ROM for short), a random access memory (English full name: random access memory, RAM for short), a compact disc read-only memory (English full name: compact disc read-only memory, CD-ROM for short), a tape, a floppy disk, and an optical data storage device.

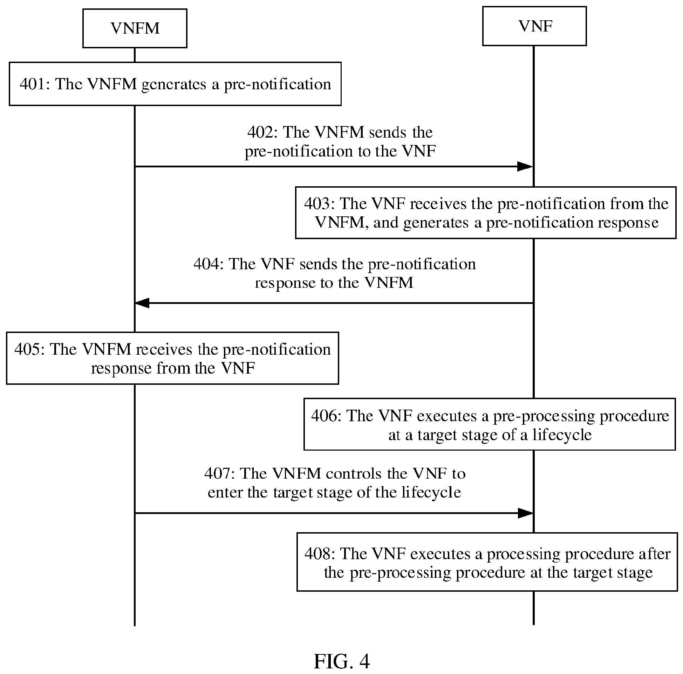

FIG. 4 is a flowchart of a VNF lifecycle management method according to an embodiment of this application. As shown in FIG. 4, the method is performed by a VNF and a VNFM, and includes the following steps.

401: The VNFM generates a pre-notification.

The pre-notification is used to notify that the VNF is going to enter a target stage of a lifecycle. The pre-notification may be recorded as a "pre notify (English: pre notify)" message.

The target stage of the lifecycle may be any stage in the lifecycle of the VNF. The target stage of the lifecycle includes but is not limited to one or more of a scale-out stage, a scale-in stage, a VNFC onboarding stage, a VNFC termination stage, a system instantiation stage, and a system termination stage. Certainly, the scale-out stage, the scale-in stage, the VNFC onboarding stage, the VNFC termination stage, the system instantiation stage, and the system termination stage are merely examples of the target stage, and the target stage is not limited thereto in this embodiment.

The scale-out stage is a stage at which a quantity of application instances of a VNFC in the VNF increases. At the scale-out stage, the VNFM starts one or more application instances of one or more VNFCs in the VNF. Therefore, after the VNF is scaled out, the quantity of application instances increases. For example, for any VNFC in the VNF, it is assumed that the VNFC includes m₁ application instances before scale-out. At the scale-out stage, n₁ application instances of the VNFC are started. After scale-out, the VNFC includes (m₁+n₁) application instances, that is, the n₁ application instances are added to the VNFC through scale-out. m₁ and n₁ are positive integers.

The scale-in stage is a stage at which a quantity of application instances of one or more VNFCs in the VNF decreases. At the scale-in stage, the VNFM deletes one or more application instances of the one or more VNFCs in the VNF. Therefore, after the VNF is scaled in, the quantity of application instances decreases. For example, for any VNFC in the VNF, it is assumed that the VNFC includes m₂ application instances before scale-in. At the scale-in stage, n₂ application instances of the VNFC are deleted. After scale-in, the VNFC includes (m₂-n₂) application instances, in other words, the n₂ application instances are deleted from the VNFC through scale-in. m₂ and n₂ are positive integers. In addition, an application instance that is deleted at the scale-in stage and that is of the VNFC may be a compute node of the VNFC.

The VNFC onboarding stage is a stage at which one or more VNFCs are added to the VNF. After a VNFC is onboarded, a quantity of VNFCs in the VNF increases. For any to-be-onboarded VNFC, the VNFM starts all application instances of the VNFC, to bring the VNFC onboarded.

Optionally, a function of a newly onboarded VNFC may be different from a function of an existing VNFC in the VNF. Therefore, after the VNFC is onboarded, functions of the VNF increases. For example, for the VNF, it is assumed that the VNF includes m₃ VNFCs before VNFCs are onboarded, and the VNF can implement n₃ functions by using the m₃ VNFCs. At the VNFC onboarding stage, m₄ VNFCs are started, and the m₄ VNFCs are used to implement n₄ functions. After VNFCs are onboarded, the VNF includes (m₃+m₄) VNFCs, and can implement (n₃+n₄) functions by using the (m₃+m₄) VNFCs. m₃, m₄, n₃, and n₄ are positive integers.

The VNFC termination stage is a stage at which one or more VNFCs are deleted from the VNF. After a VNFC is terminated, a quantity of VNFCs in the VNF decreases. For any to-be-terminated VNFC, the VNFM deletes all application instances of the VNFC, to bring the VNFC terminated

Optionally, a function of the to-be-terminated VNFC may be different from a function of an existing VNFC in the VNF. Therefore, after the VNFC is terminated, functions of the VNF decreases. For example, for the VNF, it is assumed that the VNF includes m₅ VNFCs before VNFCs are terminated, and the VNF can implement n₅ functions by using the m₅ VNFCs. At the VNFC termination stage, m₆ VNFCs are deleted, and the m₆ VNFCs are used to implement n₆ functions. After the VNFCs are terminated, the VNF includes (m₅-m₆) VNFCs, and can implement (n₅-n₆) functions by using the (m₅-m₆) VNFCs. m₅, m₆, n₅, and n₆ are positive integers, m₅ is greater than m₆, and n₅ is greater than n₆.

The system instantiation stage, also referred to as a VNF initialization stage, is a stage at which all VNFCs in the VNF are onboarded. A process in which the VNFM controls the VNF to enter a system initialization stage may be considered as a process in which a plurality of VNFCs are brought onboarded. A specific procedure is similar to a procedure in which a plurality of VNFCs are brought onboarded, and details are not described herein.

The system termination stage, also referred to as a VNF uninstallation stage, is a stage at which all VNFCs in the VNF are terminated. A process in which the VNFM controls the VNF to enter the system termination stage may be considered as a process in which a plurality of VNFCs are terminated. A specific procedure is similar to a procedure in which a plurality of VNFCs are terminated, and details are not described herein.

The pre-notification may include at least one of a scale-out pre-notification, a scale-in pre-notification, a VNFC onboarding pre-notification, and a VNFC termination pre-notification. The scale-out pre-notification is used to notify that the VNF is going to enter the scale-out stage. The scale-out pre-notification may be recorded as a "pre scale-out notification (English: pre scale out notify)". The scale-in pre-notification is used to notify that the VNF is going to enter the scale-in stage. The scale-in pre-notification may be recorded as a "pre scale in notification (English: pre scale in notify)". The VNFC onboarding pre-notification is used to notify that the VNF is going to enter the VNFC onboarding stage. The VNFC onboarding pre-notification may be recorded as a "pre deploy notification (pre deploy notify)". The VNFC termination pre-notification is used to notify that the VNF is going to enter the VNFC termination stage. The VNFC termination pre-notification may be recorded as a "pre application delete notification (English: pre application delete notify)".

In step 401, before the VNF enters the target stage of the lifecycle, the VNFM may remind in advance, based on the pre-notification, that the VNF is going to enter the target stage of the lifecycle. After receiving the pre-notification, the VNF can predict, based on the pre-notification, that the VNF is going to enter the target stage of the lifecycle, so that the VNF can execute a pre-processing procedure in advance to make preparations for entering the target stage of the lifecycle. Therefore, after the VNF enters the target stage of the lifecycle, a service loss and service flapping can be avoided because preparations are made in advance, thereby implementing smooth service migration. In addition, service processing efficiency can be improved because the pre-processing procedure is executed in advance.

A process of generating the pre-notification includes but is not limited to any one or a combination of the following (1) to (5).

### (1) Generate the pre-notification based on a first VNFC.

The first VNFC is one or more VNFCs included in the VNF. The pre-notification is used to notify the VNF that the first VNFC is going to enter the target stage of the lifecycle. For example, the pre-notification may be used to notify the VNF that the first VNFC is to be scaled out. For another example, the pre-notification may be used to notify the VNF that the first VNFC is to be scaled in. For another example, the pre-notification may be used to notify the VNF that the first VNFC is going to be onboarded. For still another example, the pre-notification may be used to notify the VNF that the first VNFC is to be terminated. The pre-notification may include an identifier of the first VNFC. The identifier of the first VNFC is used to indicate the first VNFC. For example, the identifier of the first VNFC may be a name of the first VNFC, an identification of the first VNFC (English full name: identification, ID for short), or the like. For example, the identifier of the first VNFC may be "VNFC 1", "VNFC 2", or the like.

According to (1), before the first VNFC enters the target stage of the lifecycle, the VNFM may remind the VNF in advance that one or more specific VNFCs (namely, the first VNFC) are going to enter the target stage of the lifecycle, so that the VNF can predict, based on the pre-notification after receiving the pre-notification, that the one or more specific VNFCs (namely, the first VNFC) are going to enter the target stage of the lifecycle, and execute the pre-processing procedure for the one or more specific VNFCs (namely, the first VNFC), thereby making preparations in advance and implementing smooth service migration.

### (2) Generate the pre-notification based on a first application instance.

The first application instance is one or more application instances included in a second VNFC. If this embodiment is applied to the scale-in stage, the first application instance may be some application instances of the second VNFC; and if this embodiment is applied to the VNFC termination stage, the first application instance may be all application instances of the second VNFC. The second VNFC is one or more VNFCs included in the VNF. The second VNFC may be the same as or different from the first VNFC in (1). This is not limited. The pre-notification is used to notify the VNF that the first application instance is to be deleted. The pre-notification may include an identifier of the first application instance. The identifier of the first application instance is used to indicate the first application instance. For example, the identifier of the first application instance may be a name, an ID, or the like of the first application instance. For example, the identifier of the first application instance may be "1-1", "1-2", or the like. "-" represents a connector, a number before the symbol "-" identifies a VNFC, and a number after the symbol "-" identifies an application instance of the VNFC. For example, k-m represents the m^{th} application instance of a VNFC k, where k and m are integers.

According to (2), before the first application instance enters the target stage of the lifecycle, the VNFM may remind the VNF in advance that one or more specific application instances (namely, the first application instance) of one or more specific VNFCs are going to enter the target stage of the lifecycle, so that the VNF can predict, based on the pre-notification after receiving the pre-notification, that the one or more specific application instances (namely, the first application instance) of the one or more specific VNFCs are to be deleted, and execute the pre-processing procedure for the one or more specific application instances (namely, the first application instance) of the one or more specific VNFCs, thereby making preparations in advance and implementing smooth service migration.

### (3) Generate the pre-notification based on a first quantity.

The first quantity is a positive integer. The pre-notification is used to notify the VNF that application instances of the first quantity are to be started. The pre-notification may include the first quantity. For example, if the pre-notification includes "num=3 (num indicates a quantity, and the symbol "=" indicates "equal to")", the VNF is notified, based on the pre-notification, that three application instances are to be started.

According to (3), before the VNF enters the target stage of the lifecycle, the VNFM reminds the VNF in advance that application instances of a specific quantity are to be started, so that the VNF can predict, based on the pre-notification after receiving the pre-notification, that the application instances of the specific quantity are to be started, and execute the pre-processing procedure for the specific quantity (namely, the first quantity) of the to-be-started application instances, thereby making preparations in advance and implementing smooth service migration.

### (4) Generate the pre-notification based on a second quantity.

The second quantity is a positive integer. The pre-notification is used to notify the VNF that application instances of the second quantity are to be deleted. The pre-notification may include the second quantity. For example, if the pre-notification includes "num=3 (num indicates a quantity, and the symbol "=" indicates "equal to")", the VNF is notified, based on the pre-notification, that three application instances are to be deleted.

According to (4), before the VNF enters the target stage of the lifecycle, the VNFM may remind the VNF in advance that application instances of a specific quantity are to be deleted, the VNF can predict, based on the pre-notification after receiving the pre-notification, that the application instances of the quantity are to be deleted, and execute the pre-processing procedure for the specific quantity (namely, the second quantity) of the to-be-deleted application instances, thereby making preparations in advance and implementing smooth service migration.

### (5) Generate the pre-notification based on a first time point.

The first time point is a time point at which the VNF is to be controlled to enter the target stage of the lifecycle. The first time point may include at least one of a time point at which the VNF is to be scaled out, a time point at which the VNF is to be scaled in, a time point at which a VNFC is to be brought onboarded, and a time point at which a VNFC is to be terminated.

The pre-notification is used to notify that the VNF is going to enter the target stage of the lifecycle at the first time point. The pre-notification may include the first time point. For example, if the pre-notification includes "time=18:00", the VNF is notified, based on the pre-notification, that the VNF is going to enter the target stage of the lifecycle at 18:00.

According to (5), before the VNF enters the target stage of the lifecycle, the VNFM may remind the VNF in advance of a specific time point at which the VNF is to be controlled to enter the target stage of the lifecycle, so that the VNF can predict, based on the pre-notification after receiving the pre-notification, that the VNF is going to enter the target stage of the lifecycle at the specific time point, and execute the pre-processing procedure for the specific time point (namely, the first time point) at which the VNF is going to enter the target stage of the lifecycle, thereby making preparations in advance and implementing smooth service migration.

Optionally, an element management (English full name: element management, EM for short) node may send a control instruction to the VNFM. The VNFM may receive the control instruction, and obtain at least one of the identifier of the first VNFC, the identifier of the first application instance, the first quantity, the second quantity, and the first time point from the control instruction. The control instruction may be used to instruct the VNFM to control the first VNFC to enter the target stage of the lifecycle. Alternatively, the control instruction is used to instruct the VNFM to start the application instances of the first quantity. Alternatively, the control instruction is used to instruct the VNFM to delete the application instances of the second quantity. Alternatively, the control instruction is used to instruct the VNFM to delete the first application instance. Optionally, the control instruction may be triggered according to an input operation of a user. Optionally, the VNFM may monitor resource usage of each VNFC in the VNF, and when resource usage of any VNFC falls beyond a preset range, the VNFC is used as the first VNFC. Optionally, the VNFM may monitor resource usage of each application instance of each VNFC in the VNF, and when resource usage of any application instance of any VNFC is less than a resource usage threshold, the application instance of the VNFC is used as the first application instance.

402: The VNFM sends the pre-notification to the VNF.

For a manner of sending the pre-notification, in a possible implementation, the VNF may provide a notification interface, and the VNFM may send the pre-notification to the VNF through the notification interface. In a possible implementation, the VNF and the VNFM may pre-agree on a common message format and a parameter structure for the notification interface. The VNF may define the notification interface, and the VNFM generates the pre-notification based on the pre-agreed common message format and the pre-agreed parameter structure, and sends the pre-notification by invoking the notification interface of the VNF. The notification interface may be a representational state transfer (English full name: representational state transfer, REST for short) interface. The VNFM may invoke a REST interface of the VNF to send the pre-notification to the VNF. The notification interface may include at least one of a scale-out pre-notification (English: pre scale out notify) interface, a scale-in pre-notification (English: pre scale in notify) interface, a deploy pre-notification (English: pre deploy notify) interface, and an application deletion pre-notification (English: pre application delete notify) interface. At the scale-out stage, the VNFM may invoke the scale-out pre-notification interface to send the scale-out pre-notification to the VNF. At the scale-in stage, the VNFM may invoke the scale-in pre-notification interface to send the scale-in pre-notification to the VNF. At the VNFC onboarding stage, the VNFM may invoke the pre deploy notification interface to send the VNFC onboarding pre-notification to the VNF. At the VNFC termination stage, the VNFM may invoke the pre application delete notification interface to send the VNFC termination pre-notification to the VNF.

403: The VNF receives the pre-notification from the VNFM, and generates a pre-notification response.

The pre-notification response is a response message corresponding to the pre-notification, namely, an acknowledgment (English full name: acknowledgment, ack for short) message of the pre-notification.

Different pre-notifications correspond to different pre-notification responses. For example, the pre-notification response may include at least one of a scale-out pre-notification response, a scale-in pre-notification response, a VNFC onboarding pre-notification response, and a VNFC termination pre-notification response. The scale-out pre-notification response is a response message corresponding to the scale-out pre-notification, and the scale-out pre-notification response may be recorded as a "pre scale out notifyack (pre scale out notifyack)". The scale-in pre-notification response is a response message corresponding to the scale-in pre-notification, and the scale-in pre-notification response may be recorded as a "pre scale in notifyack (pre scale in notifyack)". The VNFC onboarding pre-notification response is a response message corresponding to the VNFC onboarding pre-notification, and the VNFC onboarding pre-notification response may be recorded as a "pre deploy notifyack (pre deploy notifyack). The VNFC termination pre-notification response is a response message corresponding to the VNFC termination pre-notification, and the VNFC termination pre-notification response may be recorded as a "pre application delete notifyack (pre application delete notifyack)".

A process of generating the pre-notification response includes but is not limited to any one or a combination of the following (1) to (5).
(1) The VNF generates the pre-notification response based on the first VNFC. The pre-notification response in (1) in step 403 is a response message corresponding to the pre-notification in (1) in step 401.

In a possible embodiment, the pre-notification response indicates that the VNF allows the first VNFC to enter the target stage of the lifecycle. For example, the pre-notification response may indicate that the VNF allows to scale out the first VNFC. For another example, the pre-notification response may indicate that the VNF allows to scale in the first VNFC. The pre-notification response may include an allowance identifier. The allowance identifier is used to indicate allowance. The allowance identifier may be any combination of a digit, a letter, and a character. For example, the allowance identifier may be "OK", "Yes", "1", or the like.

According to this embodiment, the VNF may feed back, to the VNFM, that the first VNFC is allowed to enter the target stage of the lifecycle, so that the VNFM learns that the first VNFC can be controlled to enter the target stage of the lifecycle.

In a possible embodiment, the pre-notification response indicates that the VNF rejects the first VNFC to enter the target stage of the lifecycle. The pre-notification response may include a rejection identifier. The rejection identifier is used to indicate rejection, and the rejection identifier may be any combination of a digit, a letter, and a character. For example, the rejection identifier may be "Not", "No", "0", or the like.

According to this embodiment, the VNF may feed back, to the VNFM, that the first VNFC is rejected to enter the target stage of the lifecycle, so that the VNFM learns that the first VNFC cannot be controlled to enter the target stage of the lifecycle, thereby avoiding a service call loss caused by controlling, by the VNFM, the first VNFC to enter the target stage of the lifecycle.

In a possible embodiment, the pre-notification response may include reason information. The reason information may be a status code or a reason code. The reason information may indicate a reason why the VNF rejects the first VNFC to enter the target stage of the lifecycle. The reason may be determined based on specifications of the first VNFC. For example, the reason may be that a quantity of application instances of the first VNFC is greater than a maximum quantity of application instances of the first VNFC after scale-out. For another example, the reason may be that a quantity of application instances of the first VNFC is less than a minimum quantity of application instances of the first VNFC after scale-in. The maximum quantity of application instances and the minimum quantity of application instances may be read from a template for the first VNFC, or certainly may be determined in another manner. This is not limited in this embodiment.

According to this embodiment, the VNF may feed back, to the VNFM, the reason why the first VNFC is rejected to enter the target stage of the lifecycle, so that the VNFM learns of the reason why the VNF rejects the first VNFC to enter the target stage of the lifecycle, and the VNFM may re-determine, based on the reason, a VNFC that is going to enter the target stage of the lifecycle, and re-initiate a lifecycle management procedure for the VNFC.

In a possible implementation, if the pre-notification is the pre-notification in (1) in step 401, the VNF may parse the pre-notification to obtain the identifier that is of the first VNFC and that is carried in the pre-notification. The VNF may determine the first VNFC based on the identifier of the first VNFC. The VNF may determine whether the first VNFC is allowed to enter the target stage of the lifecycle. When the first VNFC is allowed to enter the target stage of the lifecycle, the VNF generates a pre-notification response that includes the allowance identifier. When the first VNFC is rejected to enter the target stage of the lifecycle, the VNF generates a pre-notification response that includes the rejection identifier and the reason information.

It should be noted that (1) in step 401 and (1) in step 403 are only optional manners of generating the pre-notification and the pre-notification response, rather than mandatory manners. In a possible embodiment, the VNFM does not need to specify a specific VNFC that is in the VNF and that is going to enter the target stage of the lifecycle; instead, the VNF specifies a specific VNFC that is in the VNF and that is going to enter the target stage of the lifecycle, and the VNF feeds back, to the VNFM based on the pre-notification response, the specific VNFC that is going to enter the target stage of the lifecycle, so that the VNFM controls the VNFC specified by the VNF to enter the target stage of the lifecycle.

In a possible embodiment, the VNF may select a third VNFC from at least one VNFC in the VNF, and the VNF may generate the pre-notification response based on the third VNFC. The pre-notification response is used to indicate that the third VNFC is controlled to enter the target stage of the lifecycle. The third VNFC is one or more VNFCs included in the VNF. In a possible implementation, the VNF may obtain an identifier of the third VNFC, and the VNF may generate the pre-notification response based on the identifier of the third VNFC. The pre-notification response may include the identifier of the third VNFC, and the identifier of the third VNFC is used to indicate the third VNFC.

For example, the VNF may obtain a service load of each VNFC, and select the third VNFC based on the service load of each VNFC. For example, in a scale-out scenario, the VNF may select a VNFC with a maximum service load as the third VNFC. For another example, in a scale-in scenario, the VNF may select a VNFC with a minimum service load as the third VNFC.

According to this possible embodiment, the VNF itself may specify one or more specific VNFCs (namely, the third VNFC) that are going to enter the target stage of the lifecycle, thereby improving flexibility, avoiding a call loss caused by controlling, by the VNFM, an inappropriate VNFC to enter the target stage of the lifecycle, and ensuring smooth service migration.

(2) The VNF generates the pre-notification response based on the first application instance. The pre-notification response in (2) in step 403 is a response message corresponding to the pre-notification in (2) in step 401.

In a possible embodiment, the pre-notification response indicates that the VNF allows to delete the first application instance. The pre-notification response may include an allowance identifier. According to this embodiment, the VNF may feed back, to the VNFM, that the first application instance is allowed to be deleted, so that the VNFM learns that the first application instance can be deleted.

In a possible embodiment, the pre-notification response indicates that the VNF rejects to delete the first application instance. For example, the pre-notification response may include a rejection identifier. According to this embodiment, the VNF may feed back, to the VNFM, that the first VNFC is rejected to enter the target stage of the lifecycle, so that the VNFM learns that the first VNFC cannot be controlled to enter the target stage of the lifecycle, thereby avoiding a service call loss caused by controlling the first VNFC to enter the target stage of the lifecycle.

In a possible embodiment, the pre-notification response may include reason information, and the reason information indicates a reason why the VNF rejects to delete the first application instance. The reason may be determined based on specifications of the second VNFC. For example, the reason may be that a quantity of application instances of the second VNFC is less than a minimum quantity of application instances after the first application instance is deleted. Certainly, the reason may alternatively be that normal running of the VNF is to be affected after the first application instance is deleted. This is not specifically limited in this embodiment. According to this embodiment, the VNF may feed back, to the VNFM, the reason why the first application instance is rejected to be deleted, so that the VNFM learns of the reason why the VNF rejects to delete the first application instance, and the VNFM may re-determine, based on the reason, a to-be-deleted application instance, and re-initiate a lifecycle management procedure based on the to-be-deleted application instance.

For a process of generating the pre-notification response, the VNF may determine the first application instance based on the pre-notification. In a possible implementation, if the pre-notification is the pre-notification in (2) in step 401, the VNF may parse the pre-notification to obtain the identifier that is of the first application instance and that is carried in the pre-notification. The VNF may determine the first application instance based on the pre-notification, and determine whether the first application instance is allowed to be deleted. When the first application instance is allowed to be deleted, the VNF generates the pre-notification response that includes the allowance identifier. When the first application instance is rejected to be deleted, the VNF generates the pre-notification response that includes the rejection identifier and the reason information.

It should be noted that (2) in step 401 and (2) in step 403 are only optional manners of generating the pre-notification, rather than mandatory manners. In a possible embodiment, the VNFM does not need to specify a specific to-be-deleted application instance; instead, the VNF specifies a to-be-deleted application instance, and feeds back the to-be-deleted application instance to the VNFM based on the pre-notification response, so that the VNFM deletes the application instance specified by the VNF.

In a possible embodiment, the VNF may select a second application instance from at least one application instance of at least one VNFC in the VNF. For example, the VNF may obtain a service load of each application instance, and select an application instance with a minimum service load as the second application instance based on the service load of each application instance. The VNF may generate the pre-notification response based on the second application instance. For example, the VNF may obtain an identifier of the second application instance, and the VNF may generate the pre-notification response based on the identifier of the second application instance.

The pre-notification response is used to indicate to delete the second application instance. The pre-notification response may include the identifier of the second application instance, and the identifier of the second application instance is used to indicate the second application instance. The second application instance is one or more application instances included in a fourth VNFC. The fourth VNFC is one or more VNFCs included in the VNF.

According to this possible embodiment, the VNF itself may specify one or more specific to-be-deleted application instances (namely, the second application instance). This improves flexibility, and avoids a call loss and performance compromise caused by deleting an inappropriate application instance by the VNFM.

(3) The VNF generates the pre-notification response based on the first quantity. The pre-notification response in (3) in step 403 is a response message corresponding to the pre-notification in (3) in step 401.

In a possible embodiment, the pre-notification response indicates that the VNF allows to start the application instances of the first quantity, and the pre-notification response may include an allowance identifier. According to this possible embodiment, the VNF may feed back, to the VNFM, that the application instances of the first quantity are allowed to be started, so that the VNFM learns that the application instances of the first quantity can be started.

In a possible embodiment, the pre-notification response indicates that the VNF rejects to start the application instances of the first quantity. For example, the pre-notification response may include a rejection identifier. According to this possible embodiment, the VNF may feed back, to the VNFM, that the application instances of the first quantity are rejected to be started, so that the VNFM learns that the application instances of the first quantity cannot be started, thereby avoiding adverse impact on performance of the VNF caused by starting the application instances of the first quantity.

In a possible embodiment, the pre-notification response may include reason information, and the reason information indicates a reason why the VNF rejects to start the application instances of the first quantity. The reason may be determined based on specifications of a VNFC. For example, the reason may be that a quantity of application instances of the VNFC is greater than a maximum quantity of application instances after the application instances of the first quantity are started.

For a process of generating the pre-notification response, in a possible implementation, if the pre-notification is the pre-notification in (3) in step 401, the VNF may parse the pre-notification to obtain the first quantity carried in the pre-notification, and the VNF may determine whether the application instances of the first quantity are allowed to be started. When the application instances of the first quantity are allowed to be started, the VNF generates the pre-notification response that includes the allowance identifier. When the application instances of the first quantity are rejected to be started, the VNF generates the pre-notification response that includes the rejection identifier and the reason information.

According to this possible embodiment, the VNF may feed back, to the VNFM, the reason why the application instances of the first quantity are rejected to be started, so that the VNFM learns of the reason why the VNF rejects to start the application instances of the first quantity, and the VNFM may re-determine, based on the reason, a quantity of to-be-started application instances, and re-initiate a lifecycle management procedure based on the quantity of to-be-started application instances.

It should be noted that (3) in step 401 and (3) in step 403 are only optional manners of generating the pre-notification, rather than mandatory manners. In a possible embodiment, the VNFM does not need to specify a quantity of to-be-started application instances; instead, the VNF specifies the quantity of to-be-started application instances, and feeds back, to the VNFM, the quantity of the to-be-started application instances based on the pre-notification response, so that the VNFM starts the application instances of the quantity specified by the VNF.

In a possible embodiment, the VNF may determine a third quantity, and the VNF may generate the pre-notification response based on the third quantity. The pre-notification response is used to indicate to start application instances of the third quantity. The pre-notification response may include the third quantity. For example, if the pre-notification response includes "num=3 (num indicates a quantity, and the symbol"=" indicates "equal to")", the pre-notification response indicates the VNFM to start three application instances.

The third quantity is a positive integer. Optionally, the third quantity may be a difference between a maximum quantity of application instances and a current quantity of application instances. Correspondingly, for any VNFC, the VNF may obtain the maximum quantity of application instances of the VNFC and the current quantity of application instances, and calculate the difference between the two quantities as the third quantity. For example, assuming that a maximum quantity of compute nodes of a VNFC in the VNF is 10, and the VNFC currently includes three compute nodes, the VNF may calculate that the third quantity is 10-3=7. The pre-notification response includes "num=7". The VNF may indicate, based on the pre-notification response, the VNFM to start seven compute nodes. Certainly, this manner of calculating the third quantity is merely an example, and the third quantity may alternatively be determined in another manner. For example, the third quantity may be a difference between a target quantity of application instances and the current quantity of application instances. The target quantity may be a quantity of application instances required to carry a preset quantity of services, or the target quantity may be a quantity input by the user. This is not limited in this embodiment.

According to this possible embodiment, the VNF itself may determine a quantity of to-be-started application instances. This improves flexibility of lifecycle management for the VNF, and avoids a waste of resources caused when application instances of an excessively large quantity are started. In addition, this can also avoid the following case: Because application instances of an excessively small quantity are started, a lifecycle management procedure needs to be re-initiated to start application instances, resulting in low efficiency in starting application instances.

(4) The VNF generates the pre-notification response based on the second quantity. The pre-notification response in (4) in step 403 is a response message corresponding to the pre-notification in (4) in step 401.

In a possible embodiment, the pre-notification response indicates that the VNF allows to delete the application instances of the second quantity, and the pre-notification response may include an allowance identifier. According to this possible embodiment, the VNF may feed back, to the VNFM, that the application instances of the second quantity are allowed to be deleted, so that the VNFM learns that the application instances of the second quantity can be deleted.

In a possible embodiment, the pre-notification response indicates that the VNF rejects to delete the application instances of the second quantity. For example, the pre-notification response may include a rejection identifier. According to this possible embodiment, the VNF may feed back, to the VNFM, that the application instances of the second quantity are rejected to be deleted, so that the VNFM learns that the application instances of the second quantity cannot be deleted, thereby avoiding adverse impact on performance of the VNF caused by deleting the application instances of the second quantity.

In a possible embodiment, the pre-notification response may include reason information, and the reason information indicates a reason why the VNF rejects to delete the application instances of the second quantity. The reason may be determined based on specifications of a VNFC. For example, the reason may be that a quantity of application instances of the VNFC is less than a minimum quantity of application instances after the application instances of the second quantity are deleted. According to this possible embodiment, the VNF may feed back, to the VNFM, the reason why the VNF rejects to delete the application instances of the second quantity, so that the VNFM learns of the reason why the VNF rejects to delete the application instances of the second quantity, and the VNFM may re-determine, based on the reason, a quantity of to-be-deleted application instances, and re-initiate a lifecycle management procedure based on the quantity of to-be-deleted application instances.

In a possible implementation, if the pre-notification is the pre-notification in (2) in step 401, the VNF may parse the pre-notification to obtain the second quantity carried in the pre-notification, and the VNF may determine whether the application instances of the second quantity are allowed to be deleted. When the application instances of the second quantity are allowed to be deleted, the VNF generates the pre-notification response that includes the allowance identifier. When the application instances of the second quantity are rejected to be deleted, the VNF generates the pre-notification response that includes the rejection identifier and the reason information.

It should be noted that the foregoing (4) is only an optional manner of generating the pre-notification response, rather than a mandatory manner. In a possible embodiment, the VNFM does not need to determine a specific quantity of to-be-deleted application instances; instead, the VNF specifies the quantity of to-be-deleted application instances, and feeds back, to the VNFM, the quantity of to-be-deleted application instances based on the pre-notification response, so that the VNFM deletes the application instances of the quantity specified by the VNF.

In a possible embodiment, the VNF may determine a fourth quantity, and the VNF may generate the pre-notification response based on the fourth quantity. The pre-notification response is used to indicate to delete application instances of the fourth quantity. The pre-notification response may include the fourth quantity. For example, if the pre-notification response includes "num=3 (num indicates a quantity, and the symbol "=" indicates "equal to")", the pre-notification response indicates the VNFM to delete three application instances.

The fourth quantity is a positive integer. Optionally, the fourth quantity may be a difference between a current quantity of application instances and a minimum quantity of application instances. Correspondingly, for any VNFC, the VNF may obtain the current quantity of application instances and the minimum quantity of application instances of the VNFC, and calculate the difference between the two quantities as the fourth quantity. For example, assuming that there are three compute nodes of a VNFC currently, and a minimum quantity of compute nodes of the VNFC is 1, the fourth quantity may be 2. Certainly, this manner of calculating the fourth quantity is merely an example, and the fourth quantity may alternatively be determined in another manner. For example, the fourth quantity may be a difference between the current quantity of application instances and a target quantity of application instances.

According to this possible embodiment, the VNF itself may determine a quantity of to-be-deleted application instances. This improves flexibility, and avoids a call loss and performance exception caused by deleting application instances of an excessively large quantity. In addition, this can also avoid the following case: Because application instances of an excessively small quantity are deleted, a lifecycle management procedure needs to be re-initiated to delete application instances, resulting in low efficiency in deleting application instances.

(5) The VNF generates the pre-notification response based on the first time point.

The pre-notification response in (5) in step 403 is a response message corresponding to the pre-notification in (5) in step 401.

In a possible embodiment, the pre-notification response indicates that the VNF is allowed to enter the target stage of the lifecycle at the first time point. For example, the pre-notification response may include an allowance identifier. According to this possible embodiment, the VNF may feed back, to the VNFM, that the VNF is allowed to enter the target stage of the lifecycle at the first time point, so that the VNFM learns that the VNF can be controlled, at the first time point, to enter the target stage of the lifecycle.

In a possible embodiment, the pre-notification response indicates that the VNF is rejected to enter the target stage of the lifecycle at the first time point. For example, the pre-notification response may include a rejection identifier. According to this possible embodiment, the VNF may feed back, to the VNFM, that the VNF is rejected to enter the target stage of the lifecycle at the first time point, so that the VNFM learns that the VNF cannot be controlled, at the first time point, to enter the target stage of the lifecycle, thereby avoiding adverse impact on performance of the VNF caused by controlling, at the first time point, the VNF to enter the target stage of the lifecycle.

In a possible embodiment, the pre-notification response may include reason information, and the reason information indicates a reason why the VNF is rejected to enter the target stage of the lifecycle at the first time point. According to this possible embodiment, the VNF may feed back, to the VNFM, the reason why the VNF is rejected to enter the target stage of the lifecycle at the first time point, so that the VNFM learns of the reason why the VNF is rejected to enter the target stage of the lifecycle at the first time point. Based on this, the VNFM may re-determine a time point at which the VNFM controls the VNF to enter the target stage of the lifecycle, and re-initiate a lifecycle management procedure.

In a possible implementation, if the pre-notification is the pre-notification in (5) in step 401, the VNF may parse the pre-notification to obtain the first time point carried in the pre-notification, and determine whether the VNF is allowed to enter the target stage of the lifecycle at the first time point. When the VNF is allowed to enter the target stage of the lifecycle at the first time point, the VNF generates the pre-notification response. When the VNF is rejected to enter the target stage of the lifecycle at the first time point, the VNF generates the pre-notification response that includes the rejection identifier and the reason information.

It should be noted that the foregoing (5) is only an optional manner of generating the pre-notification response, rather than a mandatory manner. In a possible embodiment, the VNFM does not need to specify a specific time point at which the VNFM controls the VNF to enter the target stage of the lifecycle; instead, the VNF itself specifies a specific time point at which the VNFM controls the VNF to enter the target stage of the lifecycle, and feeds back, to the VNFM based on the pre-notification response, the time point at which the VNF is going to enter the target stage of the lifecycle, so that the VNFM controls, at the time point, the VNF to enter the target stage of the lifecycle.

In a possible embodiment, the VNF may determine a second time point, and the VNF generates the pre-notification response based on the second time point. The second time point is a time point at which the VNF is allowed to enter the target stage of the lifecycle. The pre-notification response is used to indicate the VNFM to control, at the second time point, the VNF to enter the target stage of the lifecycle. The pre-notification response may include the second time point. According to this possible embodiment, the VNF itself may specify the specific time point at which the VNF enters the target stage of the lifecycle, thereby improving flexibility.

It should be noted that the foregoing (1) to (5) may be combined in any manner, and two or more of the foregoing (1) to (5) may be combined. This is not limited. For example, the foregoing (1), (2), and (4) are combined. The VNF may obtain the identifier of the first VNFC, the first application instance, and the second quantity based on the pre-notification, and determine whether the VNF is allowed to delete the first application instances of the first VNFC that are of the second quantity. When the first application instances of the first VNFC that are of the second quantity are allowed to be deleted, the pre-notification response including the allowance identifier is generated. When the first application instances of the first VNFC that are of the second quantity are rejected to be deleted, the pre-notification response including the rejection identifier and the reason information is generated. In this way, the VNFM may specify, based on the pre-notification, one or more specific to-be-deleted application instances of one or more specific VNFCs, and the VNF may feed back, to the VNFM based on the pre-notification response, whether the VNFM is allowed to delete the one or more specific to-be-deleted application instances; and further may feed back, to the VNFM, a reason why the VNFM is rejected to delete the one or more specific to-be-deleted application instances, so that the VNF and the VNFM determine, through negotiation, to delete one or more specific to-be-deleted application instances. Certainly, the foregoing combination manner is merely an example, and other combination manners are not described herein.

404: The VNF sends the pre-notification response to the VNFM.

It should be understood that a sequence of step 403, step 404, and step 406 is not limited in this embodiment. In some other embodiments, the VNF may first execute the pre-processing procedure, and then the VNF generates the pre-notification response, and sends the pre-notification response to the VNFM. Sequence numbers of the foregoing steps in this embodiment do not indicate an execution sequence. The execution sequence of the steps should be determined based on functions and internal logic of the steps, and should not be construed as any limitation on the implementation process of this embodiment of this application.

405: The VNFM receives the pre-notification response from the VNF.

Optionally, the VNFM may output the pre-notification response. Optionally, the VNFM may display the pre-notification response on an interface, so that operation and maintenance engineers learn of a feedback, from the VNF, of the lifecycle management procedure. The interface may be an interface provided by an operation and maintenance platform, or certainly may be another interface. This is not limited.

In an example scenario, if the pre-notification response includes a failure identifier, the VNFM may display that current lifecycle management fails, and indicate at least one of information about the reason why the VNF rejects the first VNFC to enter the target stage of the lifecycle, information about the reason why the VNF rejects to delete the first application instance, the reason why the VNF rejects to start the application instances of the first quantity, the reason why the VNF rejects to delete the application instances of the second quantity, and information about the reason why the VNF is rejected to enter the target stage of the lifecycle at the first time point, so that the operation and maintenance engineers learn of the rejection reasons of the VNF, and trigger input operations based on the reasons, for example, modify the first VNFC that is going to enter the target stage of the lifecycle to another VNFC that is going to enter the target stage of the lifecycle, modify the first application instance that is to be deleted to another application instance that is to be deleted, modify the to-be-started application instances of the first quantity to to-be-started application instances of another quantity, modify the to-be-deleted application instances of the second quantity to to-be-deleted application instances of another quantity, and modify the first time point at which the VNF is required to enter the target stage of the lifecycle to another time point at which the VNF is required to enter the target stage of the lifecycle, so as to trigger the VNFM to re-initiate lifecycle management procedures for the another VNFC, for deleting the another application instance, for starting or deleting the application instances of the another quantity, and for entering the target stage of the lifecycle at the another time point.

406: The VNF executes the pre-processing procedure at the target stage of the lifecycle.

In a possible implementation, step 406 may include any one or a combination of the following (A) to (D).
(A) The VNF executes a pre-processing procedure at the scale-out stage.

In a possible implementation, (A) may include either or both of (A1) and (A2).

(A1) The VNF obtains a service migration plan based on the scale-out pre-notification.

The service migration plan indicates to migrate a service to a to-be-started application instance of a VNFC. In terms of service types, the service migration plan may include at least one of a traffic migration plan and a data migration plan. The traffic migration plan indicates to migrate traffic to a to-be-started application instance of a VNFC. The data migration plan indicates to migrate data to a to-be-started application instance of a VNFC. In terms of migration manners, the service migration plan may include at least one of a service balancing plan and a service access plan. The service balancing plan is used to migrate services of a started application instance of a VNFC to the to-be-started application instance of the VNFC, so that the to-be-started application instance shares the services of the started application instance. Specifically, the service migration plan may be used to indicate at least one of the started application instance of the VNFC, a quantity of services to be migrated from the started application instance of the VNFC, and a sequence of migrating services running on the started application instance of the VNFC.

For example, it is assumed that a VNFC in the VNF has n compute nodes before scale-out, and the VNF predicts, according to a scale-out plan, that one compute node of the VNFC is going to be started, that is, the VNFC is going to have (n+1) compute nodes through scale-out. In this case, it may be planned that traffic of the n compute nodes is evenly migrated to the (n+1) compute node, or that traffic of the n compute nodes is migrated to the (n+1) compute node based on a specified proportion. The service access plan is used to migrate, to a to-be-started application instance, services on a started application instance that are going to access a VNFC, so that the to-be-started application instance accepts the to-be-generated services. For example, it is assumed that a VNFC in the VNF has n compute nodes before scale-out, and the VNF predicts, according to the scale-out plan, that one compute node of the VNFC is going to be started, that is, the VNFC is going to have (n+1) compute nodes through scale-out. In this case, it is planned that services to be generated in next two hours may be accessed to the (n+1)^{th} compute node, where n is a positive integer.

The VNF may plan, by preparing the service migration plan, a pace of migrating service traffic to remaining compute nodes in advance before scale-out, to avoid the following case: Service migration is executed excessively fast and service migration is not completed during service migration that is temporarily performed after scale-out, that is, avoid a call loss caused when service migration is executed excessively fast or service migration is not completed, thereby ensuring service processing quality.

(A2) The VNF obtains first control information based on the scale-out pre-notification.

The first control information is used to control the to-be-started application instance of the VNFC to process a service. For example, the first control information may be used to indicate at least one of whether to control the newly-added application instance of the VNFC, a manner of controlling the newly-added application instance of the VNFC, and management data of the newly-added application instance of the VNFC. The management data may be an identifier of the newly-added application instance of the VNFC. For example, the management data may be an ID of the newly-added application instance.

Optionally, after obtaining the first control information, the VNF may cache the first control information, so that the VNF may read the first control information from a cache after scale-out, and use the first control information to control the to-be-started application instance of the VNFC to process the service.

For a process of allocating identifiers of newly-added application instances, the VNF may determine the first VNFC and the first quantity based on the scale-out pre-notification, and allocate identifiers of the application instances of the first quantity based on identifiers that are of application instances and that have been allocated to the first VNFC. For example, it is assumed that a VNFC 1 of the VNF already includes three application instances, and identifiers of the three application instances are a VNFC 1-1, a VNFC 1-2, and a VNFC 1-3. The VNF determines, based on the scale-out pre-notification, that the first quantity is 2, and the VNF may allocate identifiers of two application instances: a VNFC 1-4 and a VNFC 1-5.

(B) The VNF executes a pre-processing procedure at the scale-in stage.

In a possible implementation, (B) may include either or both of (B1) and (B2).

(B1) The VNF migrates a service of a to-be-deleted application instance of a VNFC based on the scale-in pre-notification.

The VNF may determine, based on the scale-in pre-notification, the to-be-scaled-in VNFC and the to-be-deleted application instance of the VNFC. The VNF may determine, based on the to-be-scaled-in VNFC and the to-be-deleted application instance, an application instance other than the to-be-deleted application instance of the to-be-scaled-in VNFC, and migrate a service of the to-be-deleted application instance of the VNFC to the application instance of the VNFC, so that the service of the to-be-deleted application instance of the VNFC is processed by the application instance of the same VNFC.

For example, it is assumed that a VNFC in the VNF has n compute nodes before scale-in, and the VNF predicts, based on the scale-in pre-notification that the n^{th} compute node of the VNFC is going to be deleted, that is, the VNFC in the VNF has (n-1) compute nodes after scale-in. In this case, traffic of the n^{th} compute node may be evenly distributed to the remaining (n-1) compute nodes, or traffic of the n^{th} compute node may be migrated to the remaining (n-1) compute nodes based on a specified proportion. In an example embodiment, it is assumed that a VNFC 1 needs to be scaled in, and application instances of the VNFC 1 include a compute node 1-1, a compute node 1-2, and a compute node 1-3. The VNF determines, based on the scale-in pre-notification, that the VNFM is going to delete the compute node 1-1, and the VNF may migrate services on the compute node 1-1 to the compute node 1-2 and the compute node 1-3 in advance.

The services of the to-be-deleted application instances are migrated in advance, so that the following case can be avoided: Service migration is executed excessively fast and service migration is not completed during service migration that is temporarily performed after scale-in, that is, avoid a call loss caused when service migration is executed excessively fast or service migration is not completed, thereby ensuring smooth service migration, and avoiding service loss and flapping.

(B2) The VNF backs up data of the to-be-deleted application instance based on the scale-in pre-notification.

The data of the to-be-deleted application instance may include at least one of service data, status data, configuration data, and attribute data. A type of the data of the application instance is not specifically limited in this embodiment.

For a specific process of backing up the data, in a possible implementation, the VNF may determine, based on the scale-in pre-notification, a to-be-scaled-in VNFC and the to-be-deleted application instance of the VNFC. The VNF may read data of the to-be-deleted application instance from the to-be-deleted application instance, back up the data of the to-be-deleted application instance, to obtain one or more copies of the data, and persistently store the one or more copies of the data.

The data of the to-be-deleted application instance is backed up in advance, so that data security of the application instance can be improved, and the data of the application instance can be prevented from being lost when the application instance is deleted, thereby making preparations in advance for scale-in.

(C) The VNF executes a pre-processing procedure at the VNFC onboarding stage.

In a possible implementation, (C) may include either or both of (C1) and (C2).

(C1) The VNF obtains an interaction plan based on the VNFC onboarding pre-notification.

The interaction plan is used to control a to-be-onboarded VNFC to interact with an onboarded VNFC. For example, it is assumed that the VNF includes three onboarded VNFCs: a VNFC 1, a VNFC 2, and a VNFC 3, and a VNFC 4 is going to be onboarded. In this case, the interaction plan may be used to control the VNFC 4 to interact with the VNFC 1, the VNFC 4 to interact with the VNFC 2, and the VNFC 4 to interact with the VNFC 3.

The interaction plan may indicate an interaction procedure initiated by the to-be-onboarded VNFC to the onboarded VNFC, or may indicate an interaction procedure initiated by the onboarded VNFC to the to-be-onboarded VNFC. In terms of content of the interaction plan, the interaction plan may include at least one of an identifier of at least one onboarded VNFC and a sequence for which the at least one onboarded VNFC interacts with the to-be-onboarded VNFC. The interaction plan may include at least one of a service plan and a resource plan.

Optionally, the service plan may include at least one of a service subscription plan, a service registration plan, and a service application plan. For example, the service registration plan may include a plan in which the at least one onboarded VNFC registers a service with the to-be-onboarded VNFC and a plan in which the to-be-onboarded VNFC registers a service with the at least one onboarded VNFC. The service subscription plan may include a plan in which the onboarded VNFC subscribes to a service of the to-be-onboarded VNFC and a plan in which the to-be-onboarded VNFC subscribes to a service of the onboarded VNFC.

Optionally, the resource plan may include at least one of a resource application plan and a resource association plan. The resource application plan may include at least one of a plan in which the onboarded VNFC applies to the to-be-onboarded VNFC for a resource and a plan in which the to-be-onboarded VNFC applies to the onboarded VNFC for a resource.

The VNF may plan, by preparing the interaction plan, a pace of interaction between the to-be-onboarded VNFC and the onboarded VNFC before the VNFC is onboarded, so that the VNF controls the newly onboarded VNFC to successively interact with other VNFCs according to the interaction plan after the VNFC is onboarded, thereby preventing procedure congestion caused when the newly onboarded VNFC interacts with a plurality of other VNFCs simultaneously after the VNFC is onboarded, and improving robustness.

(C2) The VNF obtains second control information based on the VNFC onboarding pre-notification.

The second control information is used to control a to-be-onboarded VNFC to process a service. For example, the second control information may be used to indicate at least one of whether to control the to-be-onboarded VNFC, a manner of controlling the to-be-onboarded VNFC, and management data of the to-be-onboarded VNFC. The management data may be an identifier of the to-be-onboarded VNFC. For example, the management data may be an id of the to-be-onboarded VNFC.

Optionally, after obtaining the second control information, the VNF may cache the second control information, so that the VNF may read the second control information from a cache after the VNFC is onboarded, and use the second control information to control the newly onboarded VNFC to process the service.

For a process of obtaining the second control information, an example in which the second control information is an identifier of the to-be-onboarded VNFC is used. The VNF may allocate a VNFC identifier to the to-be-onboarded VNFC based on an allocated identifier of a VNFC. For example, assuming that the VNF includes three onboarded VNFCs, and identifiers of the three VNFCs are a VNFC 1, a VNFC 2, and a VNFC 3, the VNF may allocate identifiers of two VNFCs, where the identifiers of the two VNFCs are a VNFC 4 and a VNFC 5.

(D) The VNF executes a pre-processing procedure at the VNFC termination stage.

In a possible implementation, (D) may include either or both of (D1) and (D2).

(D1) The VNF releases resources of a to-be-terminated VNFC based on the VNFC termination pre-notification.

The resources may include at least one of a computing resource, a storage resource, and a network resource. In addition, the to-be-terminated VNFC may have one or more application instances, and the releasing resources of the to-be-terminated VNFC may include releasing resources of each application instance of the to-be-terminated VNFC.

(D2) The VNF backs up data of the to-be-terminated VNFC based on the VNFC termination pre-notification.

The data of the to-be-terminated VNFC may include at least one of service data, status data, configuration data, and attribute data. A type of the data of the VNFC is not specifically limited in this embodiment.

For a specific process of backing up the data, in a possible implementation, the VNF may determine, based on the VNFC termination pre-notification, the to-be-terminated VNFC. The VNF may read the data of the to-be-terminated VNFC from the to-be-terminated VNFC, back up the data of the to-be-terminated VNFC, to obtain one or more copies of the data, and persistently store the one or more copies of the data.

The VNF backs up the data of the to-be-terminated VNFC in advance, to improve security of the data of the VNFC, and prevent the data of the VNFC from being lost when the VNFC is terminated, thereby making preparations in advance for bringing the VNFC terminated.

Optionally, step 406 may include any one or a combination of the following (1) to (5).
(1) When the pre-notification includes the identifier of the first VNFC, the VNF may parse the pre-notification to obtain the identifier of the first VNFC carried in the pre-notification, and determine the first VNFC based on the identifier of the first VNFC, and execute the pre-processing procedure at the target stage of the lifecycle for the first VNFC.
(2) When the pre-notification includes the identifier of the first application instance, the VNF may parse the pre-notification to obtain the identifier of the first application instance carried in the pre-notification, and determine the first application instance based on the identifier of the first application instance. The VNF executes the pre-processing procedure at the target stage of the lifecycle for the first application instance.
(3) When the pre-notification includes the first quantity, the VNF may parse the pre-notification to obtain the first quantity carried in the pre-notification, and execute the pre-processing procedure at the target stage of the lifecycle based on the first quantity.
(4) When the pre-notification includes the second quantity, the VNF may obtain the second quantity based on the pre-notification, and execute the pre-processing procedure at the target stage of the lifecycle based on the second quantity.
(5) When the pre-notification includes the first time point, the VNF may obtain the first time point based on the pre-notification, and execute the pre-processing procedure at the target stage of the lifecycle based on the first time point.

It should be noted that the foregoing (A) to (D) in step 406 may be combined with the foregoing (1) to (5) in step 406 in any manner. One or more of the foregoing (A) to (D) in step 406 may be combined with one or more of the foregoing (1) to (5) in step 406. This is not limited. For example, (A1) and (3) are combined. The VNF may obtain the first quantity based on the scale-out pre-notification, and obtain the service migration plan based on the first quantity. In this way, the VNF may learn of in advance, before scale-out, a quantity of VNFCs to be obtained through scale-out, and further prepare a pace of migrating services based on the quantity of to-be-scaled-out VNFCs. Therefore, after the VNF is scaled out, the following case can be avoided: stateful container load rebalancing needs to be performed each time a VNFC is started, thereby improving service balancing efficiency. For example, (D2) and (1) are combined. The VNF may determine the first VNFC based on the VNFC termination pre-notification, and back up data of the first VNFC. In this way, the VNF may learn of in advance the to-be-terminated VNFC before the VNFC is terminated, and further back up the data of the VNFC in advance. Therefore, after the VNFC is terminated, a data loss caused when the VNFC is forcibly terminated can be avoided.

Optionally, when the VNF executes the pre-processing procedure, the VNF may generate pre-processing progress information based on progress of the pre-processing procedure, and send the pre-processing progress information to the VNFM. The pre-processing progress information is used to indicate the progress of executing the pre-processing procedure by the VNF. The pre-processing progress information may be positively correlated to completed workload of the pre-processing procedure, and negatively correlated to total workload that needs to be completed in the pre-processing procedure. Specifically, the pre-processing progress information may include at least one of scale-out pre-processing progress information, scale-in pre-processing progress information, VNFC onboarding pre-processing progress information, and VNFC termination pre-processing progress information.

The pre-processing progress information may be data in a percentage form, to specifically indicate a percentage of the completed workload in the pre-processing procedure to the total workload that needs to be completed in the pre-processing procedure. For example, the pre-processing progress information may be 40% or 60%. If the pre-processing progress information is 100%, it indicates that the pre-processing procedure has been completed. Certainly, the pre-processing progress information may alternatively be data in a ratio form. For example, the pre-processing progress information may be a ratio of the completed workload of the VNF pre-processing procedure to the total workload that needs to be completed in the pre-processing procedure.

For a manner of sending the pre-processing progress information, optionally, the VNFM may provide a notification interface, and the VNF may send the pre-processing progress information to the VNFM through the notification interface. The VNF and the VNFM may pre-agree on a common message format and a parameter structure for the notification interface. The VNFM may define the notification interface, and the VNF invokes the notification interface of the VNFM to generate the pre-processing progress information based on the pre-agreed common message format and the pre-agreed parameter structure, and sends the pre-processing progress information. The notification interface provided by the VNFM may be a REST interface. Correspondingly, the VNF may invoke the REST interface provided by the VNFM, to send the pre-processing progress information to the VNFM. In a possible implementation, the VNFM may provide a message notify completion (English: notify completion) interface, and the VNF may invoke the notify completion interface of the VNFM to send the pre-processing progress information to the VNFM.

Optionally, the VNF may generate a pre-processing completion message, where the pre-processing completion message includes the pre-processing progress information. The VNF may send the pre-processing progress information to the VNFM by sending the pre-processing completion message to the VNFM. The pre-processing completion message may be recorded as a "completed (English: completed)" message.

407: The VNFM controls the VNF to enter the target stage of the lifecycle.

Controlling the VNF to enter the target stage of the lifecycle may include any one or a combination of (A) to (D).
(A) The VNFM scales out the VNF.
   The VNFM starts one or more application instances of one or more VNFCs in the VNF. Specifically, the VNFM starts an application instance of a to-be-scaled-out VNFC, so that a quantity of application instances of the VNFC increases.
(B) The VNFM scales in the VNF.
   The VNFM deletes one or more application instances of one or more VNFCs in the VNF. Specifically, the VNFM deletes an application instance of a to-be-scaled-in VNFC, so that a quantity of application instances of the VNFC decreases.
(C) The VNFM brings a VNFC in the VNF onboarded.

The VNFM starts all application instances of the to-be-onboarded VNFC, to bring the VNFC onboarded. In a possible implementation, a software package of the to-be-onboarded VNFC may be uploaded to a software repository, and the VNFC is instantiated based on the software package of the to-be-onboarded VNFC, to obtain an application instance of the running-state VNFC. In another possible implementation, the software package of the to-be-onboarded VNFC may be pre-stored on a physical device or a virtual device that carries a VNFC, and the software package of the to-be-onboarded VNFC is in an inactive state. When the VNFC needs to be brought onboarded, an activation instruction may be sent to the physical device or the virtual device. When receiving the activation instruction, the physical device or the virtual device may activate the software package of the to-be-onboarded VNFC, and instantiate the VNFC by using the software package of the to-be-onboarded VNFC, to obtain an application instance of the running-state VNFC. The software package may be an image file of the to-be-onboarded VNFC.

Running of a node of the to-be-onboarded VNFC may be planned or may be temporarily applied for. In a possible implementation, one or more nodes may be reserved in a cluster, and the reserved node may not need to run service load or run a relatively little service load. In this case, when a VNFC needs to be brought onboarded, the to-be-onboarded VNFC may be directly run on the reserved node. When resources are insufficient, resources may be applied for, the resources that are applied for may be used to create a node in the cluster, and the to-be-onboarded VNFC is run on the created node.

Optionally, if any VNFC can independently provide a function, the VNFC can provide the new function of the VNFC after the VNFC is onboarded. If a plurality of VNFCs are mutually dependent in terms of functions, the plurality of VNFCs may jointly provide a new function after the plurality of mutually dependent VNFCs are onboarded.

(D) The VNFM brings a VNFC in the VNF terminated.

The VNFM deletes all application instances of the to-be-terminated VNFC to bring the VNFC terminated.

Optionally, the VNFM may receive the pre-processing progress information of the VNF, and determines, based on the pre-processing progress information, that the VNF has executed the pre-processing procedure at the target stage. After that, the VNFM controls the VNF to enter the target stage of the lifecycle. The VNFM may receive the pre-processing completion message of the VNF, and obtain the pre-processing progress information of the VNF based on the pre-processing completion message.

Optionally, a process in which the VNFM controls the VNF to enter the target stage of the lifecycle may include any one or a combination of the following (1) to (5).
(1) When the pre-notification response indicates that the VNF allows the first VNFC to enter the target stage of the lifecycle, for example, when the pre-notification response includes the allowance identifier, the VNFM may control, based on the pre-notification response, the first VNFC in the VNF to enter the target stage of the lifecycle.

When the pre-notification response indicates to control the third VNFC to enter the target stage of the lifecycle, for example, when the pre-notification response includes the identifier of the third VNFC, the VNFM may determine the third VNFC based on the pre-notification response, and control the third VNFC in the VNF to enter the target stage of the lifecycle.

When the pre-notification response indicates at least one of the following: That the VNF rejects the first VNFC to enter the target stage of the lifecycle and the reason why the VNF rejects the first VNFC to enter the target stage of the lifecycle, for example, when the pre-notification response includes at least one of the rejection identifier and the reason information, the VNFM may control a VNFC other than the first VNFC to enter the target stage of the lifecycle. Specifically, the VNFM may determine a fifth VNFC based on the pre-notification response, and control the fifth VNFC to enter the target stage of the lifecycle. For example, the VNFM scales out the fifth VNFC, scales in the fifth VNFC, brings the fifth VNFC onboarded, or brings the fifth VNFC terminated. The fifth VNFC is one or more VNFCs other than the first VNFC in the VNF. For example, assuming that the VNF includes a VNFC 1, a VNFC 2, and a VNFC 3, and the first VNFC is the VNFC 2, the fifth VNFC may be the VNFC 1 and/or the VNFC 3. In addition, for an interaction procedure executed between the VNFM and the VNF for the fifth VNFC, refer to the foregoing descriptions. Details are not described herein again.

(2) When the pre-notification response indicates that the VNF allows to delete the first application instance, for example, when the pre-notification response includes the allowance identifier, the VNFM may delete the first application instance based on the pre-notification response.

When the pre-notification response indicates to delete the second application instance, for example, when the pre-notification response includes the identifier of the second application instance, the VNFM may determine the second application instance based on the pre-notification response, and delete the second application instance.

When the pre-notification response indicates at least one of the following: That the VNF rejects to delete the first application instance and the reason why the VNF rejects to delete the first application instance, for example, when the pre-notification response includes at least one of the rejection identifier and the reason information, the VNFM may delete another application instance of the VNF. Specifically, the VNFM may determine a third application instance based on the pre-notification response, and delete the third application instance. The third application instance is one or more application instances other than the first application instance of the second VNFC. For example, assuming that the second VNFC is a VNFC 1, and application instances of the VNFC 1 include a VNFC 1-1, a VNFC 1-2, and a VNFC 1-3, and the first application instance is the VNFC 1-1, the third application instance may be the VNFC 1-2 and/or the VNFC 1-3. In addition, for an interaction procedure executed between the VNFM and the VNF for the third application instance, refer to the foregoing descriptions. Details are not described herein again.

(3) When the pre-notification response indicates that the VNF allows to start the application instances of the first quantity, for example, when the pre-notification response includes the allowance identifier, the VNFM starts the application instances of the first quantity based on the pre-notification response.

When the pre-notification response indicates that the VNF indicates to start the application instances of the third quantity, for example, when the pre-notification response includes the third quantity, the VNFM may obtain the third quantity based on the pre-notification response, and starts the application instances of the third quantity.

When the pre-notification response indicates at least one of the following: That the VNF rejects to start the application instances of the first quantity and the reason why the VNF rejects to start the application instances of the first quantity, for example, when the pre-notification response includes at least one of the rejection identifier and the reason information, the VNFM starts application instances of another quantity that are of the VNFC. Specifically, the VNFM may determine a fifth quantity based on the pre-notification response, and start application instances of the fifth quantity. The fifth quantity is a positive integer less than the first quantity. In addition, for an interaction procedure executed between the VNFM and the VNF for the fifth quantity, refer to the foregoing descriptions. Details are not described herein again.

(4) When the pre-notification response indicates that the VNF allows to delete the application instances of the second quantity, for example, when the pre-notification response includes the allowance identifier, the VNFM may delete the application instances of the second quantity based on the pre-notification response.

When the pre-notification response indicates that the VNF indicates to delete the application instances of the fourth quantity, for example, when the pre-notification response includes the fourth quantity, the VNFM may obtain the fourth quantity based on the pre-notification response, and may delete the application instances of the fourth quantity.

When the pre-notification response indicates at least one of the following: That the VNF rejects to delete the application instances of the second quantity and the reason why the VNF rejects to delete the application instances of the second quantity, for example, when the pre-notification response includes at least one of the rejection identifier and the reason information, the VNFM deletes application instances of another quantity that are of the VNFC. Specifically, the VNFM may determine a sixth quantity based on the pre-notification response, and delete application instances of the sixth quantity. The sixth quantity is a positive integer less than the second quantity. In addition, for an interaction procedure executed between the VNFM and the VNF for the sixth quantity, refer to the foregoing descriptions. Details are not described herein again.

(5) When the pre-notification response indicates that the VNF is allowed to enter the target stage of the lifecycle at the first time point, for example, when the pre-notification response includes the allowance identifier, the VNFM controls, based on the pre-notification response, the VNF to enter the target stage of the lifecycle at the first time point.

When the pre-notification response indicates the VNFM to control, at the second time point, the VNF to enter the target stage of the lifecycle. For example, when the pre-notification response includes the second time point, the VNFM may obtain the second time point based on the pre-notification response, and control, at the second time point, the VNF to enter the target stage of the lifecycle.

When the pre-notification response indicates that the VNF is rejected to enter the target stage of the lifecycle at the first time point, for example, when the pre-notification response includes at least one of the rejection identifier and the reason information, the VNFM controls, at another time point, another VNFC in the VNF to enter the target stage of the lifecycle. Specifically, the VNFM may determine a third time point based on the pre-notification response. The third time point is later than the first time point. In addition, for an interaction procedure executed between the VNFM and the VNF for the third time point, refer to the foregoing descriptions. Details are not described herein again.

In a possible implementation, the VNFM may output or display, based on the pre-notification response, at least one of information about the reason why the VNF rejects the first VNFC to enter the target stage of the lifecycle, the reason why the VNF rejects to delete the first application instance, the reason why the VNF rejects to start the application instances of the first quantity, the reason why the VNF rejects to delete the application instances of the second quantity, and the reason why the VNF is rejected to enter the target stage of the lifecycle at the first time point. The operation and maintenance engineers determine, by analyzing the reason information, at least one of the fifth VNFC, the third application instance, the fifth quantity, the sixth quantity, and the third time point; and trigger an input operation. The VNFM may receive a control instruction, and obtain, from the control instruction, at least one of an identifier of the fifth VNFC, an identifier of the third application instance, the fifth quantity, the sixth quantity, and the third time point.

In another possible implementation, the VNFM may determine, based on the pre-notification response, that the VNF rejects to delete the first application instance, and selects, from at least one VNFC in the VNF, the third application instance other than the first application instance. Alternatively, the VNFM may determine, based on the pre-notification response, that the VNF rejects to start the application instances of the first quantity, and calculates the fifth quantity that is less than the first quantity. Alternatively, the VNFM may determine, based on the pre-notification response, that the VNF rejects to delete the application instances of the second quantity, and calculates the sixth quantity that is less than the second quantity. Alternatively, the VNFM may determine, based on the pre-notification response, that the VNF is rejected to enter the target stage of the lifecycle at the first time point, and calculate the third time point that is later than the first time point.

It should be noted that a procedure in which the VNFM re-controls the VNF to enter the target stage of the lifecycle may be performed for one or more times. In a possible embodiment, after the VNFM sends a pre-notification to the VNF for the second time, if a pre-notification response sent by the VNF to the VNFM still includes a rejection identifier, the VNFM may send a pre-notification to the VNF for a third time, to re-initiate a lifecycle management procedure. The procedure is executed by analogy, until the pre-notification response from the VNF includes an allowance identifier. In this way, the VNFM and the VNF may determine, based on the pre-notification and the pre-notification response through a plurality of times of negotiations, one or more specific VNFCs that are controlled to enter the target stage of the lifecycle, to ensure that the lifecycle management procedure meets a requirement of the VNF.

Optionally, when determining that the VNF is already at the target stage of the lifecycle, the VNFM may generate a post-notification, and send the post-notification to the VNF. The VNF may receive the post-notification, and execute a processing procedure after the pre-processing procedure at the target stage.

The post-notification may be considered as a message corresponding to the pre-notification. To be specific, the pre-notification is a message sent before the VNFM controls the VNF to enter the target stage of the lifecycle, and can be used to notify the VNF that the VNFM is going to manage the lifecycle of the VNF; whereas the post-notification is a message sent after the VNFM controls the VNF to enter the target stage of the lifecycle, and can be used to notify the VNF that the VNFM has completed management for the VNF, thereby helping the VNF learn of a termination occasion, to trigger a smooth service migration process and a service waiting process after the management is completed. The post-notification is used to notify that the VNF is already at the target stage of the lifecycle. The post-notification may be recorded as a "notify completion (English full name: Notify Completion)" message. The post-notification may include any one or more of a scale-out post-notification and a scale-in post-notification.

For a manner of sending the post-notification, optionally, the VNFM may invoke a notification interface provided by the VNF, to send the post-notification to the VNF. The notification interface may be a REST interface. The notification interface may include at least one of a scale-out post-notification (English: Post Scale Out Notify) interface and a scale-in post-notification (English: Post Scale In Notify) interface.

The VNFM sends the post-notification to the VNF. After receiving the post-notification, the VNF may learn that a lifecycle management action of the VNFM has terminated, to help the VNF learn of the termination occasion of the lifecycle management action. The VNFM and the VNF can effectively cooperate and collaborate, so that the VNF can learn, in a timely manner after receiving the post-notification, that the VNF has entered the target stage of the lifecycle; and the VNF is triggered to execute a service migration procedure, a service clearance procedure, a service waiting procedure, and other transaction procedures that are after the target stage of the lifecycle.

Optionally, after receiving the post-notification, the VNF may generate a post-notification response, and send the post-notification response to the VNFM. The post-notification response may be considered as an ACK message of the post-notification, and the post-notification response is a response to the post-notification from the VNFM. The VNFM may receive the post-notification response, and determine, based on the post-notification response, that the VNF has received the post-notification.

408: The VNF executes the processing procedure after the pre-processing procedure at the target stage.

In a possible implementation, step 408 may include any one or a combination of the following (A) to (D).
(A) The VNF executes a processing procedure after the pre-processing procedure at the scale-out stage.

In a possible implementation, (A) may include either or both of (A1) and (A2).

(A1) The VNF migrates a service to a newly-added application instance of a VNFC according to the service migration plan.

For example, the VNF may migrate traffic to the newly-added application instance of the VNFC according to the traffic migration plan. For another example, the VNF may migrate data to the newly-added application instance of the VNFC according to the data migration plan. For another example, the VNF may migrate, according to the service balancing plan, a service running on an original application instance of the VNFC to the newly-added application instance of the VNFC, so that the newly-added application instance of the VNFC shares services on the original application instance of the same VNFC. For another example, the VNF may migrate a service running on an original application instance of the VNFC to the newly-added application instance of the same VNFC according to the service access plan, where the service is going to access the VNFC.

(A2) The VNF controls, based on the first control information, the newly-added application instance of the VNFC to process the service.

(B) The VNF executes a processing procedure after the pre-processing procedure at the scale-in stage.

In a possible implementation, (B) may include either or both of (B1) and (B2).

(B1) The VNF releases a resource of a deleted application instance of the VNFC.

(B2) The VNF deletes control information of the deleted application instance of the VNFC.

(C) The VNF executes a processing procedure after the pre-processing procedure at the VNFC onboarding stage.

In a possible implementation, (C) may include either or both of (C1) and (C2).

(C1) The VNF controls, according to the interaction plan, a newly onboarded VNFC to interact with VNFCs other than the newly onboarded VNFC.

The VNFCs and a sequence of interaction between the VNFCs and the newly onboarded VNFC may be determined according to the interaction plan, and the VNFCs are controlled to sequentially interact with the newly onboarded VNFC according to the sequence. For example, assuming that the interaction plan is the registration plan, the VNFCs may be controlled to sequentially register with the newly onboarded VNFC. For another example, assuming that the interaction plan is the resource application plan, the VNFCs may be controlled to sequentially apply for resources from the newly onboarded VNFC.

(C2) The VNF controls, based on the second control information, the newly onboarded VNFC to process the service.

(D) The VNF executes a processing procedure after the pre-processing procedure at the VNFC termination stage.

In a possible implementation, (D) may include either or both of (D1) and (D2).

(D1) The VNF releases a resource of a terminated VNFC.

(D2) The VNF deletes control information of the terminated VNFC.

Optionally, when the VNF executes the procedure after the pre-processing procedure, the VNF may generate post-processing progress information based on current progress, and send the post-processing progress information to the VNFM.

The post-processing progress information may be positively correlated to completed workload of the procedure after the pre-processing procedure, and negatively correlated to total workload that needs to be completed in the procedure after the pre-processing procedure. Specifically, the post-processing progress information may include at least one of scale-out post-processing progress information or scale-in post-processing progress information.

The post-processing progress information may be data in a percentage form, to specifically indicate a percentage of the completed workload to the total workload that needs to be completed in the post-processing process. For example, the post-processing progress information may be 40% or 60%. If the post-processing progress information is 100%, it indicates that the post-processing process has been completed. Certainly, the post-processing progress information may alternatively be data in a ratio form. For example, the post-processing progress information may be a ratio of the completed workload of the VNF post-processing procedure to the total workload that needs to be completed in the post-processing procedure.

Optionally, after receiving the post-processing progress information of the VNF, the VNF may display the post-processing progress information of the VNF in real time, to present the post-processing progress of the VNF to users in real time, providing an intuitive experience feedback to the users.

According to the method provided in this embodiment, the procedure of interaction between the pre-notification and the pre-notification response is introduced to the lifecycle management procedure of the VNF. The pre-notification is sent to the VNF, and the VNF is controlled to enter the target stage of the lifecycle after the pre-notification response from the VNF is received. The VNF may be reminded in advance that the VNF is going to enter the target stage of the lifecycle, so that the VNF can execute the pre-processing procedure in advance based on the pre-notification, thereby improving service processing efficiency. In addition, this avoids a call loss caused by temporarily performing smooth service migration after the VNF enters the target stage of the lifecycle, thereby implementing that services are not affected.

Optionally, this application may be applied to a VNF containerization scenario. Specifically, the VNF may be carried by using a container cluster. After the container cluster is created, the VNF is run in the container cluster. Therefore, the VNF is started accordingly as the container cluster is created. A VNFC may be carried by using one or more containers in the container cluster. After the one or more containers are created, the VNFC is run in the one or more containers. Therefore, the VNFC is started accordingly as the one or more containers are created. Application instances of the VNFC may be carried by using one or more container instances of a container. After the one or more container instances are created, the application instances of the VNFC are run on the one or more container instances. Therefore, the application instances of the VNFC are started accordingly as the one or more containers are created.

Optionally the container cluster may be deployed by pods, each pod may include one or more containers, each pod may include one or more pod instances, and each pod instance may include one or more container instances. Correspondingly, the VNFC may be carried by using one or more pods in the container cluster. After the one or more pods are created, the VNFC is run in the one or more pods. Therefore, the VNFC is started accordingly as the one or more pods are created. Application instances of the VNFC may be carried by using one or more pod instances of the pod. After the one or more pod instances are created, the application instances of the VNFC are run on the one or more pod instances. Therefore, the application instances of the VNFC are started accordingly as the one or more pods are created.

In the following method embodiments, the VNFM may be considered as an intermediate medium between a CaaS manager and the VNF. When the lifecycle of the VNF needs to be managed, the VNFM interacts with the CaaS manager, and the VNFM may control the CaaS manager to manage the container cluster. Because the application instance of the VNFC is run in the container instance of the container in the container cluster, a status of the container cluster changes, and the VNF enters the target stage of the lifecycle accordingly. The VNFM may understand both a primitive that describes the VNF and a primitive that describes the container. The VNFM may interact with the VNF by using the primitive of the VNF, and may interact with the CaaS manager by using the primitive of the container.

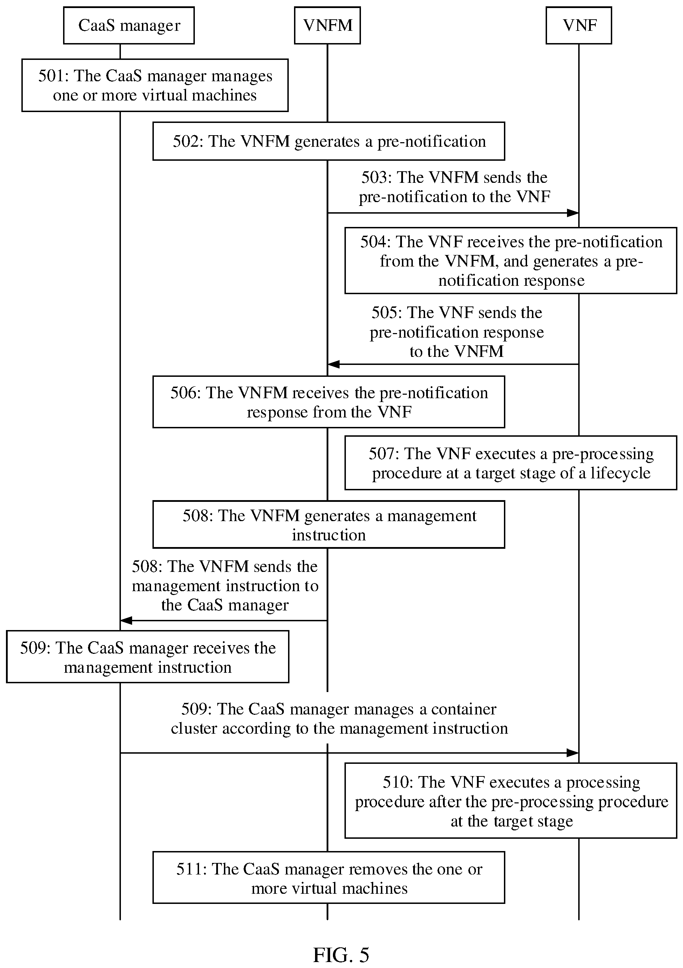

The following describes in detail how to manage a lifecycle of a VNF in a VNF containerization scenario by using an embodiment of FIG. 5. It should be noted that, the embodiment of FIG. 5 mainly focuses on differences between the embodiment of FIG. 5 and the embodiment of FIG. 4. For steps similar to those in the embodiment of FIG. 4, refer to the embodiment of FIG. 4. Details are not described in the embodiment of FIG. 5.

FIG. 5 is a flowchart of a VNF lifecycle management method according to an embodiment of this application. As shown in FIG. 5, the method is performed by a VNF, a VNFM, and a CaaS manager, and includes the following steps.

501: The CaaS manager manages one or more virtual machines.

This embodiment may be applied to a scenario of a virtual machine-based container, or may be used in a scenario of a bare-metal container. A running environment of the container is not limited. In the scenario of the virtual machine-based container, the CaaS manager can manage one or more virtual machines, and each virtual machine carry one or more containers. In the scenario of the bare-metal container, the CaaS manager can manage one or more containers.

A process of managing a virtual machine may include: The VNFM creates the virtual machine, and the VNFM manages the virtual machine to the CaaS manager, where the virtual machine is used to provide a running environment for a to-be-created container instance.

Specifically, the virtual machine may be managed in any one or a combination of the following manner 1 to manner 3.

Manner 1: When the VNFM receives a management instruction for the VNF, the VNFM analyzes a resource requirement status of the to-be-scaled-out VNF; the VNFM selects a corresponding VNFC based on the resource requirement status, and creates the virtual machine by using the VNFC; and the VNFM manages the created virtual machine to the CaaS manager.

Manner 2: The CaaS manager determines, based on a resource status of each managed virtual machine, whether a new virtual machine needs to be added through scale-out; and when a new virtual machine needs to be added through scale-out, the CaaS manager invokes a virtual machine creation interface provided by the VNFM, so that the VNFM creates the virtual machine. The CaaS manager may determine, in real time, whether a new virtual machine needs to be added through scale-out. For example, when the VNFM invokes a CaaS manager interface, the CaaS manager may determine whether a new virtual machine needs to be added through scale-out.

Manner 3: The VNFM may monitor resource usage of a virtual machine, and when the resource usage exceeds a resource usage threshold, the VNFM creates a virtual machine, and manages the virtual machine to the CaaS manager. The resource usage may include at least one of CPU usage and memory usage.

Optionally, the CaaS manager may provide a management interface. The management interface may be a REST interface. The VNFM may invoke the management interface of the CaaS manager in a REST interface manner, and send a management instruction to the CaaS manager through the management interface, to manage the virtual machine to the CaaS manager.

In the method, step 502 is the same as step 401, step 503 is the same as step 402, step 504 is the same as step 403, step 505 is the same as step 404, step 506 is the same as step 405, and step 507 is the same as step 406. For content of step 502 to step 507 in the method, refer to the embodiment shown in FIG. 4. Details are not described herein again.

It should be understood that a sequence of step 504, step 505, and step 507 is not limited in this embodiment. In some other embodiments, the VNF may first execute a pre-processing procedure, and then the VNF generates a pre-notification response, and sends the pre-notification response to the VNFM. Sequence numbers of the foregoing steps in this embodiment do not indicate an execution sequence. The execution sequence of the steps should be determined based on functions and internal logic of the steps, and should not be construed as any limitation on the implementation process of this embodiment of this application.

508: The VNFM generates the management instruction, and sends the management instruction to the CaaS manager.

The management instruction is used to instruct the CaaS manager to manage a container cluster, and the container cluster is used to carry the VNF. For a manner of sending the management instruction, in a possible implementation, if the management instruction is a creation instruction, the VNFM may invoke a creation interface of the CaaS manager, to send the creation instruction to the CaaS manager. If the management instruction is a deletion instruction, the VNFM may invoke a deletion interface of the CaaS manager, to send the deletion instruction to the CaaS manager. The creation interface and the deletion interface each may be a REST interface, and the creation interface and the deletion interface each may be recorded as a DoStackLifeCycle interface. For example, the creation interface may be a kubectl create interface in K8s, and the deletion interface may be a kubectl delete interface in K8s.

In a possible implementation, step 508 may include either or both of (A) and (B).
(A) The VNFM generates the creation instruction, and sends the creation instruction to the CaaS manager.

The creation instruction is used to instruct the CaaS manager to create a container instance in the container cluster. The creation instruction may include an identifier of a container. The identifier of the container is used to determine the container. For example, the identifier of the container may be a name or an id of the container. For example, the identifier of the container may be "nginx-container (nginx container)". The identifier of the container may be a container name in a container deployment template, for example, may be a "pod name" in the container deployment template. If this embodiment is applied to a scale-out stage, (A) may include: generating the creation instruction based on a to-be-scaled-out VNFC, where the creation instruction is used to instruct the CaaS manager to create a container instance of the container in the container cluster, and the container instance is used to carry a to-be-added application instance of the to-be-scaled-out VNFC. If this embodiment is applied to a VNFC onboarding stage, (A) may include: generating the creation instruction based on a to-be-onboarded VNFC, where the creation instruction is used to instruct the CaaS manager to create a container in the container cluster, and the container is used to carry the to-be-onboarded VNFC.

(B) The VNFM generates the deletion instruction, and sends the deletion instruction to the CaaS manager.

The deletion instruction is used to instruct the CaaS manager to delete a container instance from the container cluster. The deletion instruction may include an identifier of a container. If this embodiment is applied to a scale-in stage, (B) may include: generating the deletion instruction based on a to-be-scaled-in VNFC, where the deletion instruction is used to instruct the CaaS manager to delete a container instance of the container from the container cluster, and the container instance is used to carry a to-be-deleted application instance of the to-be-scaled-in VNFC. If this embodiment is applied to a VNFC termination stage, (B) may include: generating the deletion instruction based on a to-be-terminated VNFC, where the deletion instruction is used to instruct the CaaS manager to delete the container from the container cluster, and the container is used to carry the to-be-terminated VNFC.

In a possible implementation, step 508 may include any one or a combination of the following (1) to (5).
(1) The VNFM generates the management instruction based on an identifier of a first container or an identifier of a third container, and the VNFM sends the management instruction to the CaaS manager. (1) in step 508 is an implementation corresponding to (1) in step 407. The management instruction is used to instruct the CaaS manager to manage the first container or the third container in the container cluster. The first container is one or more containers that carry a first VNFC in the container cluster. The third container is one or more containers that carry a third VNFC in the container cluster. The management instruction may include the identifier of the first container or the identifier of the third container. The identifier of the first container is used to indicate the first container. For example, the identifier of the first container may include a name, an id, and the like of the first container. The identifier of the third container is used to indicate the third container. For example, the identifier of the third container may include a name, an id, and the like of the third container.
(2) The VNFM generates the management instruction based on an identifier of a first container instance or an identifier of a second container instance, and the VNFM sends the management instruction to the CaaS manager. (2) in step 508 is an implementation corresponding to (2) in step 407. The management instruction is used to instruct the CaaS manager to delete the first container instance or the second container instance from the container cluster. The first container instance is one or more instances of a second container that carry the first application instance, and the second container instance is one or more instances of a fourth container that carry a second application instance. The second container is one or more containers that carry a second VNFC in the container cluster. The fourth container is one or more containers that carry a fourth VNFC in the container cluster. The management instruction may include the identifier of the first container instance or the identifier of the second container instance. The identifier of the first container instance is used to indicate the first container instance. For example, the identifier of the first container instance may include a name, an ID, and the like of the first container instance. The identifier of the second container instance is used to indicate the second container instance. For example, the identifier of the second container instance may include a name, an ID, and the like of the second container instance.
(3) The VNFM generates the management instruction based on a seventh quantity or a ninth quantity, and the VNFM sends the management instruction to the CaaS manager. (3) in step 508 is an implementation corresponding to (3) in step 407. The management instruction is used to instruct the CaaS manager to create container instances of the seventh quantity or container instances of the ninth quantity in the container cluster, where the seventh quantity is a positive integer, and the container instances of the seventh quantity are used to carry application instances of a first quantity. The ninth quantity is a positive integer, and the container instances of the ninth quantity are used to carry application instances of a third quantity. The management instruction may include the seventh quantity or the ninth quantity. For example, if the management instruction includes "num=3" (indicating that a quantity is 3), the management instruction instructs the CaaS manager to create three container instances in the container cluster.
(4) The VNFM generates the management instruction based on an eighth quantity or a tenth quantity, and sends the management instruction to the CaaS manager. (4) in step 508 is an implementation corresponding to (4) in step 407. The management instruction is used to instruct the CaaS manager to delete container instances of the eighth quantity or container instances of the tenth quantity from the container cluster. The eighth quantity is a positive integer, and the container instances of the eighth quantity are used to carry application instances of a second quantity. The tenth quantity is a positive integer, and the container instances of the tenth quantity are used to carry application instances of a fourth quantity. The management instruction may include the eighth quantity or the tenth quantity. For example, if the management instruction includes "num=3" (indicating that a quantity is 3), the management instruction instructs the CaaS manager to delete three container instances in the container cluster.
(5) The VNFM generates the management instruction based on a first time point or a second time point, and sends the management instruction to the CaaS manager. (5) in step 508 is an implementation corresponding to (5) in step 407. The management instruction is used to instruct the CaaS manager to manage the container cluster at the first time point or the second time point. The management instruction may include the first time point or the second time point. For example, if the management instruction includes "18:00", the management instruction instructs the CaaS manager to manage the container cluster at 18:00.

The identifier of the first container may be obtained in either or both of the following manner 1 and manner 2. This is not limited.

Manner 1: The VNFM queries a correspondence between an identifier of a VNFC and an identifier of a container based on an identifier of the first VNFC, to obtain the identifier of the first container corresponding to the identifier of the first VNFC.

The correspondence between an identifier of a VNFC and an identifier of a container may include an identifier of at least one VNFC and an identifier of at least one container. Optionally, an identifier of a VNFC may be the same as an identifier of a container corresponding to the VNFC. For example, a container corresponding to a VNFC 1 is a container 1, a container corresponding to a VNFC 2 is a container 2, and by analogy, a container corresponding to a VNFC i is a container i, where i represents an identifier of a VNFC and an identifier of a container, and i may be a number, a letter, a character, or any other data form.

For example, the correspondence between an identifier of a VNFC and an identifier of a container may be shown in the following Table 1. When the VNFM needs to perform a lifecycle management operation on the VNFC 1, the VNFM may use "1" as an identifier of a container. Therefore, the VNFM may determine that the container corresponding to the VNFC 1 is the container 1.

**Table 1**

| VNFC identifier | Container identifier |
|---|---|
| 1 | 1 |
| 2 | 2 |
| 3 | 3 |

In this manner, when the VNFM specifies that a lifecycle management operation is to be performed on a specific VNFC, the VNFM may use an identifier of the VNFC as an identifier of a container corresponding to the VNFC, to quickly and easily implement conversion from the identifier of the VNFC to the identifier of the container.

In a possible implementation, a process in which the VNFM obtains the correspondence between an identifier of a VNFC and an identifier of a container may include: The VNFM generates a query request, where the query request is used to query the correspondence between an identifier of a VNFC and an identifier of a container. The VNFM sends the query request to the VNF. The VNF receives the query request from the VNFM. The VNF generates a query response. The VNF may obtain an identifier of a container carrying the VNFC, and generate the query response based on the identifier of the VNFC and the identifier of the container, where the query response includes the correspondence between an identifier of a VNFC and an identifier of a container. The VNF sends the query response to the VNFM. The VNFM receives the query response. The VNFM may obtain the correspondence between an identifier of a VNFC and an identifier of a container based on the query response, and store the correspondence between an identifier of a VNFC and an identifier of a container.

Optionally, whenever any one or more containers are created to start one or more corresponding VNFCs, the VNFM and the VNF may obtain, by performing the foregoing steps to obtain a correspondence between an identifier of a newly-started VNFC and an identifier of a container carrying the newly-started VNFC. As more VNFCs are started by the VNF, the VNFM and the VNF may perform the foregoing steps for a plurality of times, to maintain the correspondence between an identifier of a VNFC and an identifier of a container.

In the manner 1, the VNFM serves as an intermediate medium between the VNF and the CaaS manager, and converts an identifier of a VNFC into an identifier of a container, thereby implementing conversion between a primitive of the VNF and a primitive of the container. This breaks down a communication barrier between the VNF and the CaaS manager, breaks through a technical barrier that containerization is difficult to implement because the VNF cannot understand container-level primitives, streamlines the lifecycle management procedure in a VNF containerization scenario, and supports evolution of VNF products to containerization.

Manner 2: The VNFM obtains the identifier of the first container based on the pre-notification response.

In a process in which the VNF generates the pre-notification response, the VNF may obtain, based on the identifier of the first VNFC, the identifier of the first container corresponding to the identifier of the first VNFC, and generate the pre-notification response based on the identifier of the first container, where the pre-notification response includes the identifier of the first container. In this case, after receiving the pre-notification response, the VNFM may parse the pre-notification response to obtain the identifier of the first container carried in the pre-notification response, so as to obtain the identifier of the first container from the pre-notification response.

In a possible implementation, a process in which the VNF obtains the identifier of the first container may include either of the following (1) and (2).
(1) The VNF pre-stores the correspondence between an identifier of a VNFC and an identifier of a container, and queries, based on the identifier of the first VNFC, the correspondence between an identifier of a VNFC and an identifier of a container, to obtain the identifier of the first container corresponding to the identifier of the first VNFC. In a possible implementation, when any VNFC in the VNF is started, the VNF may obtain an identifier of a container carrying the VNFC, and store an identifier of the VNFC and the identifier of the container in the correspondence between an identifier of a VNFC and an identifier of a container. In this way, the VNF may dynamically maintain and update the correspondence between an identifier of a VNFC and an identifier of a container as the VNFC is started.
   According to (1), the VNF itself may store the correspondence between an identifier of a VNFC and an identifier of a container, to implement conversion between the primitive of the VNF and the primitive of the container, and streamline the lifecycle management procedure in the VNF containerization scenario.
(2) The VNF may temporarily query an identifier of a container corresponding to an identifier of a VNFC. In a possible implementation, the VNF may send the query request to the first VNFC based on the identifier of the first VNFC. The first VNFC may receive the query request, obtain an identifier of a container carrying the first VNFC, and obtain the identifier of the first container. The first VNFC may send the identifier of the first container to the VNF. The VNF may receive the identifier of the first container from the first VNFC. The query request is used to query an identifier of a container carrying the VNFC. For a manner of sending the query request, the VNF may invoke an interface of the first VNFC based on the identifier of the first VNFC, to send the query request.

The identifier of the first container instance may be obtained in either or both of the following manner 1 and manner 2.

Manner 1: The VNFM may query the correspondence between an identifier of an application instance and an identifier of a container instance based on an identifier of the first application instance, to obtain the identifier of the first container instance corresponding to the identifier of the first application instance.

The correspondence between an identifier of an application instance of a VNFC and an identifier of a container instance may include an identifier of at least one application instance and an identifier of at least one container instance of the container that are of the VNFC. Optionally, an identifier of an application instance of the VNFC may be the same as an identifier of a container instance corresponding to the application instance. For example, a container instance corresponding to an application instance 1-1 is a container instance 1-1, a container instance corresponding to an application instance 1-2 is a container instance 1-2, and by analogy, a container instance corresponding to an application instance i-m is a container instance i-m, where i represents an identifier of a VNFC and an identifier of a container, and m represents an identifier of an application instance and an identifier of a container instance.

For example, the correspondence between an identifier of an application instance of a VNFC and an identifier of a container instance may be shown in the following Table 2. When the VNFM needs to perform a lifecycle management operation on the application instance 1-1 of the VNFC, the VNFM may use "1-1" as an identifier of a container instance. Therefore, the VNFM may determine that the container instance corresponding to the application instance 1-1 of the VNFC is the container instance 1-1.

**Table 2**

| Identifier of an application instance of a VNFC | Identifier of a container instance of a container |
|---|---|
| 1-1 | 1-1 |
| 1-2 | 1-2 |
| 1-3 | 1-3 |

In this case, when the VNFM specifies that a lifecycle management operation is to be performed on a specific application instance of the VNFC, the VNFM may use the identifier of the application instance of the VNFC as the identifier of the container instance corresponding to the application instance of the VNFC, to quickly and simply implement conversion from the identifier of the application instance of the VNFC to the identifier of the container instance.

In a possible implementation, a process in which the VNFM obtains the correspondence between an identifier of a VNFC and an identifier of a container may include: The VNFM generates a query request, where the query request is used to query the correspondence between an identifier of an application instance and an identifier of a container instance. The VNFM sends the query request to the VNF. The VNF receives the query request from the VNFM, and the VNF generates a query response. The VNF sends the query response to the VNFM. The VNFM receives the query response. The VNFM may obtain the correspondence between an identifier of an application instance and an identifier of a container instance based on the query response, and store the correspondence between an identifier of an application instance and an identifier of a container instance.

The VNF may obtain the identifier of the container instance carrying the application instance, and generate the query response based on the identifier of the application instance and the identifier of the container instance, where the query response includes the correspondence between an identifier of an application instance and an identifier of a container instance.

In the manner 1, the VNFM serves as an intermediate medium between the VNF and the CaaS manager, and converts an identifier of an application instance into an identifier of a container instance, thereby implementing conversion between a primitive of the VNF and a primitive of the container instance. This breaks down a communication barrier between the VNF and the CaaS manager, breaks through a technical barrier that container instantiation is difficult to implement because the VNF cannot understand container-level primitives, streamlines the lifecycle management procedure in a VNF container instantiation scenario, and supports evolution of VNF products to container instantiation.

Optionally, whenever any one or more container instances are created to start one or more corresponding application instances, the VNFM and the VNF may obtain, by performing the foregoing steps, a correspondence between an identifier of a newly started application instance and an identifier of a container instance carrying the newly started application instance. As more application instances are started by the VNFC, the VNFM and the VNF may perform the foregoing steps for a plurality of times, to maintain the correspondence between an identifier of an application instance and an identifier of a container instance.

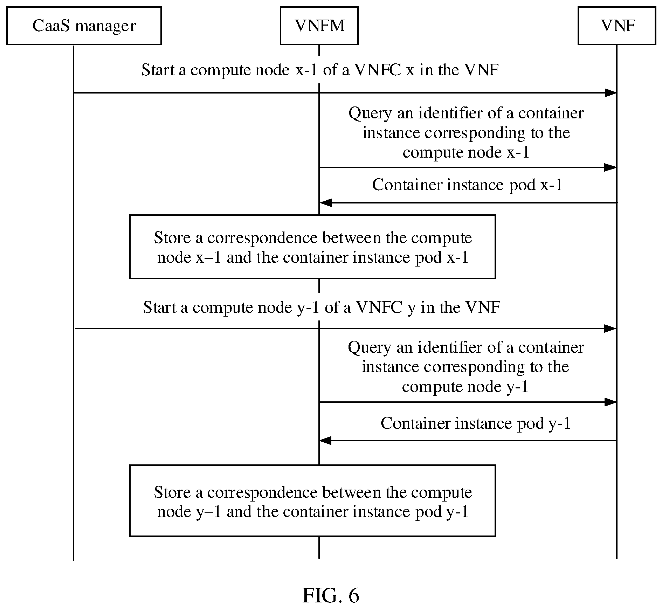

For example, refer to FIG. 6. Assuming that the VNFM starts a compute node x-1 of a VNFC x of the VNF, the VNFM may generate a query request, and send the query request to the VNF, where the query request is used to query an identifier of a container instance corresponding to the compute node x-1. After receiving the query request, the VNF may query, based on the query request, the identifier of the container instance corresponding to the compute node x-1 to obtain a container instance pod x-1, and generate a query response based on the compute node x-1 and the container instance pod x-1, where the query response includes the container instance pod x-1. After receiving the query response, the VNFM may obtain and store a correspondence between the compute node x-1 and the container instance pod x-1. Then, similarly, the VNFM starts a compute node y-1 of a VNFC y of the VNF. The VNFM may generate a query request, and send the query request to the VNF, where the query request is used to query an identifier of a container instance corresponding to the compute node y-1. After receiving the query request, the VNF may query, based on the query request, the identifier of the container instance corresponding to the compute node y-1 to obtain a container instance pod y-1, and generate a query response based on the compute node y-1 and the container instance pod y-1, where the query response includes the container instance pod y-1. After receiving the query response, the VNFM may obtain and store a correspondence between the compute node y-1 and the container instance pod y-1. By analogy, the VNFM may store a correspondence between an identifier of each application instance and an identifier of each container instance.

Manner 2: Obtain the identifier of the first container instance based on the pre-notification response, where the pre-notification response includes the identifier of the first container instance.

In a process in which the VNF generates the pre-notification response, the VNF may obtain, based on the identifier of the first application instance, the identifier of the first container instance corresponding to the identifier of the first application instance, and generate the pre-notification response based on the identifier of the first container instance, where the pre-notification response includes the identifier of the first container instance. In this case, after receiving the pre-notification response, the VNFM may obtain the identifier of the first container instance from the pre-notification response.

In a possible implementation, a process in which the VNF obtains the identifier of the first container instance may include either of the following (1) and (2).
(1) The VNF pre-stores the correspondence between an identifier of an application instance and an identifier of a container instance. The VNF may query, based on the identifier of the first application instance, the correspondence between an identifier of an application instance and an identifier of a container instance, to obtain the identifier of the first container instance corresponding to the first application instance.

In a possible implementation, when any application instance of any VNFC in the VNF is started, the VNF obtains an identifier of a container instance carrying the application instance, and stores an identifier of the application instance and the identifier of the container instance in the correspondence between an identifier of an application instance and an identifier of a container instance. In this way, the VNF may dynamically maintain and update the correspondence between an identifier of an application instance and an identifier of a container instance as the application instance of the VNFC is started.

According to (1), the VNF itself may store the correspondence between an identifier of an application instance and an identifier of a container instance, to implement conversion between the primitive of the VNF and a primitive of a container, and streamline the lifecycle management procedure in the VNF containerization scenario.

(2) The VNF may temporarily query an identifier of a container instance corresponding to an identifier of an application instance.

In a possible implementation, the VNF may send the query request to the first application instance based on the identifier of the first application instance. The first application instance may obtain an identifier of a container instance carrying the first application instance, to obtain the identifier of the first container instance. The first application instance may send the identifier of the first container instance to the VNF. The VNF may receive the identifier of the first container instance from the first application instance. The query request is used to query an identifier of a container instance carrying an application instance. For a manner of sending the query request, the VNF may invoke an interface of the first application instance based on the identifier of the first application instance, to send the query request.

The identifier of the third container may be obtained in either or both of the following manner 1 and manner 2. This is not limited.

Manner 1: The VNFM queries the correspondence between an identifier of a VNFC and an identifier of a container based on the identifier of the third VNFC, to obtain the identifier of the third container corresponding to the identifier of the third VNFC. For a process in which the VNFM obtains the correspondence between an identifier of a VNFC and an identifier of a container, refer to the foregoing (1). Details are not described herein again.

Manner 2: In a process in which the VNF generates the pre-notification response, the VNF may obtain the identifier of the third container based on the identifier of the third VNFC, and the VNF may generate the pre-notification response based on the identifier of the third container, where the pre-notification response includes the identifier of the third container. In this case, after receiving the pre-notification response, the VNFM may obtain the identifier of the third container from the pre-notification response.

A process in which the VNF obtains the identifier of the third container may include either of the following (1) and (2): (1) The VNF may query, based on the identifier of the third VNFC, the correspondence between an identifier of a VNFC and an identifier of a container, to obtain the identifier of the third container corresponding to the identifier of the third VNFC. (2) The VNF may send the query request to the third VNFC based on the identifier of the third VNFC. The third VNFC may receive the query request, obtain an identifier of a container carrying the third VNFC, and obtain the identifier of the third container. The third VNFC may send the identifier of the third container to the VNF. The VNF may receive the identifier of the third container from the third VNFC.

The identifier of the second container instance may be obtained in either or both of the following manner 1 and manner 2. This is not limited.

Manner 1: The VNFM may query the correspondence between an identifier of an application instance and an identifier of a container instance based on an identifier of the second application instance, to obtain the identifier of the second container instance corresponding to the identifier of the second application instance.

For a manner of obtaining the correspondence between an identifier of an application instance of the VNFC and an identifier of a container instance, refer to the foregoing (1). Details are not described herein again.

Manner 2: The VNFM may obtain the identifier of the second container instance based on the pre-notification response.

In a process in which the VNF generates the pre-notification response, the VNF may obtain, based on the identifier of the second application instance, the identifier of the second container instance, and generate the pre-notification response based on the identifier of the second container instance, where the pre-notification response includes the identifier of the second container instance. In this case, after receiving the pre-notification response, the VNFM may obtain the identifier of the second container instance from the pre-notification response.

The process in which the VNF obtains the identifier of the second container instance may include either of the following (1) and (2).
(1) The VNF queries the correspondence between an identifier of an application instance and an identifier of a container instance based on the identifier of the second application instance, to obtain the identifier of the second container instance corresponding to the identifier of the second application instance.
(2) The VNF sends the query request to the second application instance based on the identifier of the second application instance. The second application instance may receive the query request, obtain an identifier of a container instance carrying the second application instance, and obtain the identifier of the second container instance. The second application instance may send the identifier of the second container instance to the VNF. The VNF may receive the identifier of the second container instance from the second application instance.

It should be noted that any one or more of (A) to (B) may be randomly combined with any one or more of (1) to (5) in step 508, and this is not limited. For example, the foregoing (B), (2), and (4) are combined. Assuming that the pre-notification response from the VNF includes "num=3; VNFCList{ VNFC1-1\VNFC1-2\VNFC1-3}", the pre-notification response indicates to "delete three application instances: VNFC 1-1, VNFC 1-2, and VNFC 1-3". The VNFM may query, based on the VNFC 1-1, the VNFC 1-2, and the VNFC 1-3, the correspondence between an identifier of an application instance and an identifier of a container instance; obtain a pod 1-1 corresponding to the VNFC 1-1, a pod 1-2 corresponding to the VNFC 1-2, and a pod 1-3 corresponding to the VNFC 1-3; and generate a deletion instruction based on the pod 1-1, the pod 1-2, and the pod 1-3, where the deletion instruction includes "num=3; PodList{Pod1-1\Pod1-2\Pod1-3}".

509: The CaaS manager receives the management instruction, and manages the container cluster according to the management instruction.

Optionally, step 509 may include any one or a combination of the following A and B.
A: The CaaS manager receives the creation instruction, and creates the container instance of the container in the container cluster according to the creation instruction.

If this embodiment is applied to the scale-out stage, for a VNFC carried by any container, after the container instance of the container is created, an application instance of the VNFC is run on the newly created container instance. Therefore, the newly-added application instance is added to the VNFC. In this case, a quantity of application instances included in the VNFC increases. Therefore, the VNFC is scaled out, that is, the VNF is scaled out.

If this embodiment is applied to the VNFC onboarding stage, for a VNFC carried by any container, after a container instance of the container is created, an application instance of the VNFC is run on the newly created container instance. Therefore, the VNFC is started, that is, the VNFC is onboarded.

In a possible implementation, the VNFM may send a container deployment template to the CaaS manager, and the CaaS manager may create the container instance of the container based on the container deployment template.

The container deployment template is used to describe a container. The container deployment template may be considered as a template for making a container. The container deployment template may include at least one of an identifier of a container, a quantity of containers, running resources of the container, an identifier of an image corresponding to the container, a dependency relationship between the container and a container other than the container, and a dependency relationship between the container deployment template and a container deployment template other than the container deployment template. The running resources of the container may be a quantity of CPUs of the container, a size of a memory, a quantity of network adapters, and the like. The container deployment template may be set depending on a requirement for functions of the VNFC and specifications of the CaaS manager, so that the CaaS manager can parse and identify the container deployment template. One container deployment template may describe one or more containers. Optionally, the container deployment template may be a pod template, and one pod template may describe one or more pods.

For example, the container deployment template may be as follows: A name of a pod in the container deployment template is "Pod_Test", and the pod_Test includes two containers whose names are "nginx-container" and "debian-container".
apiVersion: v1............A version of an application programming interface (English full name: application programming interface, api for short) is v1.
kind: Pod............ A kind of a container is a pod
metadata: ............ Metadata
   name: Pod_Test ............Pod_Test
spec: ............Specifications
replicas: 3.........A quantity of replicas is 3
containers: ............ Containers

- name: nginx-container...... A name of the container is nginx-container
   image: nginx......An image of the container is nginx
   - name: debian-container......A name of the container is debian-container.
   image: debian ............An image of the container is debian

Any VNFC may correspond to one or more container deployment templates. Specifically, if the VNFC has n1 control nodes and m1 compute nodes, the n1 control nodes are carried by using n2 container instances, and the m1 compute nodes are carried by using m2 container instances, the VNFC may correspond to (n3+m3) container deployment templates, where the n3 container deployment templates describe the n2 container instances, and the m3 container deployment templates describe the m2 container instances. n1, n2, n3, m1, m2, and m3 are positive integers, n2 is greater than or equal to n3, and m2 is greater than or equal to m3.

For a process of creating a container instance based on the container deployment template, the CaaS manager may search, based on the container deployment template, each managed node for a node on which the container instance can be deployed (the node may be a virtual machine or a bare metal), and create the container instance on the found node.

In a possible implementation, the CaaS manager may obtain an instantiation condition of the container instance based on the container deployment template. The CaaS manager may search for, based on remaining resources of each node, a node that satisfies the instantiation condition, and use the node as a node on which the container instance can be deployed. The remaining resources may include at least one of a quantity of remaining CPUs and a remaining memory, and the instantiation condition may include a quantity of container instances, a resource requirement, and the like.

For example, it is assumed that the container deployment template includes that "a quantity of pod instances is 10, a quantity of CPUs occupied by each pod instance is 4, and a size of an occupied memory is 4 GB." The CaaS manager may search for, based on the container deployment template, a node whose quantity of remaining CPUs is greater than four and of which a size of a remaining memory is greater than 4 GB, and use the node as a node on which a pod instance can be deployed. For example, if the CaaS manager finds a node 1 and a node 2, a quantity of remaining CPUs of the node 1 is 18, a size of a remaining memory of the node 1 is 18 GB, a quantity of remaining CPUs of the node 2 is 26, a size of a remaining memory of the node 2 is 26 GB, the quantity of remaining CPUs of the node 1 is greater than a quantity of CPUs required for creating four pod instances, the size of the remaining memory of the node 1 is greater than a size of a remaining memory required for creating four pod instances, the quantity of remaining CPUs of the node 2 is greater than a quantity of CPUs required for creating six pod instances, and the size of the remaining memory of the node 2 is greater than a size of a remaining memory required for creating six pod instances, the CaaS manager may create four pod instances on the node 1 and creates six pod instances on the node 2.

In a possible implementation, if the CaaS manager determines, in the process of searching for a node, that the remaining resources of the node are insufficient, for example, each node in the cluster does not satisfy the instantiation condition, or for another example, a total quantity of container instances that can be instantiated by nodes that satisfy the instantiation condition in the cluster is less than a total quantity of to-be-created container instances, by using the VNFM, the CaaS manager may create a node, manage the node, and create a container instance on the newly managed node.

For an occasion at which the VNFM sends the container deployment template, optionally, the VNFM may send the container deployment template to the CaaS manager in advance, and the CaaS manager may store the container deployment template. In this case, each time the VNFM manages the lifecycle of the VNF, the CaaS manager may read the pre-stored container deployment template, and create a container instance based on the pre-stored container deployment template. Optionally, each time the VNFM manages the lifecycle of the VNF, the VNFM may alternatively send, in real time, the container deployment template corresponding to the VNF to the CaaS manager. In this case, the CaaS manager may receive the container deployment template, and create a container instance based on the container deployment template. The occasion at which the VNFM sends the container deployment template is not limited in this embodiment.

For example, a container deployment template used in the scale-out scenario is referred to as a first container deployment template, and a VNFC template corresponding to a to-be-scaled-out VNFC is referred to as a first VNFC template. A process of creating a container based on the container deployment template may include: The VNFM may obtain the first VNFC template based on the to-be-scaled-out VNFC, query a correspondence between a VNFC template and a container deployment template based on the first VNFC template, to obtain the first container deployment template corresponding to the first VNFC template, and send the first container deployment template to the CaaS manager. Then, the VNFM may generate a creation instruction based on the first container deployment template, where the creation instruction includes an identifier of the first container deployment template. The CaaS manager may determine the first container deployment template based on the creation instruction, and create the container instance based on the first container deployment template. The first VNFC template is used to describe the to-be-scaled-out VNFC, and the first container deployment template is used to describe a container that carries the to-be-scaled-out VNFC.

For example, a container deployment template used in the VNFC onboarding scenario is referred to as a second container deployment template. A VNFC template corresponding to a to-be-onboarded VNFC is referred to as a second VNFC template. A process of creating a container based on the container deployment template may include: The VNFM may obtain the second VNFC template based on the to-be-onboarded VNFC, query the correspondence between a VNFC template and a container deployment template based on the second VNFC template, to obtain the second container deployment template corresponding to the second VNFC template, and send the second container deployment template to the CaaS manager. Then, the VNFM may generate a creation instruction based on the second container deployment template, where the creation instruction includes an identifier of the second container deployment template. The CaaS manager may determine the second container deployment template based on the creation instruction, and create a container instance based on the second container deployment template. The second VNFC template is used to describe the to-be-onboarded VNFC, and the second container deployment template is used to describe a container that carries the to-be-onboarded VNFC.

In the correspondence between a VNFC template and a container deployment template, any VNFC template may correspond to one or more container deployment templates. Specifically, if a container carries one VNFC, a VNFC template of the VNFC may correspond to one container deployment template. If a combination of a plurality of containers carries one VNFC, a VNFC template of the VNFC may correspond to a plurality of container deployment templates. In addition, the correspondence between a VNFC template and a container deployment template may include an identifier of at least one VNFC template and an identifier of at least one container deployment template. The identifier of the VNFC template is used to indicate a corresponding VNFC template. The identifier of the container deployment template is used to indicate a corresponding container deployment template.

For example, the correspondence between a VNFC template and a container deployment template may be shown in the following Table 3. If the VNFC 1 needs to be scaled out currently, and a VNFC template of the VNFC 1 is a VNFC template 1, it may be determined, according to the following Table 3, that container deployment templates corresponding to the VNFC template 1 are a pod template 1.1, a pod template 1.2, and a pod template 1.3; and the generated creation instruction includes "pod template 1.1, pod template 1.2, and pod template 1.3". The CaaS manager uses the container deployment templates: the pod template 1.1, the pod template 1.2, and the pod template 1.3 to create a container instance according to the creation instruction.

**Table 3**

| VNFC template | Container deployment template |
|---|---|
| VNFC template 1 | Pod template 1.1, Pod template 1.2, Pod template 1.3 |
| VNFC template 2 | Pod template 2.1, Pod template 2.2 |
| VNFC template 3 | Pod template 3.1, Pod template 3.2, Pod template 3.3, Pod template 3.4 |

It should be noted that the terms "first container deployment template" and "second container deployment template" are merely intended to distinguish between and describe different container deployment templates, but should not be understood as explicitly or implicitly indicate relative importance of different container deployment templates, a relative relationship in time, or logical relative.

Optionally, in the VNFC onboarding scenario, in a possible implementation, the VNFM may obtain a container deployment template corresponding to a to-be-onboarded VNFC, and add the container deployment template to a model of the VNF. When the CaaS manager loads the model of the VNF, the CaaS manager creates a container instance based on the VNF model and the container deployment template corresponding to the to-be-onboarded VNFC, to add, to an application stack, a container corresponding to the to-be-onboarded VNFC. The application stack includes a group of interrelated containers, applications carried by different containers in the application stack depend on each other, and the application stack may define and coordinate functions of the VNF. Specifically, the application stack includes one or more containers. The application stack may be created based on the model of the VNF. The CaaS manager dynamically loads the model of the VNF. Each time a container deployment template is added to the model of the VNF, the CaaS manager creates a container instance based on the newly added container deployment template.

B: The CaaS manager receives the deletion instruction, and deletes a container instance of a container from the container cluster according to the deletion instruction.

If this embodiment is applied to the scale-in stage, for any container, assuming that the container includes k container instances, the CaaS manager may delete container instances of any quantity from 1 to (k-1) according to the deletion instruction. Therefore, for a VNFC carried by the container, after the container instance of the container is deleted, an application instance of the VNFC running on the deleted container instance is deleted accordingly, and a quantity of application instances included in the VNFC decreases. Therefore, the VNFC is scaled in, that is, the VNF is scaled in.

If this embodiment is applied to the VNFC termination stage, for any container, assuming that the container includes k container instances, the CaaS manager may delete the k container instances according to the deletion instruction, that is, may delete all container instances of the container. In this case, for a VNFC carried by the container, after all the container instances of the container are deleted, application instances of the VNFC that are run on all the deleted container instances are deleted, and the application instances included in the VNFC are deleted. Therefore, the VNFC is deleted, that is, the VNFC is terminated.

In a possible implementation, step 509 may include any one or a combination of the following (1) to (5).
(1) The CaaS manager receives the management instruction and manages the first container or the third container in the container cluster according to the management instruction. The CaaS manager may parse the management instruction to obtain the identifier of the first container or the identifier of the third container that is carried in the management instruction, and determine the third container based on the identifier of the first container or the identifier of the third container.

Because the first container carries the first VNFC, a status of the first container changes by managing the first container, and the first VNFC enters a target stage of a lifecycle as the status of the first container changes, thereby controlling the first VNFC to enter the target stage of the lifecycle. Based on the first pre-notification, a VNFC specified by the VNFM based on the pre-notification may be controlled. Similarly, because a status of the third container changes by managing the third container, the third VNFC enters the target stage of the lifecycle as the status of the third container changes, thereby controlling the third VNFC to enter the target stage of the lifecycle. Based on the pre-notification response, a VNFC fed back by the VNFM based on the pre-notification response may be controlled.

If this embodiment is applied to the scale-out scenario, the CaaS manager may create a container instance of the first container in the container cluster according to the management instruction. In this case, after the container instance of the first container is created, a newly-added application instance of the first VNFC is run on the newly added container instance of the first container, and the newly-added application instance of the first VNFC is started accordingly. In this case, a quantity of application instances of the first VNFC increases, so that the first VNFC is scaled out. Based on the pre-notification, a VNFC specified by the VNFM based on the pre-notification may be scaled out. Similarly, the CaaS manager may create a container instance of the third container in the container cluster according to the management instruction. In this case, after the container instance of the third container is created, a newly-added application instance of the third VNFC is run on the newly added container instance of the third container, and the newly-added application instance of the third VNFC is started accordingly. In this case, a quantity of application instances of the third VNFC increases, so that the third VNFC is scaled out. Based on the pre-notification response, a VNFC fed back by the VNFM based on the pre-notification response may be scaled out.

If this embodiment is applied to the scale-in scenario, the CaaS manager may delete a container instance of the first container from the container cluster according to the management instruction. In this case, because the first container carries the first VNFC, after the container instance of the first container is deleted, an application instance running on the deleted container instance is deleted accordingly. In this case, a quantity of application instances of the first VNFC decreases, so that the first VNFC is scaled in. Based on the pre-notification, a VNFC specified by the VNFM based on the pre-notification may be scaled in. Similarly, the CaaS manager may delete a container instance of the third container from the container cluster according to the management instruction. In this case, because the third container carries the third VNFC, after the container instance of the third container is deleted, an application instance running on the deleted container instance is deleted accordingly. In this case, a quantity of application instances of the third VNFC decreases, so that the third VNFC is scaled in. Based on the pre-notification response, a VNFC fed back by the VNFM based on the pre-notification response is scaled in.

If this embodiment is applied to the VNFC onboarding scenario, the CaaS manager may create the first container in the container cluster according to the management instruction. In this case, because the first container carries the first VNFC, after the first container is created, the first VNFC is started as the first container is created, so that the first VNFC is to be onboarded. Based on the pre-notification, a VNFC specified by the VNFM based on the pre-notification may be brought onboarded. Similarly, the CaaS manager may create the third container in the container cluster according to the management instruction. In this case, because the third container carries the third VNFC, after the third container is created, the third VNFC is started as the third container is created, so that the third VNFC is to be onboarded. Based on the pre-notification response, a VNFC fed back by the VNFM based on the pre-notification response is to be onboarded.

If this embodiment is applied to the VNFC termination scenario, the CaaS manager may delete the first container from the container cluster according to the management instruction. In this case, because the first container carries the first VNFC, after the first container is deleted, the first VNFC is deleted as the first container is deleted, so that the first VNFC is terminated. Based on the pre-notification, a VNFC specified by the VNFM based on the pre-notification may be brought terminated. Similarly, the CaaS manager may delete the third container from the container cluster according to the management instruction. In this case, because the third container carries the third VNFC, after the third container is deleted, the third VNFC is deleted as the third container is deleted, so that the third VNFC is terminated. Based on the pre-notification response, a VNFC fed back by the VNFM based on the pre-notification response may be brought terminated.

(2) The CaaS manager deletes the first container instance or the second container instance from the container cluster according to the management instruction. The CaaS manager may parse the management instruction to obtain the identifier of the first container instance or the identifier of the second container instance carried in the management instruction; and determine, based on the identifier of the first container instance, the first container corresponding to the identifier of the first container instance, or determine, based on the identifier of the second container instance, the second container instance corresponding to the identifier of the second container instance.

Because the first container instance carries the first application instance, after the first container instance is deleted, the first application instance is deleted accordingly as the first container instance is deleted. Based on the pre-notification, an application instance specified by the VNFM based on the pre-notification may be deleted. Similarly, because the second container instance carries the second application instance, after the second container instance is deleted, the second application instance is deleted accordingly as the second container instance is deleted. Based on the pre-notification response, an application instance fed back by the VNFM based on the pre-notification response may be deleted.

(3) The CaaS manager creates the container instances of the seventh quantity or the container instances of the ninth quantity in the container cluster according to the management instruction. The CaaS manager may parse the management instruction to obtain the seventh quantity or the ninth quantity carried in the management instruction.

Because the container instances of the seventh quantity carry the application instances of the first quantity, after the container instances of the seventh quantity are created, the application instances of the first quantity are started accordingly as the container instances of the seventh quantity are created. Based on the pre-notification, application instances of a quantity that is specified by the VNFM based on the pre-notification may be started. Similarly, because the container instances of the ninth quantity carry the application instances of the third quantity, after the container instances of the ninth quantity are created, the application instances of the third quantity are started accordingly as the container instances of the ninth quantity are created. Based on the pre-notification response, application instances of a quantity that is fed back by the VNFM based on the pre-notification response may be started.

Specifically, if this embodiment is applied to the scale-out stage, a quantity of application instances of the VNFC is increased by the first quantity by creating the container instances of the seventh quantity, so that the application instances of the first quantity are added to the VNFC. A quantity of application instances of the VNFC is increased by the third quantity by creating the application instances of the third quantity, so that the application instances of the third quantity are added to the VNFC. If this embodiment is applied to the VNFC onboarding stage, the application instances of the first quantity that are of a VNFC are started by creating the container instances of the seventh quantity, so that the VNFC including the application instances of the first quantity is to be onboarded. The application instances of the third quantity that are of a VNFC are started by creating the application instances of the ninth quantity, so that the VNFC including the application instances of the third quantity is to be onboarded.

(4) The CaaS manager deletes the container instances of the eighth quantity or the container instances of the tenth quantity from the container cluster according to the management instruction.

Because the container instances of the eighth quantity carry the application instances of the second quantity, after the container instances of the eighth quantity are deleted, the application instances of the second quantity are deleted accordingly as the container instances of the eighth quantity are deleted. Based on the pre-notification, application instances of a quantity that is specified by the VNFM based on the pre-notification may be deleted. Similarly, because the container instances of the tenth quantity carry the application instances of the fourth quantity, after the container instances of the tenth quantity are deleted, the application instances of the fourth quantity are deleted accordingly as the container instances of the tenth quantity are deleted. Based on the pre-notification response, application instances of a quantity that is fed back by the VNFM based on the pre-notification response may be deleted.

If this embodiment is applied to the scale-in stage, a quantity of application instances of a VNFC is decreased by the second quantity by deleting the application instances of the second quantity, so that the application instances of the second quantity are removed from the VNFC through scale-in. Similarly, a quantity of application instances of a VNFC is decreased by the fourth quantity by deleting the application instances of the fourth quantity, so that the application instances of the fourth quantity are removed from the VNFC through scale-in.

If this embodiment is applied to the VNFC termination stage, a quantity of applications instances of a VNFC is decreased by the second quantity by deleting the application instances of the second quantity, so that the VNFC including the application instances of the second quantity is to be terminated. Similarly, a quantity of applications instances of a VNFC is decreased by the fourth quantity by deleting the application instances of the fourth quantity, so that the VNFC including the application instances of the fourth quantity is to be terminated.

(5) The CaaS manager manages the container cluster according to the management instruction at the first time point or the second time point.

Because the container cluster carries the VNF, the container cluster is managed at the first time point or the second time point, so that the VNF enters the target stage of the lifecycle at the first time point or the second time point. Based on the pre-notification, the container cluster is managed at a time point specified by the VNFM based on the pre-notification, or the container cluster is managed at a time point fed back by the VNFM based on the pre-notification.

If this embodiment is applied to the scale-out scenario, the CaaS manager may create a container instance at the first time point or the second time point according to the management instruction, to scale out the VNF at the first time point or the second time point. If this embodiment is applied to the scale-in scenario, the CaaS manager may delete a container instance at the first time point or the second time point according to the management instruction, to scale in the VNF at the first time point or the second time point. If this embodiment is applied to the VNFC onboarding scenario, the CaaS manager may create a container instance at the first time point or the second time point according to the management instruction, to bring a VNFC onboarded at the first time point or the second time point. If this embodiment is applied to the VNFC termination scenario, the CaaS manager may delete a container instance at the first time point or the second time point according to the management instruction, to bring a VNFC terminated at the first time point or the second time point.

Optionally, when determining that the CaaS manager has completed management for the container cluster, the VNFM may generate a post-notification, where the post-notification is used to notify that the VNF is already at the target stage of the lifecycle; and the VNFM may send the post-notification to the VNF. In a possible implementation, the VNFM may query the CaaS manager about creation progress to obtain completion progress, and send a query status (English: query status) message to the CaaS manager. When the CaaS manager receives the query status message, sends current processing progress to the VNFM. The VNFM may receive the processing progress of the CaaS manager, and determine, based on the processing progress, that the CaaS manager completes management for the container cluster. In another possible implementation, the CaaS manager may generate a management completion notification after completing management, and send the management completion notification to the VNFM. The VNFM may receive the management completion notification, and determine, based on the management completion notification, that the CaaS manager completes management for the container cluster. The management completion notification may include at least one of a creation completion notification or a deletion completion notification, and the processing progress may include at least one of creation progress or deletion progress. Specifically, if this embodiment is applied to the scale-out stage and the onboarding stage, the management completion notification may be the creation completion notification, and the processing progress may be the creation progress. If this embodiment is applied to the scale-in stage and the onboarding stage, the management completion notification may be the deletion completion notification, and the processing progress may be the deletion progress.

Optionally, the CaaS manager may set graceful deletion duration, where the graceful deletion duration is used to delay deleting the container. When the CaaS manager receives the deletion instruction, the CaaS manager may start a timer; after the graceful deletion duration elapses, the CaaS manager deletes a corresponding container.

510: The VNF executes a processing procedure after the pre-processing procedure at the target stage.

511: The CaaS manager removes the one or more virtual machines.

In a possible implementation, the CaaS manager may delete each container instance of each container carried by the virtual machine. When the virtual machine does not carry any container instance of any container, the VNFM may remove the virtual machine from the CaaS manager. Then, the VNFM releases the virtual machine. The virtual machine is configured to provide a running environment for a deleted container instance.

Specifically, the virtual machine may be removed in any one or a combination of the following manner 1 to manner 3.

Manner 1: The CaaS manager receives a removal instruction for the virtual machine, and removes the virtual machine from the CaaS manager according to the removal instruction for the virtual machine; and optionally, the VNFM releases the removed virtual machine after the removal succeeds.

Manner 2: The VNFM monitors resource usage of the virtual machine, and when the resource usage is less than a resource usage threshold, removes the virtual machine from the CaaS manager; and optionally, the VNFM releases the removed virtual machine after the removal succeeds.

Manner 3: The CaaS manager may monitor the resource usage of the virtual machine; when the resource usage of the virtual machine is less than the resource usage threshold, determine whether to invoke an interface of the VNFM, and then actively determine whether to delete the virtual machine.

Optionally, the CaaS manager may provide a removal interface, where the removal interface may be a REST interface. The VNFM may invoke the removal interface of the CaaS manager in a REST interface manner, and send the removal instruction to the CaaS manager through the removal interface, to remove the virtual machine from the CaaS manager.

A process of managing a physical machine may include: The VNFM manages the physical machine to the CaaS manager, where the physical machine is configured to provide a running environment for a to-be-created container instance. A process of removing a physical machine may include: The CaaS manager deletes each container instance of each container carried by the physical machine; and when the physical machine does not carry any container instance of any container, the VNFM may remove the physical machine from the CaaS manager. The physical machine is configured to provide a running environment for a deleted container instance.

The method provided in this embodiment can support the lifecycle management procedure in the VNF containerization scenario, and provide a service lossless solution in the VNF containerization scenario. The CaaS manager manages the container cluster in which the VNF runs, and the VNFM exchanges information with the CaaS manager to indicate the CaaS manager to manage the container cluster, thereby implementing the function of managing the lifecycle of the VNF. In the VNF management procedure, the VNFM may function as a communication medium between the VNF and the CaaS manager, and the VNFM may shield implementation differences between different CaaS managers, and provide a uniform lifecycle management interface for the VNF.

The following uses an example in which the target stage of the lifecycle in the embodiment of FIG. 4 is a scale-out stage for description.

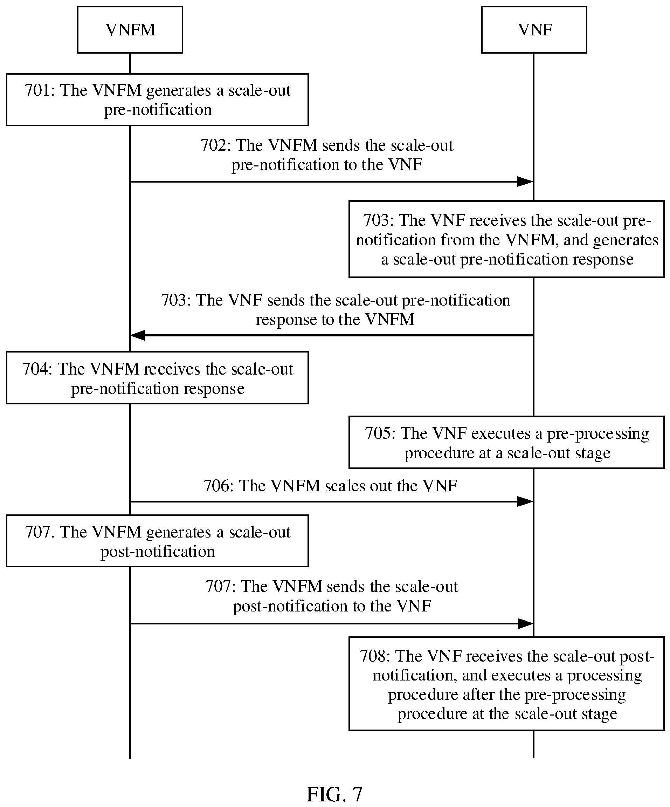

FIG. 7 is a flowchart of a VNF scale-out method according to an embodiment of this application. As shown in FIG. 7, the method is performed by a VNF and a VNFM, and includes the following steps.

701: The VNFM generates a scale-out pre-notification.

The scale-out pre-notification may include at least one of an identifier of a first VNFC, a first quantity, and a first time point. Optionally, the VNFM generates the scale-out pre-notification based on the first VNFC. Optionally, the VNFM generates the scale-out pre-notification based on the first quantity. Optionally, the VNFM generates the scale-out pre-notification based on the first time point. Step 701 is similar to step 401. For specific details, refer to step 401. Details are not described herein again.

702: The VNFM sends the scale-out pre-notification to the VNF.

703: The VNF receives the scale-out pre-notification from the VNFM, generates a scale-out pre-notification response, and sends the scale-out pre-notification response to the VNFM.

The scale-out pre-notification response may include at least one of an allowance identifier, a rejection identifier, reason information, an identifier of a third VNFC, a third quantity, and the first time point. Optionally, the VNF generates the scale-out pre-notification response based on the first VNFC. Optionally, the VNF generates the scale-out pre-notification response based on the first quantity. Optionally, the VNF generates the scale-out pre-notification response based on the first time point. Step 703 is similar to step 403, and details are not described herein again.

704: The VNFM receives the scale-out pre-notification response.

705: The VNF executes a pre-processing procedure at the scale-out stage.

It should be understood that a sequence of step 703 and step 705 is not limited in this embodiment. In some other embodiments, the VNF may first execute the pre-processing procedure at the scale-out stage, and then the VNF generates the scale-out pre-notification response, and sends the scale-out pre-notification response to the VNFM. Sequence numbers of the foregoing steps in this embodiment do not indicate an execution sequence. The execution sequence of the steps should be determined based on functions and internal logic of the steps, and should not be construed as any limitation on the implementation process of this embodiment of this application.

Optionally, step 705 may include either or both of (A1) and (A2) in step 406. Optionally, when the scale-out pre-notification includes the identifier of the first VNFC, the VNF may obtain the identifier of the first VNFC based on the scale-out pre-notification, determine the first VNFC based on the identifier of the first VNFC, and execute the pre-processing procedure at the scale-out stage for the first VNFC. Optionally, when the scale-out pre-notification includes the first quantity, the VNF may obtain the first quantity based on the scale-out pre-notification, and execute the pre-processing procedure at the scale-out stage based on the first quantity. Optionally, when the scale-out pre-notification includes the first time point, the VNF may obtain the first time point based on the scale-out pre-notification, and execute the pre-processing procedure at the scale-out stage based on the first time point.

Optionally, when the VNF executes the pre-processing procedure at the scale-out stage, the VNF may generate scale-out pre-processing progress information based on progress of the pre-processing procedure, and send the scale-out pre-processing progress information to the VNFM. The scale-out pre-processing progress information is used to indicate the progress of executing the pre-processing procedure by the VNF. The scale-out pre-processing progress information may be positively correlated to completed workload of the pre-processing procedure, and negatively correlated to total workload that needs to be completed in the pre-processing procedure.

706: The VNFM scales out the VNF.

Optionally, the VNFM may receive the scale-out pre-processing progress information of the VNF; determines, based on the scale-out pre-processing progress information, that the VNF has executed the pre-processing procedure at the scale-out stage; and scales out the VNF.

Optionally, when the scale-out pre-notification includes the allowance identifier, the VNFM may scale out the first VNFC based on the scale-out pre-notification response. When the scale-out pre-notification includes the identifier of the third VNFC, the VNFM may obtain the identifier of the third VNFC based on the scale-out pre-notification response, determine the third VNFC based on the identifier of the third VNFC, and scale out the third VNFC in the VNF. When the scale-out pre-notification includes at least one of the rejection identifier and the reason information, the VNFM determines, based on the scale-out pre-notification response, a fifth VNFC other than the first VNFC, and scales out the fifth VNFC, that is, scales out a VNFC other than the first VNFC.

Optionally, when the scale-out pre-notification includes the allowance identifier, the VNFM starts application instances of the first quantity based on the scale-out pre-notification response. When the scale-out pre-notification includes the third quantity, the VNFM determines the third quantity based on the scale-out pre-notification response, and starts application instances of the third quantity. When the scale-out pre-notification includes at least one of the rejection identifier and the reason information, the VNFM determines, based on the scale-out pre-notification response, a fifth quantity that is less than the first quantity, and starts application instances of the fifth quantity, that is, starts application instances of another quantity that are of a VNFC.

Optionally, when the scale-out pre-notification includes the allowance identifier, the VNFM scales out the VNF at the first time point based on the scale-out pre-notification response. When the scale-out pre-notification includes a second time point, the VNFM obtains the second time point based on the scale-out pre-notification response, and scales out the VNF at the second time point. When the scale-out pre-notification includes at least one of the rejection identifier and the reason information, the VNFM determines a third time point based on the scale-out pre-notification response, and controls, at the third time point, another VNFC in the VNF to enter the target stage of the lifecycle.

707: The VNFM generates a scale-out post-notification, and sends the scale-out post-notification to the VNF, where the scale-out post-notification is used to notify the VNF that scale-out is completed.

708: The VNF receives the scale-out post-notification, and the VNF executes a processing procedure after the pre-processing procedure at the scale-out stage.

The procedure after the pre-processing procedure may include either or both of (A1) and (A2) in step 408. Optionally, after receiving the scale-out post-notification, the VNF may generate a scale-out post-notification response, and send the scale-out post-notification response to the VNFM. The VNFM may receive the scale-out post-notification response from the VNF, and may determine, based on the scale-out post-notification response, that the VNF has received the scale-out post-notification. The scale-out post-notification response message is a response to the scale-out post-notification, and the scale-out post-notification response message may be an ACK message of the scale-out post-notification.

According to the method provided in this embodiment, the VNFM sends the scale-out pre-notification to the VNF before scaling out the VNF, in other words, the VNFM may remind the VNF in advance, before scaling out the VNF, that the VNF is to be scaled out, so that the VNF can predict, based on the scale-out pre-notification, that the VNF is to be scaled out, and perform the scale-out pre-processing procedure in advance, thereby improving service processing efficiency. After the VNF is scaled out, a service loss and service flapping can be avoided because preparations are made in advance, thereby implementing smooth service migration. Further, smooth service migration may be performed in advance for scale-out, thereby implementing hitless service migration, and avoiding a service loss caused by temporarily performing smooth service migration after scale-out. Further, the VNFM may send the scale-out post-notification to the VNF after scaling out the VNF, so that the VNF may perceive, based on the received scale-out post-notification, an occasion at which the VNFM terminates a scale-out action, and trigger smooth service migration and waiting procedures that are after the scale-out procedure.

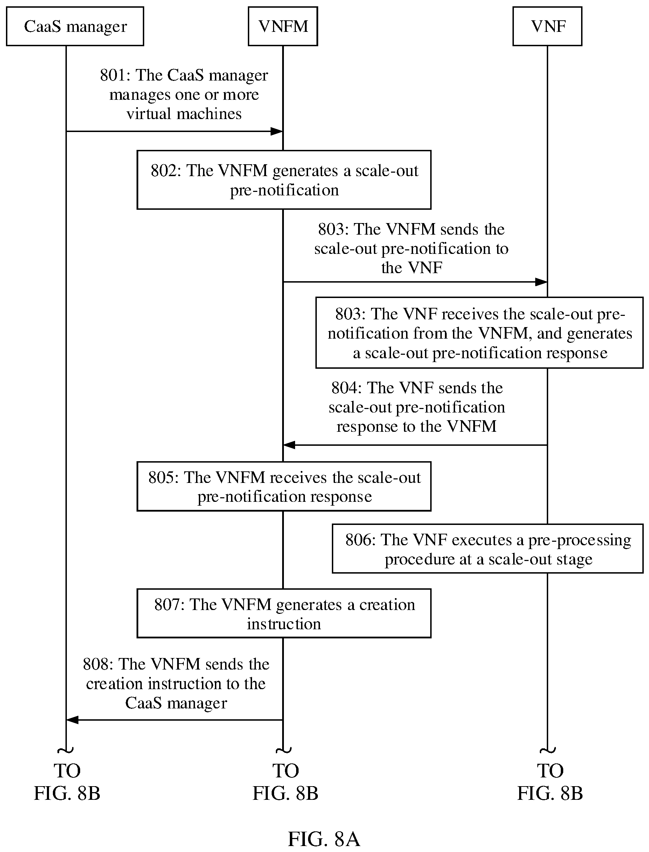

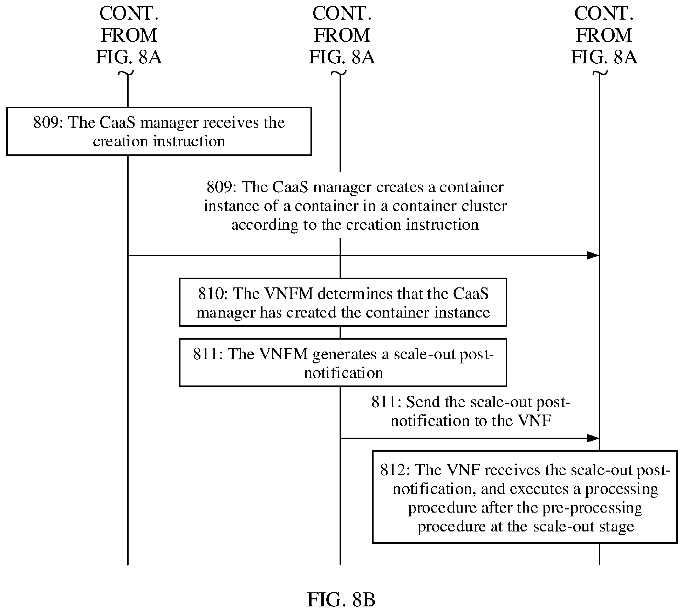

Optionally, the embodiment of FIG. 7 may be applied to a containerization scenario. In a possible implementation, a CaaS manager may be introduced based on FIG. 7, and the VNFM interacts with the CaaS manager to implement the function of scaling out the VNF in the VNF containerization scenario. For a specific procedure, refer to an embodiment of FIG. 8A and FIG. 8B. It should be noted that, the embodiment of FIG. 8A and FIG. 8B mainly focuses on differences between the embodiment of FIG. 8A and FIG. 8B and the embodiment of FIG. 7. For steps similar to those in the embodiment of FIG. 7, refer to the embodiment of FIG. 7. Details are not described in the embodiment of FIG. 8A and FIG. 8B.

FIG. 8A and FIG. 8B are a flowchart of a VNF scale-out method according to an embodiment of this application. As shown in FIG. 8A and FIG. 8B, the method is performed by a VNF, a VNFM, and a CaaS manager, and includes the following steps.

801: The CaaS manager manages one or more virtual machines.

In the embodiment of FIG. 8A, step 802 is similar to step 701, step 803 is similar to step 702, step 804 is similar to step 703, step 805 is similar to step 704, and step 806 is similar to step 705. For specific content, refer to the embodiment shown in FIG. 7. Details are not described herein again.

It should be understood that a sequence of step 803, step 804, and step 806 is not limited in this embodiment. In some other embodiments, the VNF may first execute a pre-processing procedure at a scale-out stage, and then the VNF generates a scale-out pre-notification response, and sends the scale-out pre-notification response to the VNFM. Sequence numbers of the foregoing steps in this embodiment do not indicate an execution sequence. The execution sequence of the steps should be determined based on functions and internal logic of the steps, and should not be construed as any limitation on the implementation process of this embodiment of this application.

807: The VNFM generates a creation instruction.

Optionally, the VNFM may generate a creation instruction of different content based on a different purpose of a scale-out operation. When a third VNFC in the VNF needs to be scaled out, the VNFM generates the creation instruction based on an identifier of a third container. The creation instruction is used to instruct the CaaS manager to create a container instance of the third container in a container cluster. When application instances of a third quantity need to be started, the VNFM generates the creation instruction based on a ninth quantity. The creation instruction is used to instruct the CaaS manager to create container instances of the ninth quantity in the container cluster, and the creation instruction may include the ninth quantity. When the VNF needs to be scaled out at a second time point, the VNFM generates the creation instruction based on the second time point. The creation instruction is used to instruct the CaaS manager to create a container instance at the second time point. The creation instruction may include the second time point. When a VNFC other than a first VNFC needs to be scaled out, the VNFM generates the creation instruction based on an identifier of a fifth container. The creation instruction may include the identifier of the fifth container. The fifth container is one or more containers that carry a fifth VNFC in the container cluster. When application instances of another quantity that are of a VNFC need to be started, the VNFM generates the creation instruction based on an eleventh quantity. The creation instruction may include the eleventh quantity. When another VNFC that is in the VNF needs to be controlled, at another time point, to enter a target stage of a lifecycle, the VNFM generates the creation instruction based on a third time point. The creation instruction may include the third time point.

808: The VNFM sends the creation instruction to the CaaS manager.

809: The CaaS manager receives the creation instruction, and creates a container instance of a container in the container cluster according to the creation instruction.

Optionally, when the creation instruction includes an identifier of a first container, according to the creation instruction, the CaaS manager may determine the first container and create a container instance of the first container. When the creation instruction includes the identifier of the third container, according to the creation instruction, the CaaS manager may determine the third container and create the container instance of the third container. When the creation instruction includes the identifier of the fifth container, according to the creation instruction, the CaaS manager may determine the fifth container and create a container instance of the fifth container. Alternatively, when the creation instruction includes a seventh quantity, according to the creation instruction, the CaaS manager may obtain the seventh quantity and create container instances of the seventh quantity. When the creation instruction includes the ninth quantity, according to the creation instruction, the CaaS manager may obtain the ninth quantity and create the container instances of the ninth quantity. When the creation instruction includes an eleventh quantity, according to the creation instruction, the CaaS manager may obtain the eleventh quantity and create container instances of the eleventh quantity. Alternatively, when the creation instruction includes a first time point, the CaaS manager creates a container instance at the first time point according to the creation instruction. When the creation instruction includes the second time point, the CaaS manager creates a container instance at the second time point according to the creation instruction. When the creation instruction includes the third time point, the CaaS manager creates a container instance at the third time point according to the creation instruction.

810: The VNFM determines that the CaaS manager has created the container instance.

811: The VNFM generates a scale-out post-notification, and the VNFM sends the scale-out post-notification to the VNF.

812: The VNF receives the scale-out post-notification, and the VNF executes a processing procedure after the pre-processing procedure at the scale-out stage.

The method provided in this embodiment can support the scale-out procedure in a VNF containerization scenario, and provide a service lossless solution in the VNF containerization scenario. The CaaS manager manages the container cluster, and the VNFM exchanges information with the CaaS manager and the VNF. When the VNF needs to be scaled out, the VNFM may interact with the CaaS manager, to indicate the CaaS manager to create a container instance of a container in the container cluster. Because the VNF is carried by the container cluster, a quantity of application instances of a VNFC in the VNF increases accordingly as a quantity of container instances in the container cluster increases, thereby implementing the function of scaling out the VNF. In the VNF management procedure, the VNFM may function as a communication medium between the VNF and the CaaS manager, and the VNFM may shield implementation differences between different CaaS managers, and provide a uniform scale-out interface for the VNF.

The following uses an example in which the target stage of the lifecycle in the embodiment of FIG. 4 is a scale-in stage for description.

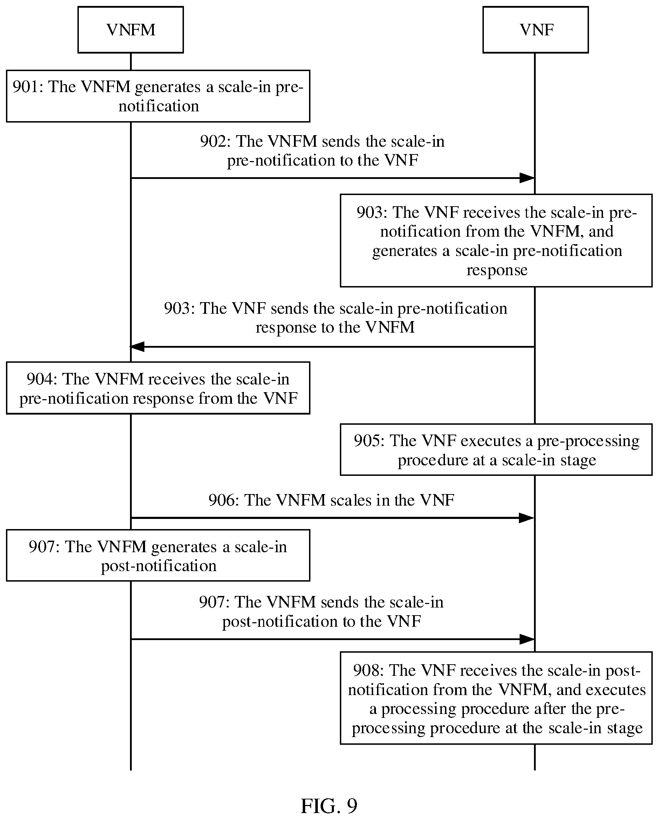

FIG. 9 is a flowchart of a VNF scale-in method according to an embodiment of this application. As shown in FIG. 9, the method is performed by a VNF and a VNFM, and includes the following steps.

901: The VNFM generates a scale-in pre-notification.

The scale-in pre-notification may include at least one of an identifier of a first VNFC, an identifier of a first application instance, a second quantity, and a first time point. Optionally, the VNFM generates the scale-in pre-notification based on the first VNFC. Optionally, the VNFM generates the scale-in pre-notification based on the first application instance. Optionally, the VNFM generates the scale-in pre-notification based on the second quantity. Optionally, the VNFM generates the scale-in pre-notification based on the first time point. Step 901 is similar to step 401. For specific details, refer to step 401. Details are not described herein again.

902: The VNFM sends the scale-in pre-notification to the VNF.

903: The VNF receives the scale-in pre-notification from the VNFM, generates a scale-in pre-notification response, and sends the scale-in pre-notification response to the VNFM, where the scale-in pre-notification response is a response to the scale-in pre-notification.

The scale-in pre-notification response may include at least one of an allowance identifier, a rejection identifier, reason information, an identifier of a third VNFC, the identifier of the first application instance, the second quantity, a third quantity, and the first time point. Optionally, the VNF generates the scale-in pre-notification response based on the first VNFC. Optionally, the VNF generates the scale-in pre-notification response based on the first application instance. Optionally, the VNF generates the scale-in pre-notification response based on the second quantity. Optionally, the VNF generates the scale-in pre-notification response based on the first time point. Step 903 is similar to step 403. For specific details, refer to step 403. Details are not described herein again.

904: The VNFM receives the scale-in pre-notification response from the VNF.

905: The VNF executes a pre-processing procedure at the scale-in stage.

It should be understood that a sequence of step 903, step 904, and step 905 is not limited in this embodiment. In some other embodiments, the VNF may first execute the pre-processing procedure at the scale-in stage, and then the VNF generates the scale-in pre-notification response, and sends the scale-in pre-notification response to the VNFM. Sequence numbers of the foregoing steps in this embodiment do not indicate an execution sequence. The execution sequence of the steps should be determined based on functions and internal logic of the steps, and should not be construed as any limitation on the implementation process of this embodiment of this application.

Optionally, step 905 may include either or both of (B1) and (B2) in step 406. Optionally, when the scale-in pre-notification includes the identifier of the first VNFC, the VNF may obtain the identifier of the first VNFC based on the scale-in pre-notification, determine the first VNFC based on the identifier of the first VNFC, and execute the pre-processing procedure at the scale-in stage for the first VNFC. Optionally, the VNF obtains the identifier of the first application instance based on the scale-in pre-notification, determines the first application instance based on the identifier of the first application instance, and executes the pre-processing procedure at the scale-in stage for the first application instance. Optionally, when the scale-in pre-notification includes the second quantity, the VNF may obtain the second quantity based on the scale-in pre-notification, and execute the pre-processing procedure at the scale-in stage based on the second quantity. Optionally, when the scale-in pre-notification includes the first time point, the VNF may obtain the first time point based on the scale-in pre-notification, and execute the pre-processing procedure at the scale-in stage based on the first time point.

906: The VNFM scales in the VNF.

Optionally, when the scale-in pre-notification includes the allowance identifier, the VNFM may scale in the first VNFC based on the scale-in pre-notification response. When the scale-in pre-notification includes the identifier of the third VNFC, the VNFM may obtain the identifier of the third VNFC based on the scale-in pre-notification response, determine the third VNFC based on the identifier of the third VNFC, and scale in the third VNFC in the VNF. When the scale-in pre-notification includes at least one of the rejection identifier and the reason information, the VNFM determines a fifth VNFC other than the first VNFC based on the scale-in pre-notification response, and scales in the fifth VNFC, that is, scales in a VNFC other than the first VNFC.

Optionally, when the scale-in pre-notification includes the allowance identifier, the VNFM may delete the first application instance based on the scale-in pre-notification response. When the scale-in pre-notification includes an identifier of a second application instance, the VNFM may obtain the identifier of the second application instance based on the scale-in pre-notification response, determine the second application instance based on the identifier of the second application instance, and delete the second application instance. When the scale-in pre-notification includes at least one of the rejection identifier and the reason information, the VNFM determines the fifth VNFC other than the first VNFC based on the scale-in pre-notification response, and deletes a third application instance.

Optionally, when the scale-in pre-notification includes the allowance identifier, the VNFM deletes application instances of a first quantity based on the scale-in pre-notification response. When the scale-in pre-notification includes the third quantity, the VNFM determines the third quantity based on the scale-in pre-notification response, and deletes application instances of the third quantity. When the scale-in pre-notification includes at least one of the rejection identifier and the reason information, the VNFM determines, based on the scale-in pre-notification response, a fifth quantity that is less than the first quantity, deletes application instances of the fifth quantity, that is, deletes application instances of another quantity that are of a VNFC.

Optionally, when the scale-in pre-notification includes the allowance identifier, the VNFM scales in the VNF based on the scale-in pre-notification response at the first time point. When the scale-in pre-notification includes a second time point, the VNFM obtains the second time point based on the scale-in pre-notification response, and scales in the VNF at the second time point. When the scale-in pre-notification includes at least one of the rejection identifier and the reason information, the VNFM determines a third time point based on the scale-in pre-notification response, and controls, at the third time point, another VNFC in the VNF to enter the target stage of the lifecycle.

907: The VNFM generates a scale-in post-notification, and sends the scale-in post-notification to the VNF, where the scale-in post-notification is used to notify the VNF that scale-in is completed.

908: The VNF receives the scale-in post-notification from the VNFM, and the VNF executes a processing procedure after the pre-processing procedure at the scale-in stage.

Optionally, the procedure after the pre-processing procedure at the scale-in stage may include any one or a combination of (B1) and (B2) in step 408.

Optionally, after the VNF receives the scale-in post-notification, the VNF may generate a scale-in post-notification response, and send the scale-in post-notification response to the VNFM. The VNFM may receive the scale-in post-notification response from the VNF, and may determine, based on the scale-in post-notification response, that the VNF has received the scale-in post-notification. The scale-in post-notification response is a response to the scale-in post-notification, and the scale-in post-notification response may be an ACK message of the scale-in post-notification.

According to the method provided in this embodiment, the VNFM sends the scale-in pre-notification to the VNF before scaling in the VNF, in other words, the VNFM may remind the VNF in advance, before scaling in the VNF, that the VNF is to be scaled in, so that the VNF can predict, based on the scale-in pre-notification, that the VNF is to be scaled in, and execute the pre-processing procedure at the scale-in stage in advance for scale-in. Therefore, after the VNF is scaled in, a service loss and service flapping can be avoided because preparations are made in advance, thereby implementing smooth service migration. In addition, service processing efficiency can be improved because the pre-processing procedure is executed in advance. Further, smooth service migration may be performed in advance for scale-in, thereby implementing hitless service migration, and avoiding a service loss caused by temporarily performing smooth service migration after scale-in. Further, after scaling in the VNF, the VNFM may send the scale-in post-notification to the VNF, so that the VNF may perceive, based on the received scale-in post-notification, an occasion at which the VNFM terminates a scale-in action, and trigger a clearance procedure, a waiting procedure, and other transaction procedure that are after the scale-in procedure.

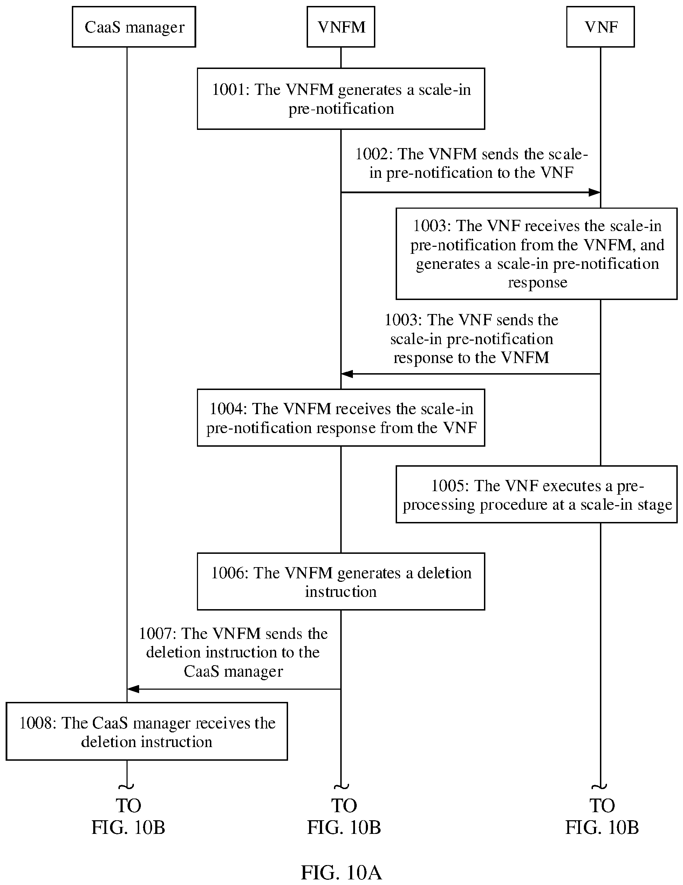

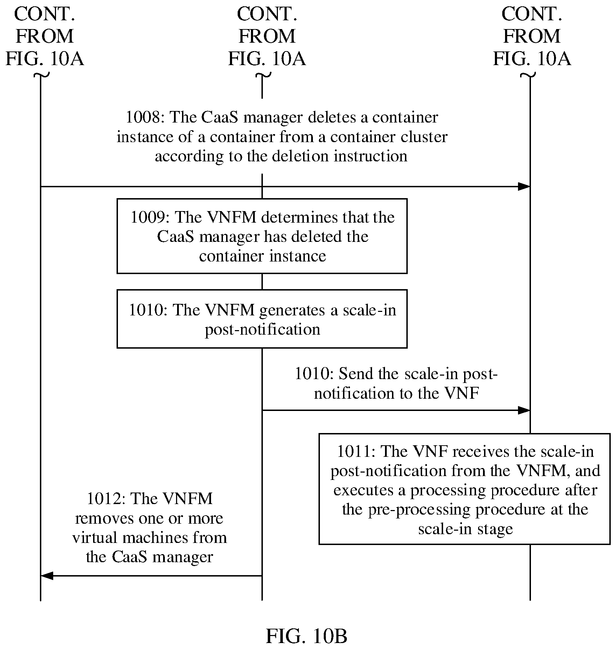

Optionally, the embodiment of FIG. 9 may be applied to a containerization scenario. In a possible implementation, a CaaS manager may be introduced based on FIG. 9, and the VNFM interacts with the CaaS manager to implement the function of scaling in the VNF in the VNF containerization scenario. It should be noted that, an embodiment of FIG. 10A and FIG. 10B mainly focuses on differences between the embodiment of FIG. 10A and FIG. 10B and the embodiment of FIG. 9. For steps similar to those in the embodiment of FIG. 9, refer to the embodiment of FIG. 9. Details are not described in the embodiment of FIG. 10A and FIG. 10B.

FIG. 10A and FIG. 10B are a flowchart of a VNF scale-in method according to an embodiment of this application. As shown in FIG. 10A and FIG. 10B, the method is performed by a VNF, a VNFM, and a CaaS manager, and includes the following steps.

In the embodiment of FIG. 10A and FIG. 10B, step 1001 is similar to step 901, step 1002 is similar to step 902, step 1003 is similar to step 903, step 1004 is similar to step 904, and step 1005 is similar to step 905. For specific content, refer to the embodiment shown in FIG. 9. Details are not described herein again.

It should be understood that a sequence of step 1003, step 1004, and step 1005 is not limited in this embodiment. In some other embodiments, the VNF may first execute a pre-processing procedure at a scale-in stage, and then the VNF generates a scale-in pre-notification response, and sends the scale-in pre-notification response to the VNFM. Sequence numbers of the foregoing steps in this embodiment do not indicate an execution sequence. The execution sequence of the steps should be determined based on functions and internal logic of the steps, and should not be construed as any limitation on the implementation process of this embodiment of this application.

1006: The VNFM generates a deletion instruction.

Optionally, the VNFM generates a deletion instruction of different content based on a different purpose of a scale-in operation.

For example, when a first VNFC in the VNF needs to be scaled in, the VNFM generates the deletion instruction based on an identifier of a first container. The deletion instruction is used to instruct the CaaS manager to delete a container instance of the first container from a container cluster, and the deletion instruction may include the identifier of the first container. When a third VNFC in the VNF needs to be scaled in, the VNFM generates the deletion instruction based on an identifier of a third container. The deletion instruction is used to instruct the CaaS manager to delete a container instance of the third container from the container cluster. The deletion instruction may include the identifier of the third container. When a VNFC other than the first VNFC needs to be scaled in, the VNFM generates the deletion instruction based on an identifier of a fifth container. The deletion instruction is used to instruct the CaaS manager to delete a container instance of the fifth container from the container cluster. The fifth container is one or more containers that carry a fifth VNFC in the container cluster. The deletion instruction may include the identifier of the fifth container.

When a first application instance needs to be deleted, the VNFM generates the deletion instruction based on an identifier of a first container instance. The deletion instruction is used to instruct the CaaS manager to delete the first container instance from the container cluster. The deletion instruction may include the identifier of the first container instance. When a second application instance needs to be deleted, the VNFM generates the deletion instruction based on an identifier of a second container instance. The deletion instruction is used to instruct the CaaS manager to delete the second container instance from the container cluster. The deletion instruction may include the identifier of the second container instance.

When application instances of a second quantity need to be deleted, the VNFM generates the deletion instruction based on an eighth quantity. The deletion instruction is used to instruct the CaaS manager to delete container instances of the eighth quantity from the container cluster, where the container instances of the eighth quantity are used to carry the application instances of the second quantity. The deletion instruction may include the eighth quantity. When application instances of a fourth quantity need to be deleted, the VNFM generates the deletion instruction based on a tenth quantity, where container instances of the tenth quantity are used to carry the application instances of the fourth quantity. The deletion instruction is used to instruct the CaaS manager to delete the container instances of the tenth quantity from the container cluster. The deletion instruction may include the tenth quantity. When application instances of another quantity need to be deleted, the VNFM generates the deletion instruction based on a twelfth quantity. The twelfth quantity is a positive integer, the deletion instruction is used to instruct the CaaS manager to delete container instances of the twelfth quantity in the container cluster, and the container instances of the twelfth quantity are used to carry application instances of a sixth quantity. The deletion instruction may include the twelfth quantity.

When the VNF needs to be scaled in at a first time point, the VNFM generates the deletion instruction based on the first time point. The deletion instruction may include the first time point. When the VNF needs to be scaled in at a second time point, the VNFM generates the deletion instruction based on the second time point. The deletion instruction is used to instruct the CaaS manager to delete a container instance from the container cluster at the second time point. The deletion instruction may include the second time point. When an application instance other than the first application instance needs to be deleted, the VNFM generates the deletion instruction based on an identifier of a third container instance. The third container instance is one or more instances of a second container that carry a third application instance, and the deletion instruction is used to instruct the CaaS manager to delete the third container instance from the container cluster. The deletion instruction may include the identifier of the third container instance. When another VNFC in the VNF needs to be scaled in at another time point, the VNFM generates the deletion instruction based on a third time point. The deletion instruction is used to instruct the CaaS manager to delete a container instance from the container cluster at the third time point. The deletion instruction may include the third time point.

1007: The VNFM sends the deletion instruction to the CaaS manager.

1008: The CaaS manager receives the deletion instruction, and deletes a container instance of a container from the container cluster according to the deletion instruction.

Optionally, the CaaS manager may perform different operations based on different content of the deletion instruction. For example, when the deletion instruction includes the identifier of the first container, the CaaS manager deletes the container instance of the first container from the container cluster according to the deletion instruction. When the deletion instruction includes the identifier of the first container instance, the CaaS manager deletes the first container instance from the container cluster according to the deletion instruction. When the deletion instruction includes the eighth quantity, the CaaS manager deletes the container instances of the eighth quantity from the container cluster according to the deletion instruction. When the deletion instruction includes the first time point, the CaaS manager deletes the container instance of the container from the container cluster at the first time point according to the deletion instruction. When the deletion instruction includes the identifier of the third container, the CaaS manager deletes the container instance of the third container from the container cluster according to the deletion instruction. When the deletion instruction includes the identifier of the second container instance, the CaaS manager deletes the second container instance from the container cluster according to the deletion instruction. When the deletion instruction includes the tenth quantity, the CaaS manager deletes the container instances of the tenth quantity from the container cluster according to the deletion instruction. When the deletion instruction includes the second time point, the CaaS manager deletes the container instance from the container cluster at the second time point according to the deletion instruction. When the deletion instruction includes the identifier of the fifth container, the CaaS manager deletes the container instance of the fifth container from the container cluster according to the deletion instruction. When the deletion instruction includes the identifier of the third container instance, the CaaS manager deletes the third container instance from the container cluster according to the deletion instruction. When the deletion instruction includes the twelfth quantity, the CaaS manager deletes the container instances of the twelfth quantity from the container cluster according to the deletion instruction. When the deletion instruction includes the third time point, the CaaS manager deletes the container instance from the container cluster at the third time point according to the deletion instruction.

1009: The VNFM determines that the CaaS manager has deleted the container instance.

1010: The VNFM generates a scale-in post-notification, and sends the scale-in post-notification to the VNF.

1011: The VNF receives the scale-in post-notification from the VNFM, and executes a processing procedure after the pre-processing procedure at the scale-in stage.

1012: The VNFM removes one or more virtual machines from the CaaS manager.

The method provided in this embodiment can support the scale-in procedure in the VNF containerization scenario, and provide a service lossless solution in the VNF containerization scenario. The CaaS manager manages the container cluster, and the VNFM exchanges information with the CaaS manager and the VNF. When the VNF needs to be scaled in, the VNFM may interact with the CaaS manager, to indicate the CaaS manager to delete a container instance of a container from the container cluster. Because the VNF is carried by the container cluster, a quantity of application instances of a VNFC in the VNF decreases accordingly as a quantity of container instances in the container cluster decreases, thereby implementing the function of scaling in the VNF. In the VNF management procedure, the VNFM may function as a communication medium between the VNF and the CaaS manager, and the VNFM may shield implementation differences between different CaaS managers, and provide a uniform scale-in interface for the VNF.

The following uses an example in which the target stage of the lifecycle in the embodiment of FIG. 4 is a VNFC onboarding stage description.

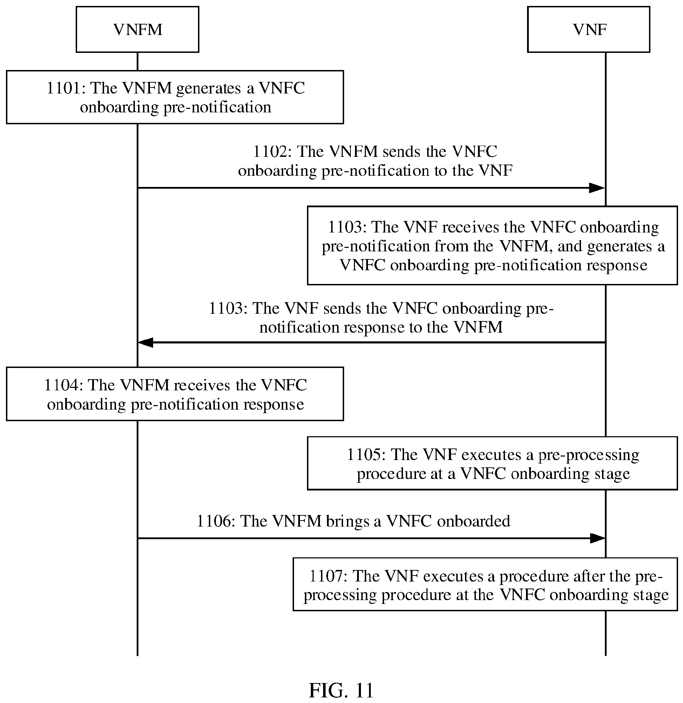

FIG. 11 is a flowchart of a VNFC onboarding method according to an embodiment of this application. As shown in FIG. 11, the method is performed by a VNF and a VNFM, and includes the following steps.

1101: The VNFM generates a VNFC onboarding pre-notification.

The VNFC onboarding pre-notification may include at least one of an identifier of a first VNFC, a first quantity, and a first time point. Optionally, the VNFM generates a first VNFC onboarding pre-notification based on the first VNFC. Optionally, the VNFM generates a second VNFC onboarding pre-notification based on the first quantity. Optionally, the VNFM generates a third VNFC onboarding pre-notification based on the first time point. Step 1101 is similar to step 401. For specific details, refer to step 401. Details are not described herein again.

1102: The VNFM sends the VNFC onboarding pre-notification to the VNF.

1103: The VNF receives the VNFC onboarding pre-notification from the VNFM, generates a VNFC onboarding pre-notification response, and sends the VNFC onboarding pre-notification response to the VNFM.

The VNFC onboarding pre-notification response may include at least one of an allowance identifier, a rejection identifier, reason information, an identifier of a third VNFC, a third quantity, and the first time point. Optionally, the VNF generates the VNFC onboarding pre-notification response based on the first VNFC. Optionally, the VNF generates the VNFC onboarding pre-notification response based on the first quantity. Optionally, the VNF generates the VNFC onboarding pre-notification response based on the first time point. Step 1103 is similar to step 403. For specific details, refer to step 403. Details are not described herein again.

1104: The VNFM receives the VNFC onboarding pre-notification response.

1105: The VNF executes a pre-processing procedure at the VNFC onboarding stage.

It should be understood that a sequence of step 1103, step 1104, and step 1105 is not limited in this embodiment. In some other embodiments, the VNF may first execute the pre-processing procedure at the VNFC onboarding stage, and then the VNF generates the VNFC onboarding pre-notification response, and sends the VNFC onboarding pre-notification response to the VNFM. Sequence numbers of the foregoing steps in this embodiment do not indicate an execution sequence. The execution sequence of the steps should be determined based on functions and internal logic of the steps, and should not be construed as any limitation on the implementation process of this embodiment of this application.

Optionally, step 1105 may include either or both of (C1) and (C2) in step 407. Optionally, when the VNFC onboarding pre-notification includes the identifier of the first VNFC, the VNF may obtain the identifier of the first VNFC based on the VNFC onboarding pre-notification, determine the first VNFC based on the identifier of the first VNFC, and execute the pre-processing procedure at the VNFC onboarding stage for the first VNFC. Optionally, when the VNFC onboarding pre-notification includes the first quantity, the VNF may obtain the first quantity based on the VNFC onboarding pre-notification, and execute the pre-processing procedure at the VNFC onboarding stage based on the first quantity. Optionally, when the VNFC onboarding pre-notification includes the first time point, the VNF may obtain the first time point based on the VNFC onboarding pre-notification, and execute the pre-processing procedure at the VNFC onboarding stage based on the first time point.

Optionally, when the VNF executes the pre-processing procedure at the VNFC onboarding stage, the VNF may generate onboarding pre-processing progress information based on progress of the pre-processing procedure, and send the onboarding pre-processing progress information to the VNFM. The onboarding pre-processing progress information is used to indicate the progress of executing the pre-processing procedure by the VNF. The onboarding pre-processing progress information may be positively correlated to completed workload of the pre-processing procedure, and negatively correlated to total workload that needs to be completed in the pre-processing procedure.

1106: The VNFM brings a VNFC onboarded.

Optionally, the VNFM may receive the onboarding pre-processing progress information of the VNF; determines, based on the onboarding pre-processing progress information, that the VNF has executed the pre-processing procedure at the onboarding stage; and brings the VNFC onboarded.

Optionally, a process in which the VNFM brings the VNFC onboarded may include any one or a combination of the following (1) to (3).
(1) When the VNFC onboarding pre-notification includes the allowance identifier, the VNFM may bring the first VNFC onboarded based on the VNFC onboarding pre-notification response. When the VNFC onboarding pre-notification includes the identifier of the third VNFC, the VNFM may obtain the identifier of the third VNFC based on the VNFC onboarding pre-notification response, determine the third VNFC based on the identifier of the third VNFC, and bring the third VNFC in the VNF onboarded. When the VNFC onboarding pre-notification includes at least one of the rejection identifier and the reason information, the VNFM determines, based on the VNFC onboarding pre-notification response, a fifth VNFC other than the first VNFC, and brings the fifth VNFC onboarded, that is, brings a VNFC other than the first VNFC onboarded.
(2) When the VNFC onboarding pre-notification includes the allowance identifier, the VNFM starts application instances of the first quantity based on the VNFC onboarding pre-notification response. When the VNFC onboarding pre-notification includes the third quantity, the VNFM determines the third quantity based on the VNFC onboarding pre-notification response, and starts application instances of the third quantity. When the VNFC onboarding pre-notification includes at least one of the rejection identifier and the reason information, the VNFM determines, based on the VNFC onboarding pre-notification response, a fifth quantity that is less than the first quantity, and starts application instances of the fifth quantity, that is, starts application instances of another quantity that are of the VNFC.
(3) When the VNFC onboarding pre-notification includes the allowance identifier, the VNFM brings the VNF onboarded at the first time point based on the VNFC onboarding pre-notification response. When the VNFC onboarding pre-notification includes a second time point, the VNFM obtains the second time point based on the VNFC onboarding pre-notification response, and brings the VNF onboarded at the second time point. When the VNFC onboarding pre-notification includes at least one of the rejection identifier and the reason information, the VNFM determines a third time point based on the VNFC onboarding pre-notification response, and controls, at the third time point, another VNFC in the VNF to enter a target stage of a lifecycle.

1107: The VNF executes a procedure after the pre-processing procedure at the VNFC onboarding stage.

The procedure after the pre-processing procedure at the VNFC onboarding stage may include any one or a combination of (C1) and (C2) in step 408.

According to the method provided in this embodiment, the VNFM sends the VNFC onboarding pre-notification to the VNF before the VNFC is onboarded, in other words, the VNFM may remind the VNF in advance, before the VNFC is onboarded, that the VNFC is to be onboarded, so that the VNF can predict, based on the VNFC onboarding pre-notification, that the VNFC is to be onboarded, and perform the VNFC onboarding pre-processing procedure in advance, thereby improving service processing efficiency. Therefore, after the VNFC is onboarded, a service loss and service flapping can be avoided because preparations are made in advance, thereby implementing smooth service migration and hitless service migration, and avoiding a service loss caused by temporarily performing smooth service migration after the VNFC is onboarded.

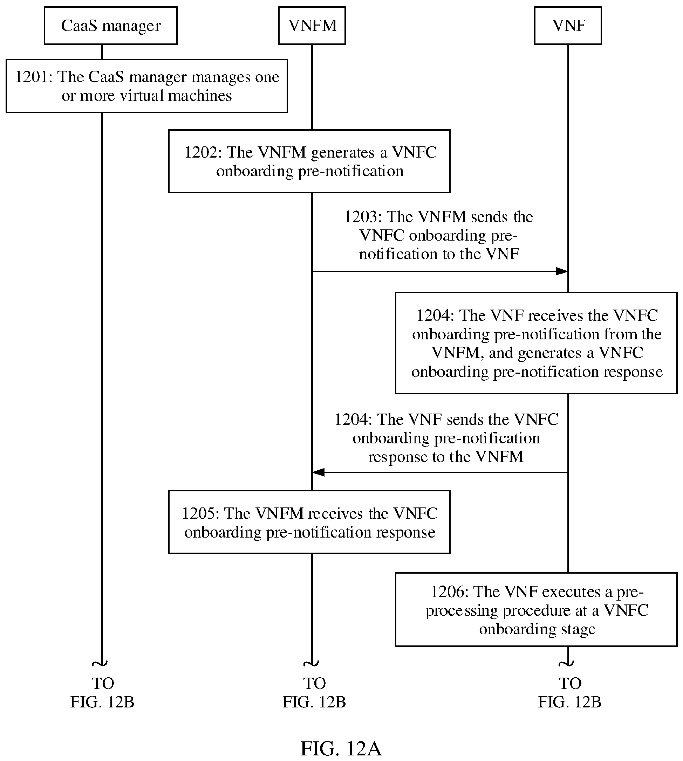

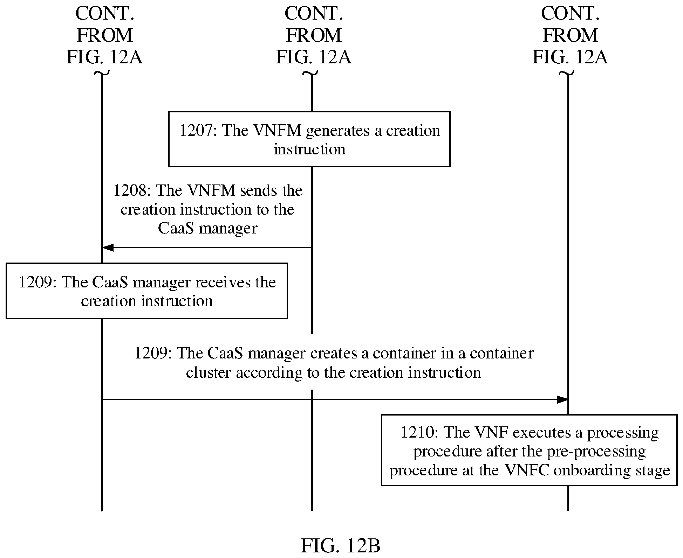

Optionally, the embodiment of FIG. 11 may be applied to a containerization scenario. In a possible implementation, a CaaS manager may be introduced based on FIG. 11, and the VNFM interacts with the CaaS manager to implement the function of bringing a VNFC onboarded in the VNF containerization scenario. It should be noted that, an embodiment of FIG. 12A and FIG. 12B mainly focuses on differences between the embodiment of FIG. 12A and FIG. 12B and the embodiment of FIG. 11. For steps similar to those in the embodiment of FIG. 11, refer to the embodiment of FIG. 11. Details are not described in the embodiment of FIG. 12A and FIG. 12B.

FIG. 12A and FIG. 12B are a flowchart of a VNFC onboarding method according to an embodiment of this application. As shown in FIG. 12A and FIG. 12B, the method is performed by a VNF, a VNFM, and a CaaS manager, and includes the following steps.

1201: The CaaS manager manages one or more virtual machines.

In the embodiment of FIG. 12A, step 1202 is similar to step 1101, step 1203 is similar to step 1102, step 1204 is similar to step 1103, step 1205 is similar to step 1104, and step 1206 is similar to step 1105. For specific content, refer to the embodiment shown in FIG. 11. Details are not described herein again.

It should be understood that a sequence of step 1204 and step 1206 is not limited in this embodiment. In some other embodiments, the VNF may first execute a pre-processing procedure at a VNFC onboarding stage, and then the VNF generates a VNFC onboarding pre-notification response, and sends the VNFC onboarding pre-notification response to the VNFM. Sequence numbers of the foregoing steps in this embodiment do not indicate an execution sequence. The execution sequence of the steps should be determined based on functions and internal logic of the steps, and should not be construed as any limitation on the implementation process of this embodiment of this application.

1207: The VNFM generates a creation instruction.

Optionally, the VNFM generates a creation instruction of different content based on a different purpose of a VNFC onboarding operation. For example, when a first VNFC in the VNF needs to be scaled in, for example, when the first VNFC in the VNF needs to be brought onboarded, the VNFM generates the creation instruction based on an identifier of a first container. The creation instruction is used to instruct the CaaS manager to create a container instance of the first container in a container cluster, and the creation instruction may include the identifier of the first container. When application instances of a first quantity need to be started, the VNFM generates the creation instruction based on a seventh quantity. The creation instruction is used to instruct the CaaS manager to create container instances of the seventh quantity in the container cluster, where the seventh quantity is a positive integer, and the container instances of the seventh quantity are used to carry the application instances of the first quantity. When the VNF needs to be onboarded at a first time point, the VNFM generates the creation instruction based on the first time point. The creation instruction is used to instruct the CaaS manager to create a container instance at the first time point. The creation instruction may include the first time point.

1208: The VNFM sends the creation instruction to the CaaS manager.

1209: The CaaS manager receives the creation instruction, and creates a container in the container cluster according to the creation instruction.

Optionally, the CaaS manager may create the container instance of the first container, a container instance of a third container, or a container instance of a fifth container according to the creation instruction. Alternatively, the CaaS manager creates the container instances of the seventh quantity, container instances of a ninth quantity, or container instances of an eleventh quantity according to the creation instruction. Alternatively, the CaaS manager creates the container instance at the first time point, a second time point, or a third time point according to the creation instruction.

1210: The VNF executes a processing procedure after the pre-processing procedure at the VNFC onboarding stage.

The method provided in this embodiment can support the VNFC onboarding procedure in a VNF containerization scenario, and provide a service lossless solution in the VNF containerization scenario. The CaaS manager manages the container cluster, and the VNFM exchanges information with the CaaS manager and the VNF. When a VNFC needs to be brought onboarded, the VNFM may control the CaaS manager to create a container in the container cluster. Because the created container carries the VNFC, the VNFC corresponding to the container may be started after the container is created, thereby implementing the function of bringing the VNFC onboarded. In the VNF management procedure, the VNFM may function as a communication medium between the VNF and the CaaS manager, and the VNFM may shield implementation differences between different CaaS managers, and provide a uniform VNFC onboarding interface for the VNF.

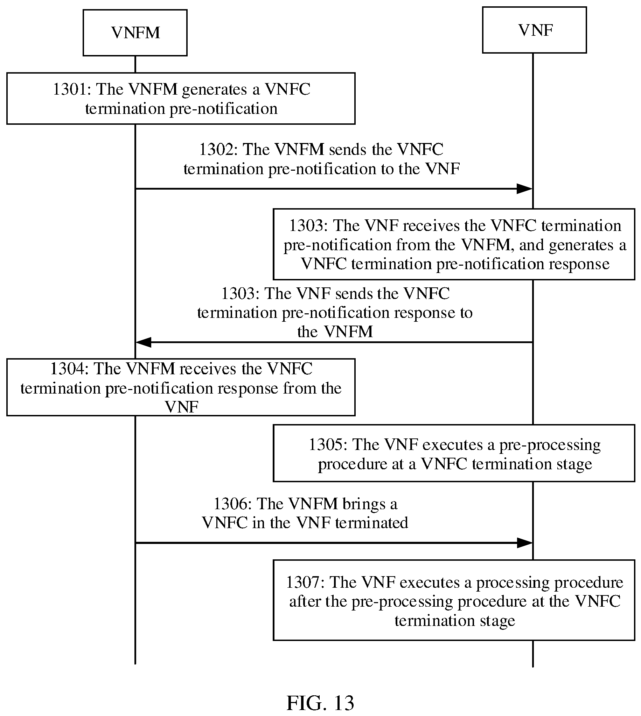

FIG. 13 is a flowchart of a VNFC termination method according to an embodiment of this application. As shown in FIG. 13, the method is performed by a VNF and a VNFM, and includes the following steps.

1301: The VNFM generates a VNFC termination pre-notification.

The VNFC termination pre-notification may include at least one of an identifier of a first VNFC, an identifier of a first application instance, a second quantity, and a first time point. Optionally, the VNFM generates the VNFC termination pre-notification based on the first VNFC. Optionally, the VNFM generates the VNFC termination pre-notification based on the second quantity. Optionally, the VNFM generates the VNFC termination pre-notification based on the first time point. Step 1301 is similar to (5) of step 401, and details are not described herein again.

1302: The VNFM sends the VNFC termination pre-notification to the VNF.

1303: The VNF receives the VNFC termination pre-notification from the VNFM, generates a VNFC termination pre-notification response, and sends the VNFC termination pre-notification response to the VNFM. The VNFC termination pre-notification response is a response to the VNFC termination pre-notification.

1304: The VNFM receives the VNFC termination pre-notification response from the VNF.

1305: The VNF executes a pre-processing procedure at a VNFC termination stage.

It should be understood that a sequence of step 1303 and step 1305 is not limited in this embodiment. In some other embodiments, the VNF may first execute the pre-processing procedure at the VNFC termination stage, and then the VNF generates the VNFC termination pre-notification response, and sends the VNFC termination pre-notification response to the VNFM. Sequence numbers of the foregoing steps in this embodiment do not indicate an execution sequence. The execution sequence of the steps should be determined based on functions and internal logic of the steps, and should not be construed as any limitation on the implementation process of this embodiment of this application.

Optionally, step 1305 may include either or both of (D1) and (D2) in step 406. Optionally, step 1305 may include any one or a combination of the following (1) to (3). Optionally, when the VNFC termination pre-notification includes the identifier of the first VNFC, the VNF may obtain the identifier of the first VNFC based on the VNFC termination pre-notification, determine the first VNFC based on the identifier of the first VNFC, and execute the pre-processing procedure at the VNFC termination stage for the first VNFC.

Optionally, when the VNFC termination pre-notification includes the second quantity, the VNF may obtain the second quantity based on the VNFC termination pre-notification, and execute the pre-processing procedure at the VNFC termination stage based on the second quantity. Optionally, when the VNFC termination pre-notification includes the first time point, the VNF may obtain the first time point based on the VNFC termination pre-notification, and execute the pre-processing procedure at the VNFC termination stage based on the first time point.

1306: The VNFM brings a VNFC in the VNF terminated.

Optionally, a process in which the VNFM brings the VNFC terminated may include any one or a combination of the following (1) to (3).
(1) When the VNFC termination pre-notification includes an allowance identifier, the VNFM may bring the first VNFC terminated based on the VNFC termination pre-notification response. When the VNFC termination pre-notification includes an identifier of a third VNFC, the VNFM may obtain the identifier of the third VNFC based on the VNFC termination pre-notification response, determine the third VNFC based on the identifier of the third VNFC, and bring the third VNFC in the VNF terminated. When the VNFC termination pre-notification includes at least one of a rejection identifier and reason information, the VNFM determines a fifth VNFC other than the first VNFC based on the VNFC termination pre-notification response, and brings the fifth VNFC terminated, that is, brings a VNFC other than the first VNFC terminated.
(2) When the VNFC termination pre-notification includes an allowance identifier, the VNFM deletes application instances of a first quantity based on the VNFC termination pre-notification response. When the VNFC termination pre-notification includes a third quantity, the VNFM determines the third quantity based on the VNFC termination pre-notification response, and deletes application instances of the third quantity. When the VNFC termination pre-notification includes at least one of a rejection identifier and reason information, the VNFM determines, based on the VNFC termination pre-notification response, a fifth quantity that is less than the first quantity, deletes application instances of the fifth quantity, that is, deletes application instances of another quantity of VNFCs.
(3) When the VNFC termination pre-notification includes an allowance identifier, the VNFM brings the VNF terminated at the first time point based on the VNFC termination pre-notification response. When the VNFC termination pre-notification includes a second time point, the VNFM obtains the second time point based on the VNFC termination pre-notification response, and brings the VNF terminated at the second time point. When the VNFC termination pre-notification includes at least one of a rejection identifier and reason information, the VNFM determines a third time point based on the VNFC termination pre-notification response, and controls, at the third time point, another VNFC in the VNF to enter a target stage of a lifecycle.

1307: The VNF executes a processing procedure after the pre-processing procedure at a VNFC termination stage.

The procedure after the pre-processing procedure at the VNFC termination stage may include any one or a combination of (D1) and (D2) in step 408.

According to the method provided in this embodiment, before the VNFM brings a VNFC terminated, the VNFM sends the VNFC termination pre-notification to the VNF, so that the VNF can predict, based on the VNFC termination pre-notification, that the VNFC is to be terminated. Therefore, the VNFM may perform pre-processing in advance for bringing the VNFC terminated, thereby improving service processing efficiency. Further, smooth service migration may be performed in advance for bringing a VNFC terminated, thereby implementing hitless service migration, and avoiding a service loss caused by temporarily performing smooth service migration after the VNFC is terminated.

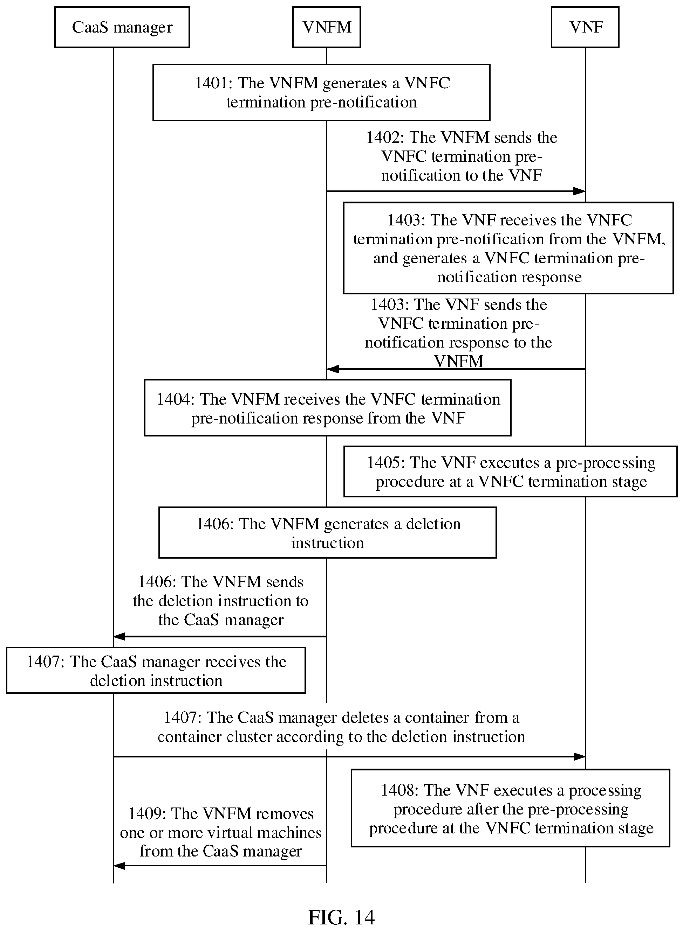

Optionally, the embodiment of FIG. 13 may be applied to a containerization scenario. In a possible implementation, a CaaS manager may be introduced based on FIG. 13A and FIG. 13B, and the VNFM interacts with the CaaS manager to implement the function of bringing a VNFC terminated in the VNF containerization scenario. It should be noted that, an embodiment of FIG. 14 mainly focuses on differences between the embodiment of FIG. 14 and the embodiment of FIG. 13. For steps similar to those in the embodiment of FIG. 13, refer to the embodiment of FIG. 13. Details are not described in the embodiment of FIG. 14.

FIG. 14 is a flowchart of a VNFC termination method according to an embodiment of this application. As shown in FIG. 14, the method is performed by a VNF, a VNFM, and a CaaS manager, and includes the following steps.

In the embodiment of FIG. 14, step 1401 is similar to step 1301, step 1402 is similar to step 1302, step 1403 is similar to step 1303, step 1404 is similar to step 1304, and step 1405 is similar to step 1305. For specific content, refer to the embodiment shown in FIG. 13. Details are not described herein again.

It should be understood that a sequence of step 1403 and step 1405 is not limited in this embodiment. In some other embodiments, the VNF may first execute a pre-processing procedure at a VNFC termination stage, and then the VNF generates a VNFC termination pre-notification response, and sends the VNFC termination pre-notification response to the VNFM. Sequence numbers of the foregoing steps in this embodiment do not indicate an execution sequence. The execution sequence of the steps should be determined based on functions and internal logic of the steps, and should not be construed as any limitation on the implementation process of this embodiment of this application.

1406: The VNFM generates a deletion instruction, and sends the deletion instruction to the CaaS manager.

Optionally, the VNFM generates a deletion instruction of different content based on a different purpose of a VNFC termination operation. For example, when a first VNFC in the VNF needs to be terminated, the VNFM generates the deletion instruction based on an identifier of a first container. The deletion instruction is used to instruct the CaaS manager to delete a container instance of the first container from a container cluster, and the deletion instruction may include the identifier of the first container. When a first application instance needs to be deleted, the VNFM generates the deletion instruction based on an identifier of a first container instance. The deletion instruction is used to instruct the CaaS manager to delete the first container instance from the container cluster. The deletion instruction may include the identifier of the first container instance. When application instances of a second quantity need to be deleted, the VNFM generates the deletion instruction based on an eighth quantity. The deletion instruction is used to instruct the CaaS manager to delete container instances of the eighth quantity from the container cluster. The deletion instruction may include the eighth quantity. When the VNF needs to be scaled in at a first time point, the VNFM generates the deletion instruction based on the first time point. The deletion instruction may include the first time point.

1407: The CaaS manager receives the deletion instruction, and deletes a container from the container cluster according to the deletion instruction.

Optionally, the CaaS manager may perform different operations based on different content of the deletion instruction. For example, when the deletion instruction includes the identifier of the first container, the CaaS manager deletes the container instance of the first container from the container cluster according to the deletion instruction. When the deletion instruction includes the identifier of the first container instance, the CaaS manager deletes the first container instance from the container cluster according to the deletion instruction. When the deletion instruction includes the eighth quantity, the CaaS manager deletes the container instances of the eighth quantity from the container cluster according to the deletion instruction. When the deletion instruction includes the first time point, the CaaS manager deletes a container instance of the container from the container cluster at the first time point according to the deletion instruction.

1408: The VNF executes a processing procedure after the pre-processing procedure at the VNFC termination stage.

1409: The VNFM removes one or more virtual machines from the CaaS manager.

The method provided in this embodiment can support the VNFC termination procedure in a VNF containerization scenario, and provide a service lossless solution in the VNF containerization scenario. The CaaS manager manages the container cluster, and the VNFM exchanges information with the CaaS manager and the VNF. When a VNFC needs to be terminated, the VNFM may control the CaaS manager to delete a container from the container cluster. Because the container carries the VNFC, the VNFC corresponding to the container is to be deleted accordingly after the container is deleted, thereby implementing the function of bringing the VNFC terminated. In the VNF management procedure, the VNFM may function as a communication medium between the VNF and the CaaS manager, and the VNFM may shield implementation differences between different CaaS managers, and provide a uniform VNFC termination interface for the VNF.

All the foregoing optional technical solutions may be randomly combined to form optional embodiments of this application. Details are not described herein.

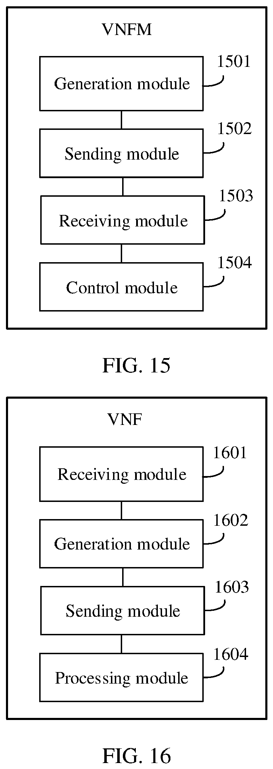

FIG. 15 is a schematic structural diagram of a VNFM according to an embodiment of this application. As shown in FIG. 15, the VNFM includes a generation module 1501, configured to perform step 401; a sending module 1502, configured to perform step 402; a receiving module 1503, configured to perform step 405; and a control module 1504, configured to perform step 407.

Optionally, the control module 1504 includes at least one of the following: a scale-out submodule, configured to perform step 706; a scale-in submodule, configured to perform step 906; an onboarding submodule, configured to perform step 1106; and a termination submodule, configured to perform step 1306. Optionally, the control module 1504 includes a generation submodule, configured to generate a management instruction; and a sending submodule, configured to send the management instruction. Optionally, the VNFM is further configured to: obtain a first VNFC template; query a correspondence between a VNFC template and a container deployment template based on the first VNFC template to obtain a first container deployment template corresponding to the first VNFC template; and send the first container deployment template to a CaaS manager. Optionally, the VNFM is further configured to: obtain a second VNFC template; query, based on the second VNFC template, the correspondence between a VNFC template and a container deployment template, to obtain a second container deployment template corresponding to the second VNFC template; and send the second container deployment template to the CaaS manager. Optionally, the generation module 1501 is configured to perform any one or a combination of (1) to (5) in step 401. Optionally, the control module 1504 is configured to perform any one or a combination of (A) to (D) in step 408 or any one or a combination of (A) and (B) in step 508. Optionally, the control module 1504 is configured to perform any one or a combination of (1) to (5) in step 508. Optionally, the VNFM further includes an obtaining module. The obtaining module is configured to perform the process of obtaining an identifier of a container or the process of obtaining an identifier of a container instance in step 507. Optionally, the generation module 1501 is further configured to generate a post-notification. The sending module 1502 is configured to send the post-notification. Optionally, the receiving module 1503 is further configured to receive pre-processing progress information. The apparatus further includes a determining module, configured to determine, based on the pre-processing progress information, that a VNF has executed a pre-processing procedure.

It should be noted that, when the VNFM provided in the embodiment of FIG. 15 manages a lifecycle of the VNF, division into the foregoing functional modules is merely used as an example for description. In actual application, the foregoing functions may be allocated to different functional modules for implementation as required. In other words, an internal structure of the VNFM is divided into different functional modules to implement all or some of the functions described above. In addition, the foregoing VNFM embodiment and the embodiment of the VNF lifecycle management method belong to a same concept. For a specific implementation process, refer to the method embodiment. Details are not described herein again.

It should be further noted that each module in the embodiment of FIG. 15 may be specifically a software module that performs a corresponding function in software. In other words, a "module" may be a functional module including a group of computer programs, and the computer program may be a source program or a target program. The computer program may be implemented in any programming language. By using the foregoing modules, a computer device may implement an authentication function based on hardware combining a processor and a memory. To be specific, software code stored in the memory of the computer device may be run in the processor of the computer device, to execute corresponding software to implement the authentication function.

FIG. 16 is a schematic structural diagram of a VNF according to an embodiment of this application. As shown in FIG. 16, the VNF includes:
a receiving module 1601, configured to receive a pre-notification; a generation module 1602, configured to generate a pre-notification response; a sending module 1603, configured to perform step 404; and a processing module 1604, configured to perform step 406.

Optionally, the processing module 1604 includes at least one of the following: a scale-out submodule 1604, configured to perform step 705 or step 806; a scale-in submodule 1604, configured to perform step 905 or step 1005; an onboarding submodule 1604, configured to perform step 1105 or step 1206; and a termination submodule 1604, configured to perform step 1305 or step 1405. Optionally, the processing module 1604 is configured to perform any one or a combination of (1) to (5) in step 407. Optionally, the generation module 1602 is configured to perform any one or a combination of (1) to (5) in step 403. Optionally, the VNF is further configured to receive a query request of a VNFM, generate a query response, and send the query response to the VNFM. Optionally, the VNF is further configured to query a correspondence between an identifier of a VNFC and an identifier of a container based on an identifier of a VNFC, to obtain an identifier of a container. Optionally, the VNF is further configured to send a query request to the VNFC based on the identifier of the VNFC, and receive the identifier of the container from the VNFC. Optionally, the VNF is further configured to query a correspondence between an identifier of an application instance and an identifier of a container instance based on an identifier of an application instance, to obtain an identifier of a container instance. Optionally, the VNF is further configured to send a query request to an application instance based on an identifier of the application instance, and receive an identifier of a first container instance from the application instance. Optionally, the VNF is further configured to: when any VNFC in the VNF is started, obtain an identifier of a container carrying the VNFC, and store an identifier of the VNFC and an identifier of the container in the correspondence between an identifier of a VNFC and an identifier of a container. Optionally, the VNF is further configured to: when any application instance of any VNFC in the VNF is started, obtain an identifier of a container instance carrying the application instance, and store an identifier of the application instance and an identifier of the container instance into the correspondence between an identifier of an application instance and an identifier of a container instance. Optionally, the processing module 1604 is configured to perform any one or a combination of (A) to (D) in step 407. Optionally, the receiving module 1601 is further configured to receive a post-notification from the VNFM. The processing module 1604 is further configured to execute a processing procedure after a pre-processing procedure. Optionally, the processing module 1604 is configured to perform any one or a combination of (A) to (D) in step 408. Optionally, the generation module 1602 is further configured to generate pre-processing progress information. The sending module 1603 is further configured to send the pre-processing progress information.

It should be noted that, when the lifecycle of the VNF provided in the embodiment of FIG. 16 is managed by the VNFM, division into the foregoing functional modules is merely used as an example for description. In actual application, the foregoing functions may be allocated to different functional modules for implementation as required. In other words, an internal structure of the VNF is divided into different functional modules to implement all or some of the functions described above. In addition, the foregoing VNF embodiment and the embodiment of the VNF lifecycle management method belong to a same concept. For a specific implementation process, refer to the method embodiment. Details are not described herein again.

It should be further noted that each module in the embodiment of FIG. 16 may be specifically a software module that performs a corresponding function in software. In other words, a "module" may be a functional module including a group of computer programs, and the computer program may be a source program or a target program. The computer program may be implemented in any programming language. By using the foregoing modules, a computer device may implement an authentication function based on hardware combining a processor and a memory. To be specific, software code stored in the memory of the computer device may be run in the processor of the computer device, to execute corresponding software to implement the authentication function.

In an example embodiment, this application further provides a computer program product including an instruction. When the instruction is run on a computer device, the computer device is enabled to implement the VNF lifecycle management method in the foregoing embodiments.

In an example embodiment, this application further provides an NFV system. In a possible implementation, the system includes the foregoing VNFM and the foregoing VNF.

In an example embodiment, this application further provides a chip. The chip includes a processor and/or a program instruction. When the chip runs, the VNF lifecycle management method in the foregoing embodiments is implemented.

All the foregoing optional technical solutions may be randomly combined to form optional embodiments of this application. Details are not described herein.

All or some of the foregoing embodiments may be implemented through software, hardware, firmware, or any combination thereof. When software is used to implement the embodiments, all or some of the embodiments may be implemented in a form of a computer program product. The computer program product includes one or more computer program instructions. When the computer program instructions are loaded and executed on the computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer program instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive), or the like.

The term "and/or" in this application describes only an association relationship for describing associated objects and represents that three relationships may exist. For example, A and/or B may represent the following three cases: Only A exists, both A and B exist, and only B exists. In addition, the character "/" in this application usually indicates an "or" relationship between the associated objects.

In this application, the term "a plurality of" means two or more. For example, a plurality of data packets are two or more data packets.

In this application, terms such as "first" and "second" are used to distinguish between same items or similar items that have basically same functions. A person skilled in the art may understand that the terms such as "first" and "second" do not limit a quantity and an execution sequence.

A person of ordinary skill in the art may understand that all or some of the steps of the embodiments may be implemented by hardware or a program instructing related hardware. The program may be stored in a computer-readable storage medium. The storage medium may include a read-only memory, a magnetic disk, or an optical disc.

## Claims

1. A virtualized network function VNF lifecycle management method, wherein the method comprises:
generating (401) a pre-notification, wherein the pre-notification is used to notify that a VNF is going to enter a target stage of a lifecycle;
sending (402) the pre-notification to the VNF;
receiving (405) a pre-notification response from the VNF, wherein the pre-notification response is a response message corresponding to the pre-notification; and
controlling (407) the VNF to enter the target stage of the lifecycle;
wherein the generating a pre-notification comprises at least one of the following:
generating a scale-out pre-notification, wherein the scale-out pre-notification is used to notify that the VNF is going to enter a scale-out stage; and
generating a scale-in pre-notification, wherein the scale-in pre-notification is used to notify that the VNF is going to enter a scale-in stage;
**characterized in that** one of the following cases (1) - (5) apply:
(1) wherein the generating a pre-notification comprises: generating the pre-notification based on a first VNFC, wherein the pre-notification is used to notify the VNF that the first VNFC is going to enter the target stage of the lifecycle, and the first VNFC is one or more VNFCs comprised in the VNF; and
the controlling the VNF to enter the target stage of the lifecycle comprises: controlling, based on the pre-notification response, a fifth VNFC to enter the target stage of the lifecycle, wherein the pre-notification response indicates that the VNF rejects the first VNFC to enter the target stage of the lifecycle or indicates a reason why the VNF rejects the first VNFC to enter the target stage of the lifecycle, and the fifth VNFC is one or more VNFCs other than the first VNFC in the VNF;
(2) wherein the generating a scale-in pre-notification comprises: generating the scale-in pre-notification based on a first application instance, wherein the scale-in pre-notification is used to notify the VNF that the first application instance is to be deleted, the first application instance is one or more application instances comprised in a second VNFC, and the second VNFC is one or more VNFCs comprised in the VNF; and
the controlling the VNF to enter the target stage of the lifecycle comprises: deleting a third application instance based on a scale-in pre-notification response, wherein the scale-in pre-notification response indicates that the VNF rejects to delete the first application instance or indicates a reason why the VNF rejects to delete the first application instance, and the third application instance is one or more application instances other than the first application instance of the second VNFC;
(3) wherein the generating a scale-out pre-notification comprises: generating the scale-out pre-notification based on a first quantity, wherein the scale-out pre-notification is used to notify the VNF that application instances of the first quantity are to be started, and the first quantity is a positive integer; and
the controlling the VNF to enter the target stage of the lifecycle comprises: starting application instances of a fifth quantity based on a scale-out pre-notification response, wherein the scale-out pre-notification response indicates that the VNF rejects to start the application instances of the first quantity or indicates a reason why the VNF rejects to start the application instances of the first quantity, and the fifth quantity is a positive integer less than the first quantity;
(4) wherein the generating a scale-in pre-notification comprises: generating the scale-in pre-notification based on a second quantity, wherein the scale-in pre-notification is used to notify the VNF that application instances of the second quantity are to be deleted, and the second quantity is a positive integer; and
the controlling the VNF to enter the target stage of the lifecycle comprises: deleting application instances of a sixth quantity based on a scale-in pre-notification response, wherein the scale-in pre-notification response indicates that the VNF rejects to delete the application instances of the second quantity or indicates a reason why the VNF rejects to delete the application instances of the second quantity, and the sixth quantity is a positive integer less than the second quantity;
(5) wherein the generating a pre-notification comprises: generating the pre-notification based on a first time point, wherein the pre-notification is used to notify that the VNF is going to enter the target stage of the lifecycle at the first time point; and
the controlling the VNF to enter the target stage of the lifecycle comprises: controlling, based on the pre-notification response, the VNF to enter the target stage of the lifecycle at a third time point, wherein the pre-notification response indicates that the VNF is rejected to enter the target stage of the lifecycle at the first time point or indicates a reason why the VNF is rejected to enter the target stage of the lifecycle at the first time point, and the third time point is later than the first time point.

2. The method according to claim 1, wherein the generating a pre-notification further comprises at least one of the following:
generating a virtualized network function component VNFC onboarding pre-notification, wherein the VNFC onboarding pre-notification is used to notify that the VNF is going to enter a VNFC onboarding stage; and
generating a VNFC termination pre-notification, wherein the VNFC termination pre-notification is used to notify that the VNF is going to enter a VNFC termination stage.

3. The method according to claim 1 or 2, wherein
the controlling the VNF to enter the target stage of the lifecycle further comprises any one of the following:
controlling, based on the pre-notification response, the first VNFC to enter the target stage of the lifecycle, wherein the pre-notification response indicates that the VNF allows the first VNFC to enter the target stage of the lifecycle;
controlling, based on the pre-notification response, a third VNFC to enter the target stage of the lifecycle, wherein the pre-notification response is used to indicate to control the third VNFC to enter the target stage of the lifecycle, and the third VNFC is one or more VNFCs comprised in the VNF.

4. The method according to claim 2, wherein the controlling the VNF to enter the target stage of the lifecycle further comprises any one of the following:
deleting the first application instance based on a scale-in pre-notification response, wherein the scale-in pre-notification response indicates that the VNF allows to delete the first application instance;
deleting a second application instance based on a scale-in pre-notification response, wherein the scale-in pre-notification response is used to indicate to delete the second application instance, the second application instance is one or more application instances comprised in a fourth VNFC, and the fourth VNFC is one or more VNFCs comprised in the VNF.

5. The method according to claim 2, wherein
the controlling the VNF to enter the target stage of the lifecycle further comprises any one of the following:
starting the application instances of the first quantity based on a scale-out pre-notification response, wherein the scale-out pre-notification response indicates that the VNF allows to start the application instances of the first quantity;
starting application instances of a third quantity based on a scale-out pre-notification response, wherein the scale-out pre-notification response is used to indicate to start the application instances of the third quantity, and the third quantity is a positive integer.

6. The method according to claim 2, wherein
the controlling the VNF to enter the target stage of the lifecycle further comprises any one of the following:
deleting the application instances of the second quantity based on a scale-in pre-notification response, wherein the scale-in pre-notification response indicates that the VNF allows to delete the application instances of the second quantity;
deleting application instances of a fourth quantity based on a scale-in pre-notification response, wherein the scale-in pre-notification response is used to indicate to delete the application instances of the fourth quantity, and the fourth quantity is a positive integer.

7. The method according to claim 2, wherein
the controlling the VNF to enter the target stage of the lifecycle further comprises any one of the following:
controlling, based on the pre-notification response, the VNF to enter the target stage of the lifecycle at the first time point, wherein the pre-notification response indicates that the VNF is allowed to enter the target stage of the lifecycle at the first time point;
controlling, based on the pre-notification response, the VNF to enter the target stage of the lifecycle at a second time point, wherein the pre-notification response is used to indicate to control, at the second time point, the VNF to enter the target stage of the lifecycle.

8. The method according to any one of claims 1 to 7, wherein the controlling the VNF to enter the target stage of the lifecycle comprises:
generating a management instruction, wherein the management instruction is used to instruct a container as a service CaaS manager to manage a container cluster, and the container cluster is used to carry the VNF; and
sending the management instruction to the CaaS manager.

9. The method according to claim 8, wherein the generating a management instruction comprises at least one of the following:
generating a creation instruction based on a to-be-scaled-out VNFC, wherein the creation instruction is used to instruct the CaaS manager to create a container instance of a container in the container cluster, and the container instance is used to carry a to-be-added application instance of the to-be-scaled-out VNFC;
generating a deletion instruction based on a to-be-scaled-in VNFC, wherein the deletion instruction is used to instruct the CaaS manager to delete a container instance of a container from the container cluster, and the container instance is used to carry a to-be-deleted application instance of the to-be-scaled-in VNFC;
generating a creation instruction based on a to-be-onboarded VNFC, wherein the creation instruction is used to instruct the CaaS manager to create a container in the container cluster, and the container is used to carry the to-be-onboarded VNFC; and
generating a deletion instruction based on a to-be-terminated VNFC, wherein the deletion instruction is used to instruct the CaaS manager to delete a container from the container cluster, and the container is used to carry the to-be-terminated VNFC.

10. A virtualized network function VNF lifecycle management method, wherein the method comprises:
receiving (403) a pre-notification from a virtualized network function manager VNFM, wherein the pre-notification is used to notify that a VNF is going to enter a target stage of a lifecycle;
generating (403) a pre-notification response;
sending (406) the pre-notification response to the VNFM; and
executing (407) a pre-processing procedure at the target stage of the lifecycle;
wherein the receiving a pre-notification from a virtualized network function manager VNFM comprises at least one of the following:
receiving a scale-out pre-notification from the VNFM, wherein the scale-out pre-notification is used to notify that the VNF is going to enter a scale-out stage;
receiving a scale-in pre-notification from the VNFM, wherein the scale-in pre-notification is used to notify that the VNF is going to enter a scale-in stage;
**characterized in that** one of the following cases (1) - (5) apply:
(1) wherein the pre-notification is used to notify the VNF that a first VNFC is going to enter the target stage of the lifecycle, and the first VNFC is one or more VNFCs comprised in the VNF; and
the generating a pre-notification response comprises: generating the pre-notification response based on the first VNFC, wherein the pre-notification response indicates that the VNF rejects the first VNFC to enter the target stage of the lifecycle or indicates a reason why the VNF rejects the first VNFC to enter the target stage of the lifecycle;
(2) wherein the scale-in pre-notification is used to notify the VNF that a first application instance is to be deleted, the first application instance is one or more application instances comprised in a second VNFC, and the second VNFC is one or more VNFCs comprised in the VNF; and
the generating a pre-notification response comprises: generating a scale-in pre-notification response based on the first application instance, wherein the scale-in pre-notification response indicates that the VNF rejects to delete the first application instance or indicates a reason why the VNF rejects to delete the first application instance;
(3) wherein the scale-out pre-notification is used to notify the VNF that application instances of a first quantity are to be started, and the first quantity is a positive integer; and
the generating a pre-notification response comprises: generating a scale-out pre-notification response based on the first quantity, wherein the scale-out pre-notification response indicates that the VNF rejects to start the application instances of the first quantity or a reason why the VNF rejects to start the application instances of the first quantity;
(4) wherein the scale-in pre-notification is used to notify the VNF that application instances of a second quantity are to be deleted, and the second quantity is a positive integer; and
generating a scale-in pre-notification response comprises: generating a scale-in pre-notification response based on the second quantity, wherein the scale-in pre-notification response indicates that the VNF rejects to delete the application instances of the second quantity or indicates a reason why the VNF rejects to delete the application instances of the second quantity;
(5) wherein the pre-notification is used to notify that the VNF is going to enter the target stage of the lifecycle at a first time point; and
the generating a pre-notification response comprises: generating the pre-notification response based on the first time point, wherein the pre-notification response indicates that the VNF is rejected to enter the target stage of the lifecycle at the first time point or indicates a reason why the VNF is rejected to enter the target stage of the lifecycle at the first time point.

11. The method according to claim 10, wherein the receiving a pre-notification from a virtualized network function manager VNFM further comprises at least one of the following:
receiving a virtualized network function component VNFC onboarding pre-notification from the VNFM, wherein the VNFC onboarding pre-notification is used to notify that the VNF is going to enter a VNFC onboarding stage; and
receiving a VNFC termination pre-notification from the VNFM, wherein the VNFC termination pre-notification is used to notify that the VNF is going to enter a VNFC termination stage.

12. The method according to claim 10 or 11, wherein
the generating a pre-notification response further comprises any one of the following: generating the pre-notification response based on the first VNFC, wherein the pre-notification response indicates that the VNF allows the first VNFC to enter the target stage of the lifecycle;
determining a third VNFC, and generating the pre-notification response based on the third VNFC, wherein the pre-notification response is used to indicate to control the third VNFC to enter the target stage of the lifecycle, and the third VNFC is one or more VNFCs comprised in the VNF.

13. A computer device, wherein the computer device comprises one or more processors and one or more volatile or non-volatile memories, and the one or more volatile or non-volatile memories store at least one instruction, and the instruction, when loaded and executed by the one or more processors, causes the one or more processors to implement the VNF lifecycle management method according to any one of claims 1 to 12.

14. A computer-readable storage medium, wherein the storage medium stores at least one instruction, and the instruction, when loaded and executed by a processor, causes the processor to implement the VNF lifecycle management method according to any one of claims 1 to 12.

15. A computer program product including an instruction, which, when run on a computer device, causes the computer device to implement the VNF lifecycle management method according to any one of claims 1 to 12.

## Patentansprüche

1. Verfahren zur Verwaltung des Lebenszyklus einer virtualisierten Netzwerkfunktion, VNF-Lebenszyklus, wobei das Verfahren Folgendes umfasst:
Generieren (401) einer Vorankündigung, wobei die Vorankündigung verwendet wird, um mitzuteilen, dass eine VNF in eine Zielphase eines Lebenszyklus eintreten wird;
Senden (402) der Vorankündigung an die VNF;
Empfangen (405) einer Vorankündigungsantwort von der VNF, wobei die Vorankündigungsantwort eine Antwortnachricht entsprechend der Vorankündigung ist; und
Steuern (407) der VNF, um in die Zielphase des Lebenszyklus einzutreten;
wobei das Generieren einer Vorankündigung mindestens eines der Folgenden umfasst:
Generieren einer Scale-out-Vorankündigung, wobei die Scale-out-Vorankündigung verwendet wird, um mitzuteilen, dass die VNF in eine Scale-out-Phase eintreten wird; und
Generieren einer Scale-in-Vorankündigung, wobei die Scale-in-Vorankündigung verwendet wird, um mitzuteilen, dass die VNF in eine Scale-in-Phase eintreten wird;
**dadurch gekennzeichnet, dass** einer der folgenden Fälle (1)-(5) zutrifft:
(1) wobei das Generieren einer Vorankündigung Folgendes umfasst: Generieren der Vorankündigung basierend auf einer ersten VNFC, wobei die Vorankündigung verwendet wird, um der VNF mitzuteilen, dass die erste VNFC in die Zielphase des Lebenszyklus eintreten wird, und die erste VNFC eine oder mehrere in der VNF enthaltene VNFCs ist; und
das Steuern der VNF zum Eintreten in die Zielphase des Lebenszyklus Folgendes umfasst: Steuern einer fünften VNFC zum Eintreten in die Zielphase des Lebenszyklus basierend auf der Vorankündigungsantwort, wobei die Vorankündigungsantwort angibt, dass die VNF das Eintreten der ersten VNFC in die Zielphase des Lebenszyklus ablehnt, oder einen Grund angibt, aus dem die VNF das Eintreten der ersten VNFC in die Zielphase des Lebenszyklus ablehnt, und die fünfte VNFC eine oder mehrere andere VNFCs als die erste VNFC in der VNF ist;
(2) wobei das Generieren einer Scale-in-Vorankündigung Folgendes umfasst: Generieren der Scale-in-Vorankündigung basierend auf einer ersten Anwendungsinstanz, wobei die Scale-in-Vorankündigung verwendet wird, um der VNF mitzuteilen, dass die erste Anwendungsinstanz zu löschen ist, die erste Anwendungsinstanz eine oder mehrere in einer zweiten VNFC enthaltene Anwendungsinstanzen ist und die zweite VNFC eine oder mehrere in der VNF enthaltene VNFCs ist; und
das Steuern der VNF zum Eintreten in die Zielphase des Lebenszyklus Folgendes umfasst: Löschen einer dritten Anwendungsinstanz basierend auf einer Scale-in-Vorankündigungsantwort, wobei die Scale-in-Vorankündigungsantwort angibt, dass die VNF das Löschen der ersten Anwendungsinstanz ablehnt, oder einen Grund angibt, aus dem die VNF das Löschen der ersten Anwendungsinstanz ablehnt, und die dritte Anwendungsinstanz eine oder mehrere Anwendungsinstanzen ist, die sich von der ersten Anwendungsinstanz der zweiten VNFC unterscheiden;
(3) wobei das Generieren einer Scale-out-Vorankündigung Folgendes umfasst: Generieren der Scale-out-Vorankündigung basierend auf einer ersten Menge, wobei die Scale-out-Vorankündigung verwendet wird, um der VNF mitzuteilen, dass Anwendungsinstanzen der ersten Menge zu starten sind, und die erste Menge eine positive Ganzzahl ist; und
das Steuern der VNF zum Eintreten in die Zielphase des Lebenszyklus Folgendes umfasst: Starten von Anwendungsinstanzen einer fünften Menge basierend auf einer Scale-out-Vorankündigungsantwort, wobei die Scale-out-Vorankündigungsantwort angibt, dass die VNF das Starten der Anwendungsinstanzen der ersten Menge ablehnt, oder einen Grund angibt, aus dem die VNF das Starten der Anwendungsinstanzen der ersten Menge ablehnt, und die fünfte Menge eine positive Ganzzahl ist, die kleiner als die erste Menge ist;
(4) wobei das Generieren einer Scale-in-Vorankündigung Folgendes umfasst: Generieren der Scale-in-Vorankündigung basierend auf einer zweiten Menge, wobei die Scale-in-Vorankündigung verwendet wird, um der VNF mitzuteilen, dass Anwendungsinstanzen der zweiten Menge zu löschen sind und die zweite Menge eine positive Ganzzahl ist; und
das Steuern der VNF zum Eintreten in die Zielphase des Lebenszyklus Folgendes umfasst: Löschen von Anwendungsinstanzen einer sechsten Menge basierend auf einer Scale-in-Vorankündigungsantwort, wobei die Scale-in-Vorankündigungsantwort angibt, dass die VNF das Löschen der Anwendungsinstanzen der zweiten Menge ablehnt, oder einen Grund angibt, aus dem die VNF das Löschen der Anwendungsinstanzen der zweiten Menge ablehnt, und die sechste Menge eine positive Ganzzahl ist, die kleiner als die zweite Menge ist;
(5) wobei das Generieren einer Vorankündigung Folgendes umfasst: Generieren der Vorankündigung basierend auf einem ersten Zeitpunkt, wobei die Vorankündigung verwendet wird, um mitzuteilen, dass die VNF zu dem ersten Zeitpunkt in die Zielphase des Lebenszyklus eintreten wird; und
das Steuern der VNF zum Eintreten in die Zielphase des Lebenszyklus Folgendes umfasst: Steuern der VNF zum Eintreten in die Zielphase des Lebenszyklus zu einem dritten Zeitpunkt basierend auf der Vorankündigungsantwort, wobei die Vorankündigungsantwort angibt, dass das Eintreten der VNF in die Zielphase des Lebenszyklus zu dem ersten Zeitpunkt abgelehnt wird, oder einen Grund angibt, aus dem das Eintreten der VNF in die Zielphase des Lebenszyklus zu dem ersten Zeitpunkt abgelehnt wird, und der dritte Zeitpunkt nach dem ersten Zeitpunkt liegt.

2. Verfahren nach Anspruch 1, wobei das Generieren einer Vorankündigung ferner mindestens eines der Folgenden umfasst:
Generieren einer Onboarding-Vorankündigung für eine virtualisierte Netzwerkfunktionskomponente, VNFC-Onboarding-Vorankündigung, wobei die VNFC-Onboarding-Vorankündigung verwendet wird, um mitzuteilen, dass die VNF in eine VNFC-Onboarding-Phase eintreten wird; und
Generieren einer VNFC-Beendigungsvorankündigung, wobei die VNFC-Beendigungsvorankündigung verwendet wird, um mitzuteilen, dass die VNF in eine VNFC-Beendigungsphase eintreten wird.

3. Verfahren nach Anspruch 1 oder 2, wobei
das Steuern der VNF zum Eintreten in die Zielphase des Lebenszyklus ferner ein beliebiges der Folgenden umfasst:
Steuern des Eintretens der ersten VNFC in die Zielphase des Lebenszyklus basierend auf der Vorankündigungsantwort, wobei die Vorankündigungsantwort angibt, dass die VNF das Eintreten der ersten VNFC in die Zielphase des Lebenszyklus zulässt;
Steuern einer dritten VNFC zum Eintreten in die Zielphase des Lebenszyklus basierend auf der Vorankündigungsantwort, wobei die Vorankündigungsantwort verwendet wird, um anzugeben, dass die dritte VNFC zum Eintreten in die Zielphase des Lebenszyklus zu steuern ist und die dritte VNFC eine oder mehrere in der VNF enthaltene VNFCs ist.

4. Verfahren nach Anspruch 2, wobei das Steuern der VNF zum Eintreten in die Zielphase des Lebenszyklus ferner ein beliebiges der Folgenden umfasst:
Löschen der ersten Anwendungsinstanz basierend auf einer Scale-in-Vorankündigungsantwort, wobei die Scale-in-Vorankündigungsantwort angibt, dass die VNF das Löschen der ersten Anwendungsinstanz zulässt;
Löschen einer zweiten Anwendungsinstanz basierend auf einer Scale-in-Vorankündigungsantwort, wobei die Scale-in-Vorankündigungsantwort verwendet wird, um das Löschen der zweiten Anwendungsinstanz anzugeben, die zweite Anwendungsinstanz eine oder mehrere in einer vierten VNFC enthaltene Anwendungsinstanzen ist und die vierte VNFC eine oder mehrere in der VNF enthaltene VNFCs ist.

5. Verfahren nach Anspruch 2, wobei
das Steuern der VNF zum Eintreten in die Zielphase des Lebenszyklus ferner ein beliebiges der Folgenden umfasst:
Starten der Anwendungsinstanzen der ersten Menge basierend auf einer Scale-out-Vorankündigungsantwort, wobei die Scale-out-Vorankündigungsantwort angibt, dass die VNF das Starten der Anwendungsinstanzen der ersten Menge zulässt;
Starten von Anwendungsinstanzen einer dritten Menge basierend auf einer Scale-out-Vorankündigungsantwort, wobei die Scale-out-Vorankündigungsantwort verwendet wird, um anzugeben, dass die Anwendungsinstanzen der dritten Menge zu starten ist, und die dritte Menge eine positive Ganzzahl ist.

6. Verfahren nach Anspruch 2, wobei
das Steuern der VNF zum Eintreten in die Zielphase des Lebenszyklus ferner eines der Folgenden umfasst:
Löschen der Anwendungsinstanzen der zweiten Menge basierend auf einer Scale-in-Vorankündigungsantwort, wobei die Scale-in-Vorankündigungsantwort angibt, dass die VNF das Löschen der Anwendungsinstanzen der zweiten Menge zulässt;
Löschen von Anwendungsinstanzen einer vierten Menge basierend auf einer Scale-in-Vorankündigungsantwort, wobei die Scale-in-Vorankündigungsantwort verwendet wird, um anzugeben, dass die Anwendungsinstanzen der vierten Menge zu löschen sind, und die vierte Menge eine positive Ganzzahl ist.

7. Verfahren nach Anspruch 2, wobei
das Steuern der VNF zum Eintreten in die Zielphase des Lebenszyklus ferner ein beliebiges der Folgenden umfasst:
Steuern des Eintretens der VNF in die Zielphase des Lebenszyklus basierend auf der Vorankündigungsantwort, wobei die Vorankündigungsantwort angibt, dass der VNF das Eintreten in die Zielphase des Lebenszyklus möglich ist;
Steuern des Eintretens der VNF in die Zielphase des Lebenszyklus zu einem zweiten Zeitpunkt basierend auf der Vorankündigungsantwort, wobei die Vorankündigungsantwort verwendet wird, um anzugeben, dass das Eintreten der VNF in die Zielphase des Lebenszyklus zu dem zweiten Zeitpunkt zu steuern ist.

8. Verfahren nach einem der Ansprüche 1 bis 7, wobei das Steuern des Eintretens der VNF in die Zielphase des Lebenszyklus Folgendes umfasst:
Generieren einer Verwaltungsanweisung, wobei die Verwaltungsanweisung verwendet wird, um einen Container-as-a-Service-Manager, CaaS-Manager, anzuweisen, einen Container-Cluster zu verwalten, und der Container-Cluster verwendet wird, um die VNF zu tragen; und
Senden der Verwaltungsanweisung an den CaaS-Manager.

9. Verfahren nach Anspruch 8, wobei das Generieren einer Verwaltungsanweisung mindestens ein beliebiges der Folgenden umfasst:
Generieren einer Erstellungsanweisung basierend auf einer dem Scale-out zu unterziehenden VNFC, wobei die Erstellungsanweisung verwendet wird, um den CaaS-Manager anzuweisen, eine Container-Instanz eines Containers in dem Container-Cluster zu erstellen, und die Container-Instanz verwendet wird, um eine hinzuzufügende Anwendungsinstanz der dem Scale-out zu unterziehenden VNFC zu tragen;
Generieren einer Löschanweisung basierend auf einer dem Scale-in zu unterziehenden VNFC, wobei die Löschanweisung verwendet wird, um den CaaS-Manager anzuweisen, eine Container-Instanz eines Containers aus dem Container-Cluster zu löschen, und die Container-Instanz verwendet wird, um eine zu löschende Anwendungsinstanz der dem Scale-in zu unterziehenden VNFC zu tragen;
Generieren einer Erstellungsanweisung basierend auf einer per Onboarding zu integrierenden VNFC, wobei die Erstellungsanweisung verwendet wird, um den CaaS-Manager anzuweisen, einen Container in dem Container-Cluster zu erstellen, und der Container verwendet wird, um die per Onboarding zu integrierende VNFC zu tragen; und
Generieren einer Löschanweisung basierend auf einer zu beendenden VNFC, wobei die Löschanweisung verwendet wird, um den CaaS-Manager anzuweisen, einen Container aus dem Container-Cluster zu löschen, und der Container verwendet wird, um die zu beendende VNFC zu tragen.

10. Verfahren zur Verwaltung des Lebenszyklus einer virtualisierten Netzwerkfunktion, VNF-Lebenszyklus, wobei das Verfahren Folgendes umfasst:
Empfangen (403) einer Vorankündigung von einem virtualisierten Netzwerkfunktionsmanager, VNFM, wobei die Vorankündigung verwendet wird, um mitzuteilen, dass eine VNF in eine Zielphase eines Lebenszyklus eintreten wird;
Generieren (403) einer Vorankündigungsantwort;
Senden (406) der Vorankündigungsantwort an den VNFM; und
Ausführen (407) eines Vorverarbeitungsverfahrens in der Zielphase des Lebenszyklus;
wobei das Empfangen einer Vorankündigung von einem virtualisierten Netzwerkfunktionsmanager, VNFM, mindestens eines der Folgenden umfasst:
Empfangen einer Scale-out-Vorankündigung von dem VNFM, wobei die Scale-out-Vorankündigung verwendet wird, um mitzuteilen, dass die VNF in eine Scale-out-Phase eintreten wird;
Empfangen einer Scale-in-Vorankündigung von dem VNFM, wobei die Scale-in-Vorankündigung verwendet wird, um mitzuteilen, dass die VNF in eine Scale-in-Phase eintreten wird;
**dadurch gekennzeichnet, dass** einer der folgenden Fälle (1)-(5) zutrifft:
(1) wobei die Vorankündigung verwendet wird, um der VNF mitzuteilen, dass eine erste VNFC in die Zielphase des Lebenszyklus eintreten wird, und die erste VNFC eine oder mehrere in der VNF enthaltene VNFCs ist; und
das Generieren einer Vorankündigungsantwort Folgendes umfasst: Generieren der Vorankündigungsantwort basierend auf der ersten VNFC, wobei die Vorankündigungsantwort angibt, dass die VNF das Eintreten der ersten VNFC in die Zielphase des Lebenszyklus ablehnt, oder einen Grund angibt, aus dem die VNF das Eintreten der ersten VNFC in die Zielphase des Lebenszyklus ablehnt;
(2) wobei die Scale-in-Vorankündigung verwendet wird, um der VNF mitzuteilen, dass eine erste Anwendungsinstanz zu löschen ist, die erste Anwendungsinstanz eine oder mehrere in einer zweiten VNFC enthaltene Anwendungsinstanzen ist und die zweite VNFC eine oder mehrere in der VNF enthaltene VNFCs ist; und
das Generieren einer Vorankündigungsantwort Folgendes umfasst: Generieren einer Scale-in-Vorankündigungsantwort basierend auf der ersten Anwendungsinstanz, wobei die Scale-in-Vorankündigungsantwort angibt, dass die VNF das Löschen der ersten Anwendungsinstanz ablehnt, oder einen Grund angibt, aus dem die VNF das Löschen der ersten Anwendungsinstanz ablehnt;
(3) wobei die Scale-out-Vorankündigung verwendet wird, um der VNF mitzuteilen, dass Anwendungsinstanzen einer ersten Menge zu starten sind, und die erste Menge eine positive Ganzzahl ist; und
das Generieren einer Vorankündigungsantwort Folgendes umfasst: Generieren einer Scale-out-Vorankündigungsantwort basierend auf der ersten Menge, wobei die Scale-out-Vorankündigungsantwort angibt, dass die VNF das Starten der Anwendungsinstanzen der ersten Menge ablehnt oder einen Grund angibt, aus dem die VNF das Starten der Anwendungsinstanzen der ersten Menge ablehnt;
(4) wobei die Scale-in-Vorankündigung verwendet wird, um der VNF mitzuteilen, dass Anwendungsinstanzen einer zweiten Menge zu löschen sind, und die zweite Menge eine positive Ganzzahl ist; und
Generieren einer Scale-in-Vorankündigungsantwort Folgendes umfasst: Generieren einer Scale-in-Vorankündigungsantwort basierend auf der zweiten Menge, wobei die Scale-in-Vorankündigungsantwort angibt, dass die VNF das Löschen der Anwendungsinstanzen der zweiten Menge ablehnt, oder einen Grund angibt, aus dem die VNF das Löschen der Anwendungsinstanzen der zweiten Menge ablehnt;
(5) wobei die Vorankündigung verwendet wird, um mitzuteilen, dass die VNF zu einem ersten Zeitpunkt in die Zielphase des Lebenszyklus eintreten wird; und
das Generieren einer Vorankündigungsantwort Folgendes umfasst: Generieren der Vorankündigungsantwort basierend auf dem ersten Zeitpunkt, wobei die Vorankündigungsantwort angibt, dass die VNF das Eintreten in die Zielphase des Lebenszyklus zu dem ersten Zeitpunkt ablehnt, oder einen Grund angibt, aus dem das Eintreten der VNF in die Zielphase des Lebenszyklus zu dem ersten Zeitpunkt abgelehnt wird.

11. Verfahren nach Anspruch 10, wobei das Empfangen einer Vorankündigung von einem virtualisierten Netzwerkfunktionsmanager, VNFM, ferner mindestens eines der Folgenden umfasst:
Empfangen einer Onboarding-Vorankündigung für eine virtualisierte Netzwerkfunktionskomponente, VNFC-Onboarding-Vorankündigung, von dem VNFM, wobei die VNFC-Onboarding-Vorankündigung verwendet wird, um mitzuteilen, dass die VNF in eine VNFC-Onboarding-Phase eintreten wird; und
Empfangen einer VNFC-Beendigungsvorankündigung von dem VNFM, wobei die VNFC-Beendigungsvorankündigung verwendet wird, um mitzuteilen, dass die VNF in eine VNFC-Beendigungsphase eintreten wird.

12. Verfahren nach Anspruch 10 oder 11, wobei
das Generieren einer Vorankündigungsantwort ferner ein beliebiges der Folgenden umfasst: Generieren der Vorankündigungsantwort basierend auf der ersten VNFC, wobei die Vorankündigungsantwort angibt, dass die VNF das Eintreten der ersten VNFC in die Zielphase des Lebenszyklus zulässt;
Bestimmen einer dritten VNFC und Generieren der Vorankündigungsantwort basierend auf der dritten VNFC, wobei die Vorankündigungsantwort verwendet wird, um anzugeben, dass die dritte VNFC zum Eintreten in die Zielphase des Lebenszyklus zu steuern ist und die dritte VNFC eine oder mehrere in der VNF enthaltene VNFCs ist.

13. Computervorrichtung, wobei die Computervorrichtung einen oder mehrere Prozessoren und einen oder mehrere flüchtige oder nichtflüchtige Speicher umfasst und die einen oder mehrere flüchtigen oder nichtflüchtigen Speicher mindestens eine Anweisung speichern und die Anweisung, wenn sie von dem einen oder den mehreren Prozessoren geladen und ausgeführt wird, bewirkt, dass der eine oder die mehreren Prozessoren das Verfahren zur Verwaltung des VNF-Lebenszyklus nach einem der Ansprüche 1 bis 12 implementieren.

14. Computerlesbares Speichermedium, wobei das Speichermedium mindestens eine Anweisung speichert, und die Anweisung, wenn sie durch einen Prozessor geladen und ausgeführt wird, bewirkt, dass der Prozessor das Verfahren zur Verwaltung des VNF-Lebenszyklus nach einem der Ansprüche 1 bis 12 implementiert.

15. Computerprogrammprodukt, beinhaltend eine Anweisung, welche bei Ausführung auf einer Computervorrichtung bewirkt, dass die Computervorrichtung das Verfahren zur Verwaltung des VNF-Lebenszyklus nach einem der Ansprüche 1 bis 12 implementiert.

## Revendications

1. Procédé de gestion de cycle de vie de fonction réseau virtualisée VNF, le procédé comprenant :
la génération (401) d'une prénotification, la prénotification étant utilisée pour notifier qu'une VNF va entrer dans une étape cible d'un cycle de vie ;
l'envoi (402) de la prénotification à la VNF ;
la réception (405) d'une réponse de prénotification provenant de la VNF, la réponse de prénotification étant un message de réponse correspondant à la prénotification ; et
la commande (407) de la VNF d'entrer dans l'étape cible du cycle de vie ;
dans lequel la génération d'une prénotification comprend au moins l'une des opérations suivantes :
génération d'une prénotification de mise à l'échelle horizontale par augmentation de capacité, la prénotification de mise à l'échelle horizontale par augmentation de capacité étant utilisée pour notifier que la VNF va entrer dans une phase de mise à l'échelle horizontale par augmentation de capacité ; et
génération d'une prénotification de mise à l'échelle horizontale par réduction de capacité, la prénotification de mise à l'échelle horizontale par réduction de capacité étant utilisée pour notifier que la VNF va entrer dans une phase de mise à l'échelle horizontale par réduction de capacité ;
**caractérisé en ce que** l'un des cas (1) à (5) suivants s'applique :
(1) dans lequel la génération d'une prénotification comprend : la génération de la prénotification sur la base d'un premier VNFC, la prénotification étant utilisée pour notifier à la VNF que le premier VNFC va entrer dans l'étape cible du cycle de vie, et le premier VNFC étant un ou des VNFC compris dans la VNF ; et
la commande à la VNF d'entrer dans l'étape cible du cycle de vie comprend : la commande, sur la base de la réponse de prénotification, à un cinquième VNFC d'entrer dans l'étape cible du cycle de vie, la réponse de prénotification indiquant que la VNF refuse que le premier VNFC entre dans l'étape cible du cycle de vie ou indiquant une raison pour laquelle la VNF refuse que le premier VNFC entre dans l'étape cible du cycle de vie, et le cinquième VNFC étant un ou des VNFC autres que le premier VNFC dans la VNF ;
(2) dans lequel la génération d'une prénotification de mise à l'échelle horizontale par réduction de capacité comprend : la génération de la prénotification de mise à l'échelle horizontale par réduction de capacité sur la base d'une première instance d'application, la prénotification de mise à l'échelle horizontale par réduction de capacité étant utilisée pour notifier à la VNF que la première instance d'application doit être supprimée, la première instance d'application étant une ou des instances d'application comprises dans un deuxième VNFC, et le deuxième VNFC étant un ou des VNFC compris dans la VNF ; et
la commande à la VNF d'entrer dans l'étape cible du cycle de vie comprend : la suppression d'une troisième instance d'application sur la base d'une réponse de prénotification de mise à l'échelle horizontale par réduction de capacité, la réponse de prénotification de mise à l'échelle horizontale par réduction de capacité indiquant que la VNF refuse de supprimer la première instance d'application ou indiquant une raison pour laquelle la VNF refuse de supprimer la première instance d'application, et la troisième instance d'application étant une ou des instances d'application autres que la première instance d'application du deuxième VNFC ;
(3) dans lequel la génération d'une prénotification de mise à l'échelle horizontale par augmentation de capacité comprend : la génération de la prénotification de mise à l'échelle horizontale par augmentation de capacité sur la base d'une première quantité, dans lequel la prénotification de mise à l'échelle horizontale par augmentation de capacité est utilisée pour notifier à la VNF que des instances d'application de la première quantité doivent être démarrées, et la première quantité est un entier positif ; et
la commande à la VNF d'entrer dans l'étape cible du cycle de vie comprend : le démarrage d'instances d'application d'une cinquième quantité sur la base d'une réponse de prénotification de mise à l'échelle horizontale par augmentation de capacité, dans lequel la réponse de prénotification de mise à l'échelle horizontale par augmentation de capacité indique que la VNF refuse de démarrer les instances d'application de la première quantité ou indique une raison pour laquelle la VNF refuse de démarrer les instances d'application de la première quantité, et la cinquième quantité est un entier positif inférieur à la première quantité ;
(4) dans lequel la génération d'une prénotification de mise à l'échelle horizontale par réduction de capacité comprend : la génération de la prénotification de mise à l'échelle horizontale par réduction de capacité sur la base d'une deuxième quantité, dans lequel la prénotification de mise à l'échelle horizontale par réduction de capacité est utilisée pour notifier à la VNF que des instances d'application de la deuxième quantité doivent être démarrées, et la deuxième quantité est un entier positif ; et
la commande à la VNF d'entrer dans l'étape cible du cycle de vie comprend : la suppression d'instances d'application d'une sixième quantité sur la base d'une réponse de prénotification de mise à l'échelle horizontale par réduction de capacité, la réponse de prénotification de mise à l'échelle horizontale par réduction de capacité indiquant que la VNF refuse de supprimer les instances d'application de la deuxième quantité ou indiquant une raison pour laquelle la VNF refuse de supprimer les instances d'application de la deuxième quantité, et la sixième quantité est un entier positif inférieur à la deuxième quantité ;
(5) dans lequel la génération d'une prénotification comprend : la génération de la prénotification sur la base d'un premier point temporel, la prénotification étant utilisée pour notifier que la VNF va entrer dans l'étape cible du cycle de vie au premier point temporel ; et
la commande à la VNF d'entrer dans l'étape cible du cycle de vie comprend : la commande, sur la base de la réponse de prénotification, à la VNF d'entrer dans l'étape cible du cycle de vie à un troisième point temporel, la réponse de prénotification indiquant que la VNF n'est pas autorisée à entrer dans l'étape cible du cycle de vie au premier point temporel ou indiquant une raison pour laquelle la VNF n'est pas autorisée à entrer dans l'étape cible du cycle de vie au premier point temporel, et le troisième point temporel est postérieur au premier point temporel.

2. Procédé selon la revendication 1, dans lequel la génération d'une prénotification comprend également au moins l'une des opérations suivantes :
génération d'une prénotification d'intégration d'un composant d'une fonction réseau virtualisée VNFC, la prénotification d'intégration d'un VNFC étant utilisée pour notifier que la VNF va entrer dans une étape d'intégration du VNFC ; et
génération d'une prénotification de terminaison du VNFC, la prénotification de terminaison du VNFC étant utilisée pour notifier que la VNF va entrer dans une étape de terminaison du VNFC.

3. Procédé selon la revendication 1 ou 2, dans lequel
la commande à la VNF d'entrer dans l'étape cible du cycle de vie comprend également l'une quelconque des opérations suivantes :
commande, sur la base de la réponse de prénotification, au premier VNFC d'entrer dans l'étape cible du cycle de vie, la réponse de prénotification indiquant que la VNF permet au premier VNFC d'entrer dans l'étape cible du cycle de vie ;
commande, sur la base de la réponse de prénotification, à un troisième VNFC d'entrer dans l'étape cible du cycle de vie, dans lequel la réponse de prénotification est utilisée pour indiquer de commander au troisième VNFC d'entrer dans l'étape cible du cycle de vie, et le troisième VNFC est un ou des VNFC compris dans la VNF.

4. Procédé selon la revendication 2, dans lequel la commande à la VNF d'entrer dans l'étape cible du cycle de vie comprend également l'une quelconque des opérations suivantes :
suppression de la première instance d'application sur la base d'une réponse de prénotification de mise à l'échelle horizontale par réduction de capacité, la réponse de prénotification de mise à l'échelle horizontale par réduction de capacité indiquant que la VNF autorise la suppression de la première instance d'application ;
suppression d'une seconde instance d'application sur la base d'une réponse de prénotification de mise à l'échelle horizontale par réduction de capacité, la réponse de prénotification de mise à l'échelle horizontale par réduction de capacité étant utilisée pour indiquer de supprimer la seconde instance d'application, la seconde instance d'application étant une ou des instances d'application comprises dans un quatrième VNFC, et le quatrième VNFC étant un ou des VNFC compris dans la VNF.

5. Procédé selon la revendication 2, dans lequel
la commande à la VNF d'entrer dans l'étape cible du cycle de vie comprend également l'une quelconque des opérations suivantes :
démarrage des instances d'application de la première quantité sur la base d'une réponse de prénotification de mise à l'échelle horizontale par augmentation de capacité, la réponse de prénotification de mise à l'échelle horizontale par augmentation de capacité indiquant que la VNF permet de démarrer les instances d'application de la première quantité ;
démarrage des instances d'application d'une troisième quantité sur la base d'une réponse de prénotification de mise à l'échelle horizontale par augmentation de capacité, la réponse de prénotification de mise à l'échelle horizontale par augmentation de capacité étant utilisée pour indiquer de démarrer les instances d'application de la troisième quantité, et la troisième quantité est un entier positif.

6. Procédé selon la revendication 2, dans lequel
la commande à la VNF d'entrer dans l'étape cible du cycle de vie comprend également l'une quelconque des opérations suivantes :
suppression des instances d'application de la deuxième quantité sur la base d'une réponse de prénotification de mise à l'échelle horizontale par réduction de capacité, la réponse de prénotification de mise à l'échelle horizontale par réduction de capacité indiquant que la VNF autorise la suppression des instances d'application de la deuxième quantité ;
suppression d'instances d'application d'une quatrième quantité sur la base d'une réponse de prénotification de mise à l'échelle horizontale par réduction de capacité, la réponse de prénotification de mise à l'échelle horizontale par réduction de capacité étant utilisée pour indiquer de supprimer les instances d'application de la quatrième quantité, et la quatrième quantité est un entier positif.

7. Procédé selon la revendication 2, dans lequel
la commande à la VNF d'entrer dans l'étape cible du cycle de vie comprend également l'une quelconque des opérations suivantes :
commande, sur la base de la réponse de prénotification, à la VNF d'entrer dans l'étape cible du cycle de vie au premier point temporel, la réponse de prénotification indiquant que la VNF est autorisée à entrer dans l'étape cible du cycle de vie au premier point temporel ;
commande, sur la base de la réponse de prénotification, à la VNF d'entrer dans l'étape cible du cycle de vie à un second point temporel, la réponse de prénotification étant utilisée pour indiquer de commander, au second point temporel, à la VNF d'entrer dans l'étape cible du cycle de vie.

8. Procédé selon l'une quelconque des revendications 1 à 7, dans lequel la commande à la VNF d'entrer dans l'étape cible du cycle de vie comprend :
la génération d'une instruction de gestion, dans lequel l'instruction de gestion est utilisée pour ordonner à un conteneur en tant que gestionnaire CaaS de service de gérer une grappe de conteneurs, et la grappe de conteneurs est utilisée pour transporter la VNF ; et
l'envoi de l'instruction de gestion au gestionnaire CaaS.

9. Procédé selon la revendication 8, dans lequel la génération d'une instruction de gestion comprend au moins l'une des opérations suivantes :
génération d'une instruction de création sur la base d'un VNFC à mettre à l'échelle horizontale par augmentation de capacité, dans lequel l'instruction de création est utilisée pour ordonner au gestionnaire CaaS de créer une instance de conteneur d'un conteneur dans la grappe de conteneurs, et l'instance de conteneur est utilisée pour transporter une instance d'application à ajouter du VNFC à mettre à l'échelle horizontale par augmentation de capacité ;
génération d'une instruction de suppression sur la base d'un VNFC à mettre à l'échelle horizontale par réduction de capacité, dans lequel l'instruction de suppression est utilisée pour ordonner au gestionnaire CaaS de supprimer une instance de conteneur d'un conteneur dans la grappe de conteneurs, et l'instance de conteneur est utilisée pour transporter une instance d'application à ajouter du VNFC à mettre à l'échelle horizontale par réduction de capacité ;
génération d'une instruction de création sur la base d'un VNFC à intégrer, dans lequel l'instruction de création est utilisée pour demander au gestionnaire CaaS de créer un conteneur dans la grappe de conteneurs, et le conteneur est utilisé pour transporter le VNFC à intégrer ; et
génération d'une instruction de suppression sur la base d'un VNFC à terminer, dans lequel l'instruction de suppression est utilisée pour demander au gestionnaire CaaS de supprimer un conteneur de la grappe de conteneurs, et le conteneur est utilisé pour transporter le VNFC à terminer.

10. Procédé de gestion du cycle de vie de fonction réseau virtualisée VNF, le procédé comprenant :
la réception (403) d'une prénotification d'un gestionnaire de fonction de réseau virtualisée VNFM, la prénotification étant utilisée pour notifier qu'une VNF va entrer dans une étape cible d'un cycle de vie ;
la génération (403) d'une réponse de prénotification ;
l'envoi (406) de la réponse de prénotification au VNFM ; et
l'exécution (407) d'une procédure de prétraitement à l'étape cible du cycle de vie ;
dans lequel la réception d'une prénotification d'un gestionnaire de fonction de réseau virtualisée VNFM comprend au moins l'une des opérations suivantes :
réception d'une prénotification de mise à l'échelle horizontale par augmentation de capacité provenant du VNFM, la prénotification de mise à l'échelle horizontale par augmentation de capacité étant utilisée pour notifier que la VNF va entrer dans une phase de mise à l'échelle horizontale par augmentation de capacité ;
réception d'une prénotification de mise à l'échelle horizontale par réduction de capacité provenant du VNFM, la prénotification de mise à l'échelle horizontale par réduction de capacité étant utilisée pour notifier que la VNF va entrer dans une phase de mise à l'échelle horizontale par réduction de capacité ;
**caractérisé en ce que** l'un des cas (1) à (5) suivants s'applique :
(1) dans lequel la prénotification est utilisée pour notifier à la VNF qu'un premier VNFC va entrer dans l'étape cible du cycle de vie, et le premier VNFC est un ou des VNFC compris dans la VNF ; et
la génération d'une réponse de prénotification comprend : la génération de la réponse de prénotification sur la base du premier VNFC, la réponse de prénotification indiquant que la VNF refuse que le premier VNFC entre dans l'étape cible du cycle de vie ou indiquant une raison pour laquelle la VNF refuse que le premier VNFC entre dans l'étape cible du cycle de vie ;
(2) dans lequel la prénotification de mise à l'échelle horizontale par réduction de capacité est utilisée pour notifier à la VNF qu'une première instance d'application doit être supprimée, la première instance d'application est une ou plusieurs instances d'application comprises dans un second VNFC, et le second VNFC est un ou des VNFC compris dans la VNF ; et
la génération d'une réponse de prénotification comprend : la génération d'une réponse de prénotification de mise à l'échelle horizontale par réduction de capacité sur la base de la première instance d'application, la réponse de prénotification de mise à l'échelle horizontale par réduction de capacité indiquant que la VNF refuse de supprimer la première instance d'application ou indiquant une raison pour laquelle la VNF refuse de supprimer la première instance d'application ;
(3) dans lequel la prénotification de mise à l'échelle horizontale par augmentation de capacité est utilisée pour notifier à la VNF que des instances d'application d'une première quantité doivent être démarrées, et la première quantité est un entier positif ; et
la génération d'une réponse de prénotification comprend : la génération d'une réponse de prénotification de mise à l'échelle horizontale par augmentation de capacité sur la base de la première quantité, la réponse de prénotification de mise à l'échelle horizontale par augmentation de capacité indiquant que la VNF refuse de démarrer les instances d'application de la première quantité ou une raison pour laquelle la VNF refuse de démarrer les instances d'application de la première quantité ;
(4) dans lequel la prénotification de mise à l'échelle horizontale par réduction de capacité est utilisée pour notifier à la VNF que des instances d'application d'une deuxième quantité doivent être supprimées, et la deuxième quantité est un entier positif ; et
la génération d'une réponse de prénotification de mise à l'échelle horizontale par réduction de capacité comprend : la génération d'une réponse de prénotification de mise à l'échelle horizontale par réduction de capacité sur la base de la deuxième quantité, la réponse de prénotification de mise à l'échelle horizontale par réduction de capacité indiquant que la VNF refuse de supprimer les instances d'application de la deuxième quantité ou indiquant une raison pour laquelle la VNF refuse de supprimer les instances d'application de la deuxième quantité ;
(5) dans lequel la prénotification est utilisée pour notifier que la VNF va entrer dans l'étape cible du cycle de vie à un premier point temporel ; et
la génération d'une réponse de prénotification comprend : la génération de la réponse de prénotification sur la base du premier point temporel, la réponse de prénotification indiquant que la VNF n'est pas autorisée à entrer dans l'étape cible du cycle de vie au premier point temporel ou indiquant une raison pour laquelle la VNF n'est pas autorisée à entrer dans l'étape cible du cycle de vie au premier point temporel.

11. Procédé selon la revendication 10, dans lequel la réception d'une prénotification d'un gestionnaire de fonction de réseau virtualisée VNFM comprend également au moins l'une des opérations suivantes :
réception d'une prénotification d'intégration d'un composant d'une fonction réseau virtualisée VNFC provenant du VNFM, la prénotification d'intégration d'un VNFC étant utilisée pour notifier que la VNF va entrer dans une étape d'intégration du VNFC ; et
réception d'une prénotification de terminaison du VNFC provenant du VNFM, la prénotification de terminaison du VNFC étant utilisée pour notifier que la VNF va entrer dans une étape de terminaison du VNFC.

12. Procédé selon la revendication 10 ou 11, dans lequel
la génération d'une réponse de prénotification comprend également l'une quelconque des opérations suivantes : génération de la réponse de prénotification sur la base du premier VNFC, la réponse de prénotification indiquant que la VNF permet au premier VNFC d'entrer dans l'étape cible du cycle de vie ;
détermination d'un troisième VNFC et génération de la réponse de prénotification sur la base du troisième VNFC, la réponse de prénotification étant utilisée pour indiquer de commander au troisième VNFC d'entrer dans l'étape cible du cycle de vie, et le troisième VNFC étant un ou des VNFC compris dans la VNF.

13. Dispositif informatique, dans lequel le dispositif informatique comprend un ou plusieurs processeurs et une ou plusieurs mémoires volatiles ou non volatiles, et la ou les mémoires volatiles ou non volatiles stockent au moins une instruction, et l'instruction, lorsqu'elle est chargée et exécutée par le ou les processeurs, amène le ou les processeurs à mettre en œuvre le procédé de gestion du cycle de vie de la VNF selon l'une quelconque des revendications 1 à 12.

14. Support de stockage lisible par ordinateur, dans lequel le support de stockage stocke au moins une instruction, et l'instruction, lorsqu'elle est chargée et exécutée par un processeur, amène le processeur à mettre en œuvre le procédé de gestion du cycle de vie de la VNF selon l'une quelconque des revendications 1 à 12.

15. Produit de programme informatique comportant une instruction qui, lorsqu'elle est exécutée sur un dispositif informatique, amène le dispositif informatique à mettre en œuvre le procédé de gestion du cycle de vie de la VNF selon l'une quelconque des revendications 1 à 12.
